(19) Europäisches Patentamt

European Patent Office

Office européen des brevets

(11) **EP 3 438 183 B1**

(12) **EUROPEAN PATENT SPECIFICATION**

(45) Date of publication and mention
of the grant of the patent:
**22.11.2023 Bulletin 2023/47**

(21) Application number: **17774853.0**

(22) Date of filing: **27.03.2017**

(51) International Patent Classification (IPC):
**C08L 23/06** (2006.01)     **C08F 210/02** (2006.01)
**C08L 23/08** (2006.01)

(52) Cooperative Patent Classification (CPC):
(C-Sets available)
**C08L 23/08; C08F 210/02;** C08L 2205/025   (Cont.)

(86) International application number:
**PCT/JP2017/012231**

(87) International publication number:
**WO 2017/170316 (05.10.2017 Gazette 2017/40)**

(54) **POLYETHYLENE AND MOLDED BODY THEREOF**

POLYETHYLEN UND FORMKÖRPER DARAUS

POLYÉTHYLÈNE ET SON CORPS MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2016   JP 2016064671**

(43) Date of publication of application:
**06.02.2019   Bulletin 2019/06**

(73) Proprietor: **Japan Polyethylene Corporation
Tokyo 100-8251 (JP)**

(72) Inventors:
 • **KOBAYASHI, Kazuhiro**
  **Kawasaki-shi, Kanagawa 210-8548 (JP)**
 • **HADANO, Kenji**
  **Kawasaki-shi, Kanagawa 210-8548 (JP)**

(74) Representative: **Hoffmann Eitle
Patent- und Rechtsanwälte PartmbB
Arabellastraße 30
81925 München (DE)**

(56) References cited:
**JP-A- 2003 165 873     JP-A- 2004 331 706
JP-A- 2009 138 122     JP-A- 2014 208 750
JP-A- 2015 010 104**

(52) Cooperative Patent Classification (CPC): (Cont.)

C-Sets
**C08L 23/08, C08L 23/08**

**Description**

Technical Field

The present invention relates to a polyethylene and a molded body thereof. More specifically, it relates to a polyethylene satisfying specific requirements, which has an excellent balance between rigidity and durability and is excellent in moldability and impact resistance, and a blow molded article using the same.

Furthermore, the invention relates to a polyethylene useful as a material for hollow plastic products such as containers, bottles, tanks, especially fuel tanks for automobiles, and a blow molded article using the same.

Background Art

A plastic-made blow molded article for use in the storage or transportation of liquid substances has been widely used in daily life and industrial fields. Currently, a plastic is a material most widely used for the production of fuel cans of flammable liquids, harmful substances, and the like and transporting containers such as plastic bottles. Since a plastic material has advantages that it is capable of weight-saving owing to small weight/volume ratio, corrosion such as rust is hardly generated, and impact resistance is satisfactory as compared with a metallic material, it is used as a fuel tank especially in automobile parts and is taking the place of conventional metal materials.

A blow molded article is mainly obtained from polyethylene by blow molding in many cases. Particularly, a plastic fuel tank to be obtained as a blow molded article is an important safety-related part for securing safety of automobiles and especially high levels of various performances are required, so that a material sufficiently satisfying these requirements has been desired.

Actually, as commercially available polyethylenes for use in plastic fuel tanks for automobiles, for example, there are known "HB111R" (trade name) manufactured by Japan Polyethylene Corporation, "4261AG" (trade name) manufactured by Basell Co., and the like. Although they are materials that meet severe requirements of automobile manufacturers and obtain good evaluation in the market, it cannot necessarily be said that it is at a sufficiently high level in view of insufficient rigidity and the like. Under such a situation, there has been desired a polyethylene material that is excellent in moldability and impact resistance and has an excellent balance between rigidity and durability.

Under such a situation, an attempt to provide a polyethylene material in which various performances are improved has been made.

Patent Document 1 (JP-T-2005-501951) discloses a polyethylene resin having multimodal molecular weight distribution, which has a density ranging from about 0.925 g/ccm to about 0.950 g/ccm and a melt index ($I_2$) ranging from about 0.05 g/10 minutes to about 5 g/10 minutes and contains at least one high-molecular-weight (HMW) ethylene inter polymer and at least one low-molecular-weight (LMW) ethylene polymer.

Patent Document 2 (JP-T-2005-511868) discloses a method for producing a polyethylene resin having multimodal molecular weight distribution including steps of (i) preparing a first linear low density polyethylene (mLLDPE) produced using a high-molecular-weight metallocene, which has a density of 0.920 to 0.940 g/cm$^3$ and an HLMI of 0.05 to 2 g/10 minutes, (ii) preparing a second high density polyethylene (HDPE) having a density ranging from 0.950 to 0.970 g/cm$^3$ and an HLMI of 5 to 100 g/10 minutes, which is produced using a Ziegler-Natta catalyst or a catalyst based on chromium, and (iii) physically blending the first and second polyethylenes together to form a polyethylene resin having a wide semi-high molecular weight or a multimodal molecular weight distribution, a density ranging from 0.948 to 0.958 g/cm$^3$, and an HLMI of 2 to 20 g/10 minutes. The resin described in Patent Document 2 is said to be improved in environmental stress cracking resistance, impact strength, and processability and capable of reducing wall thickness, and have advantages particularly in the automobile industry.

Patent Document 3 (JP-A-05-194797) discloses an ethylene polymer composition which contains a mixture of (a) less than or equal to about 35% by weight of a high-molecular-weight polyethylene produced from a titanium-based catalyst system having a high load melt index (HLMI) within a range of about 0.2 to about 25 g/10 minutes, a density within a range of about 0.91 to about 0.94 g/cc, a heterogeneity index (HI) of less than or equal to about 10, and containing a copolymerized comonomer within a range of about 0.01 to about 10% by mol of at least one olefin having about 3 to about 10 carbon atoms per molecule and (b) more than or equal to about 65% by weight of a low-molecular-weight polyethylene produced from a chromium-based catalyst system having a melt index (MI) within a range of about 0.1 to about 5 g/10 minutes, a density within a range of about 0.945 to about 0.98 g/cc, and a heterogeneity index (HI) of more than or equal to about 6.

Patent Document 4 (JP-T-2009-506163) discloses a composition containing a high density polyethylene polymer and a high-molecular-weight polyethylene polymer, wherein the high density polyethylene polymer has a density more than the density of the high-molecular-weight polyethylene polymer, the high-molecular-weight polyethylene polymer has a weight-average molecular weight more than the weight-average molecular weight of the high density polyethylene polymer, the high density polyethylene polymer has a density of 0.94 g/cm$^3$ to 0.98 g/cm$^3$ and a molecular weight distribution Mw/Mn of more than 8, and the high-molecular-weight polyethylene polymer has a weight-average molecular weight of more than 200,000 g/mol and a molecular weight ratio Mz/Mw of less than 5.

Patent Document 5 (WO2008/087945) discloses an ethylene-based resin composition for a hollow molded body, which satisfies the following requirements [a], [b], [c], and [d] at the same time:

[a] a melt flow rate (MFR) at a temperature of 190°C under a load of 21.6 kg being in the range of 1.0 to 15 g/10 minutes,
[b] a density being in the range of 955 to 970 kg/m$^3$,
[c] a methyl branching measured by $^{13}$C-NMR being less than 0.1 per 1,000 carbon atoms, and
[d] a tensile impact strength at -40°C measured in accordance with JIS K7160 being 270 kJ/m$^2$ or more.

Patent Document 6 (WO2010/150410) discloses a polyethylene-based resin satisfying the following requirements (1) to (4):

(1): a high load melt flow rate (HLMFR) is 1 to 10 g/10 minutes,
(2): a density is 0.946 to 0.960 g/cm$^3$,
(3): a strain hardening parameter ($\lambda$max) of elongation viscosity is 1.05 to 1.50, and
(4): a failure time in a full notch creep test and the density satisfy the following equation (A):

$$\log(\text{Failure time}) \geq -355 \times (\text{Density}) + 337.6 \ldots \text{Equation (A)}.$$

Patent Document 7 (WO2012/086780) discloses a polyethylene which is polymerized by a chromium catalyst and has a weight-average molecular weight (Mw) of 30,000 or more at the maximum value in a branching degree distribution curve showing molecular weight dependency of short-chain branching having 4 or more carbon atoms.

Patent Document 8 (WO2012/133713) discloses a polyethylene obtained by polymerizing ethylene or ethylene and an $\alpha$-olefin using a chromium catalyst and having the following characteristics (1) to (8):

(1): a high load melt flow rate (HLMFR) is 1 to 10 g/10 minutes,
(2): a density is 0.940 to 0.960 g/cm$^3$,
(3): a molecular weight distribution (Mw/Mn) is 25 or more,
(4): a strain hardening parameter ($\lambda$max) of elongation viscosity is 1.05 to 1.50,
(5): a Charpy impact strength is 7 kJ/m$^2$ or more,
(6): a tensile impact strength is 130 kJ/m$^2$ or more,
(7): a swell ratio (SR) is 50 to 65%, and
(8): a failure time in a full notch creep test is 40 hours or more.

Prior Art Documents

Patent Documents

Patent Document 1: JP-T-2005-501951
(the term "JP-T" as used herein means a published Japanese translation of a PCT patent application)
Patent Document 2: JP-T-2005-511868
Patent Document 3: JP-A-05-194797
Patent Document 4: JP-T-2009-506163
Patent Document 5: WO2008/087945
Patent Document 6: WO2010/150410
Patent Document 7: WO2012/086780
Patent Document 8: WO2012/133713

Summary of the Invention

Problems that the Invention is to Solve

However, the resin described in Patent Document 1 is suitable for the use as a pipe resin and is not necessarily said that it is suitable for the resin for plastic fuel tanks for automobiles.

It is not necessarily said that the resins described in Patent Documents 2 and 3 are suitable for the resin for plastic fuel tanks for automobiles in view of the balance between rigidity and durability.

Moreover, the composition described in Patent Document 4 provides a suitable balance among high top load, low die swell, and high ESCR and it is not necessarily said that it is suitable for the resin for plastic fuel tanks for automobiles.

It is said that the composition described in Citation Document 5 exhibits long-term performances such as high impact resistance and creep resistance while maintaining rigidity as a molded body even when it is thin-walled. However, it is not necessarily said that it is suitable for the resin for plastic fuel tanks for automobiles, in view of moldability, especially hollow moldability.

Furthermore, the resins described in Patent Documents 6 to 8 are excellent in moldability and durability and have an excellent balance between impact resistance and rigidity but further improvement in performance is required as resins for plastic fuel tanks for automobiles.

As above, a large number of polyethylene materials having improved various performances have been proposed but a material having further improved performances is still desired.

The present invention is made in consideration of the above circumstances and an object thereof is to provide a polyethylene excellent in a balance between rigidity and durability and excellent in moldability and impact resistance and a material useful as a material for hollow plastic products such as containers, bottles, and tanks, especially fuel tanks for automobiles.

Means for Solving the Problems

As a result of intensive studies for solving the above problems, the present inventors have found that a blow molded article (blow plastic molded article) useful as a plastic fuel tank for automobiles is obtained when a polyethylene having specific polymer physical properties is used. Thus, they have accomplished the present invention which is defined in the claims.

Advantage of the Invention

The polyethylene of the present invention has an excellent balance between rigidity and durability, is excellent in moldability and impact resistance, and can provide a material useful as a material for hollow plastic products such as containers, bottles, and tanks, especially fuel tanks for automobiles.

Brief Description of the Drawings

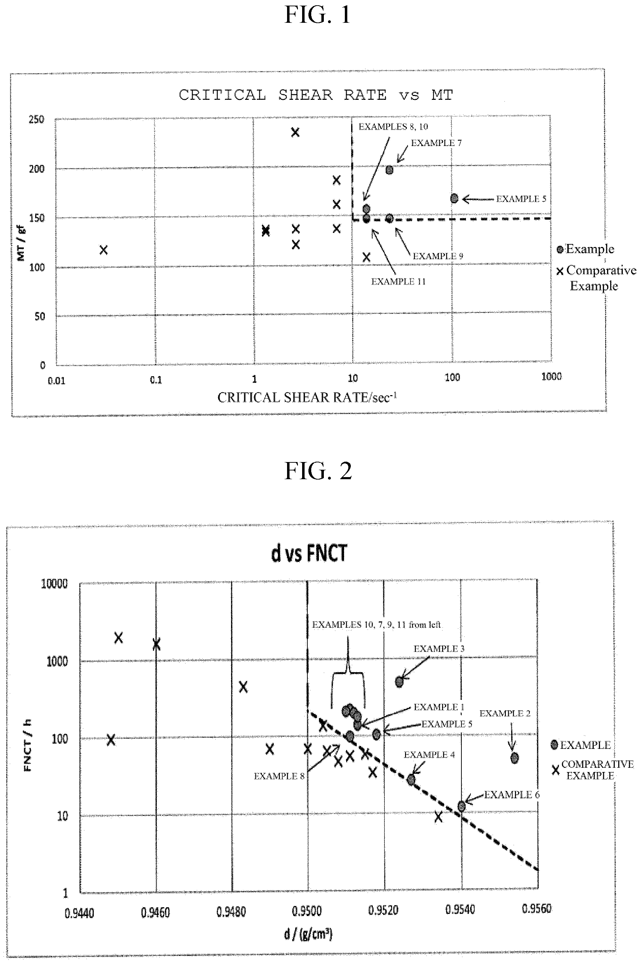

FIG. 1 is a graph showing a relation between a melt tension (MT) and a critical shear rate of the polyethylene of the present invention. The broken line in the graph is a boundary value showing a region restricted by a lower limit value of the melt tension (MT) specified by the characteristic [c] and a lower limit value of the critical shear rate specified by the characteristic [d].

FIG. 2 is a graph showing a relation between a failure time (T) in a full notch creep test and a density (d) of the polyethylene of the present invention. The long broken line in the graph is a boundary value showing a region restricted by a lower limit value of the density (d) specified by the characteristic [b] and the short broken line in the graph is a boundary value showing a region restricted by a lower limit value of the failure time (T) in a full notch creep test specified by the equation (A) according to the characteristic [f].

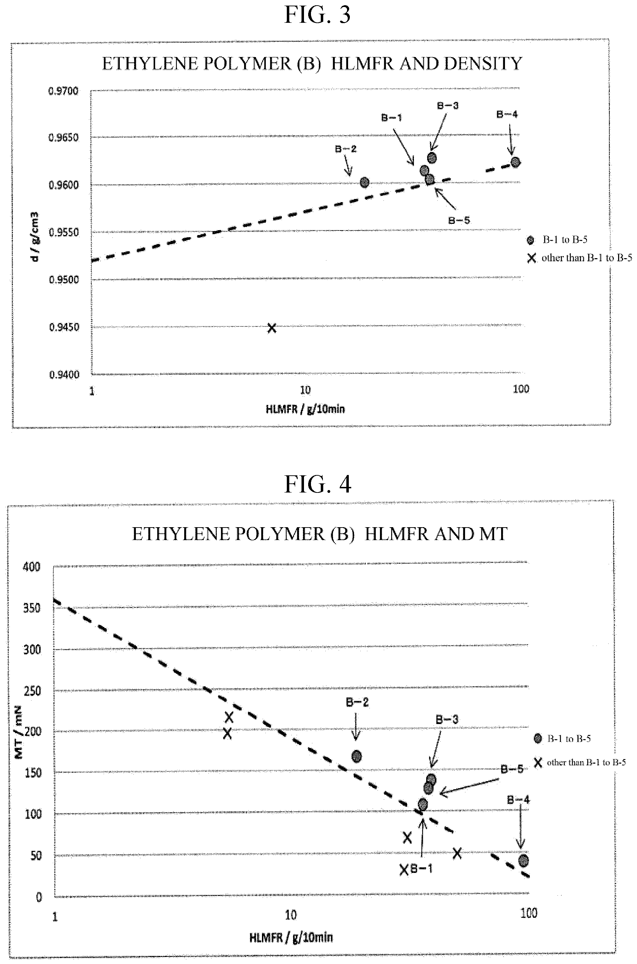

FIG. 3 is a graph showing a relation between a density (d) and HLMFR of the ethylene polymer (B) of the present invention. The wavy line in the graph shows a lower limit value of the density (d) of the ethylene polymer (B) specified by the equation (ii).

FIG. 4 is a graph showing a relation between an HLMFR and a melt tension (MT) of the ethylene polymer (B) of the present invention. The wavy line in the graph shows a lower limit value of the melt tension (MT) of the ethylene polymer (B) specified by the equation (iii).

Modes for Carrying Out the Invention

The following will explain the polyethylene of the present invention and use applications thereof for each item in detail. The ".. to .." showing a numerical range is used herein as a meaning that it includes the numerical values described before and after the "to" as a lower limit value and an upper limit value.

Incidentally, herein, all the percentages and parts represented by mass are the same as the percentages and parts represented by weight.

1. Characteristics of Polyethylene

The polyethylene of the present invention is defined in the claims and contains, as an essential component, one or two or more ethylene polymers selected from the group consisting of a homopolymer of ethylene and a copolymer of ethylene and an $\alpha$-olefin having 3 to 12 carbon atoms and has the following characteristics [a] to [e]:

[a] a melt flow rate (HLMFR) measured at a temperature of 190°C and a load of 21.6 kg is 1 to 15 g/10 minutes,
[b] a density (d) is 0.950 to 0.965 g/cm$^3$,
[c] a melt tension (MT) measured at 210°C is 147 mN or more,
[d] a critical shear rate measured at 190°C using a capillary having a diameter (D) of 5 mm and a ratio (L/D) of a length (L) to the diameter of 2 is 10 sec$^{-1}$ or more, and
[e] a Charpy impact strength measured at -40°C is 9 kJ/m$^2$ or more.

[a] Melt Flow Rate (HLMFR) Measured at Temperature of 190°C and Load of 21.6 kg

In the polyethylene of the invention, the melt flow rate (HLMFR) measured at a temperature of 190°C and a load of 21.6 kg is 1 to 15 g/10 minutes, preferably 3 to 10 g/10 minutes, and further preferably 4 to 8 g/10 minutes.
When HLMFR is less than 1 g/10 minutes, an extrusion amount at parison is deficient in blow molding and the molding becomes an unstable state, so that the case is not practical. Moreover, when HLMFR exceeds 15 g/10 minutes, the melt viscosity and melt tension of the parison are insufficient and hence the molding becomes unstable, so that the case is not practical.
HLMFR can be adjusted, for example, by a method of controlling polymerization temperature and hydrogen concentration at the time of polymerization. For example, by raising the polymerization temperature or increasing the hydrogen concentration, HLMFR can be increased.
Here, HLMFR can be measured under conditions of a temperature of 190°C and a load of 21.6 kg in accordance with JIS K6922-2:1997.

[b] Density (d)

In the polyethylene of the invention, the density (d) is 0.950 to 0.965 g/cm$^3$, preferably 0.951 to 0.964 g/cm$^3$, and further preferably 0.952 to 0.963 g/cm$^3$.
When the density (d) is less than 0.950 g/cm$^3$, the rigidity of the blow molded article is insufficient and, when it exceeds 0.965 g/cm$^3$, the durability of the blow molded article is deficient.
The density (d) can be adjusted, for example, by a method of controlling the kind and content of the $\alpha$-olefin at the time of polymerization. For example, by lowering the content of the $\alpha$-olefin in the polyethylene (decreasing the amount of the $\alpha$-olefin to be added at the polymerization) or, by using an $\alpha$-olefin having a small amount of carbon atoms when the content is the same, the density (d) can be increased.
The density (d) can be measured by melting pellets in a hot compression molding machine at a temperature of 160°C, subsequently forming a sheet having a thickness of 2 mmt through temperature lowering at a rate of 25°C/minute, conditioning the sheet in a room at a temperature of 23°C for 48 hours, and then placing it in a density gradient tube, in accordance with JIS K-7112:2004.

[c] Melt Tension (MT) Measured at 210°C

In the polyethylene of the invention, the melt tension (MT) measured at 210°C is 147 mN or more, preferably 167 mN or more, and further preferably 196 mN or more. When the melt tension (MT) is less than 147 mN, draw down at the time of molding increases and molding tends to be difficult. An upper limit value of the melt tension (MT) is not particularly limited but is usually 392 mN (40 gf) or less.
The melt tension (MT) can be measured under conditions of a nozzle diameter of 2.095 mm$\phi$, a nozzle length of 8.00 mm, an inflow angle of 180°, a set temperature of 210°C, a piston pushing speed of 10.0 mm/minute, and a take-up speed of 4.0 m/minute, using a capillograph manufactured by Toyo Seiki Seisaku-sho, Ltd.
The melt tension (MT) can be adjusted by the amount of long-chain branching contained in the polyethylene and, usually, can be increased by increasing the amount of the long-chain branching.

[d] Critical Shear Rate Measured at 190°C Using Capillary Having Diameter (D) of 5 mm and Ratio (L/D) of length (L) to diameter of 2

In the polyethylene of the invention, the critical shear rate measured at 190°C using a capillary having a diameter (D) of 5 mm and a ratio (L/D) of a length (L) to the diameter of 2 is 10 sec$^{-1}$ or more, preferably 11 sec$^{-1}$ or more, and further preferably 13 sec$^{-1}$ or more.

When the critical shear rate is less than 10 sec$^{-1}$, the surface shape of the molded body tends to be complexly disordered. An upper limit value of the critical shear rate is not particularly limited but is usually 100 sec$^{-1}$ or less.

The critical shear rate is measured in accordance with JIS K7199:1999 (ISO 11443:1995). It can be measured at 190°C using a capillary having a diameter (D) of 5 mm, a ratio (L/D) of a length (L) to the diameter of 2, and an inflow angle of 90°, using a capillary rheometer manufactured by INTESCO Co., Ltd.

FIG. 1 is a graph showing a relation between the melt tension (MT) measured at 210°C and the critical shear rate. Those satisfying the above characteristics [c] and [d] at the same time are excellent in moldability, while the moldability becomes insufficient in the case where both or either one of the above characteristics [c] and [d] is not satisfied.

[e] Charpy Impact Strength Measured at -40°C

In the polyethylene of the invention, the Charpy impact strength measured at -40°C is 9 kJ/m$^2$ or more, preferably 10 kJ/m$^2$ or more. When the Charpy impact strength is less than 9 kJ/m$^2$, the impact resistance of the blow molded article is insufficient. An upper limit value of the Charpy impact strength is not particularly limited but is usually 30 kJ/m$^2$ or less.

The Charpy impact strength can be measured at -40°C by preparing a specimen of type 1 and cooling it in a constant-temperature bath, the type of a notch being type A (0.25 mm) and a hitting direction being edgewise, in accordance with JIS K-7111(2004).

The value of the Charpy impact strength can be adjusted by the density and the molecular weight distribution. That is, when the density is increased, the Charpy impact strength is increased. Also, when the molecular weight distribution is narrowed, the Charpy impact strength is increased.

The polyethylene of the invention preferably satisfies the following characteristic [f] in addition to the above characteristics [a] to [e].

[f] a failure time (T) (unit: hour) in a full notch creep test and the density (d) (unit: g/cm$^3$) satisfy a relation represented by the following equation (A):

$$\log_{10}T \geq -348.6 \times d + 333.5 \ ... \ \text{Equation (A)}$$

In the polyethylene of the invention, the failure time (T) (unit: hour) in a full notch creep test and the density (d) more preferably satisfy a relation represented by the following equation (B):

$$\log_{10}T \geq -355 \times d + 340.3 \ ... \ \text{Equation (B)}.$$

When the failure time is less than a lower limit value of the equation (A), the durability of the blow molded article is insufficient. An upper limit value of the failure time is not particularly limited but is preferably in the range of the following equation (C):

$$\log_{10}T \leq -355 \times d + 342.8 \ ... \ \text{Equation (C)}.$$

The failure time (T) (unit: hour) in a full notch creep test can be measured by the following method.

That is, in accordance with JIS K-6992-2(2004), after a sheet having a thickness of 5.9 mm is compression-molded, a specimen having a shape and a size of a section "Nominal diameter 50" shown in FIG. 1 of Annex 5 (definition) of JIS K-6992-2(2004) is prepared and a full notch creep test (FNCT) is conducted in pure water at 80°C. Tensile loads are 88N, 98N, and 108N and the number of test items is 2 per each load. From 6-point plotting of the resulting failure time and nominal stress in a log-log scale, the failure time at a nominal stress of 6 MPa determined by a least squares method is used as an index of creep resistance.

FIG. 2 is a graph showing a relation between the density (d) (unit: g/cm$^3$) and the failure time (T) (unit: hour). Those out of the region represented by the equation (A) have insufficient durability as the blow molded articles, while those contained in the region represented by the equation (A) have excellent durability.

In the case of producing polymers having the same HLMFR and the same density, the failure time can be adjusted, for example, by a method of controlling the hydrogen concentration at polymerization. For example, since the failure time becomes high as the molecular weight distribution of the polyethylene becomes wide and as the long-chain branching decreases, the failure time can be increased by increasing the hydrogen concentration.

In the polyethylene of the invention, the flexural modulus measured in accordance with JIS K7171:2008 is in the range of preferably 1,100 to 1,700 MPa, more preferably 1,100 to 1,600 MPa, further preferably 1,100 to 1,400 MPa, and particularly preferably 1,100 to 1,300 MPa.

When the flexural modulus falls within the above range, the resulting hollow molded body is excellent in rigidity particularly under room temperature. That is, since it is hard and strong, it becomes possible to make the molded article thinner as before.

2. Configuration of Polyethylene

The polyethylene of the invention contains, as an essential component, one or two or more ethylene polymers selected from the group consisting of a homopolymer of ethylene and a copolymer of ethylene and an $\alpha$-olefin having 3 to 12 carbon atoms and thereby, satisfies the characteristics [a] to [e] at the same time. Moreover, the polyethylene of the invention may contain optional component(s) to be mentioned later in addition to the ethylene polymer as long as the characteristics [a] to [e] are satisfied at the same time.

The copolymer of ethylene and an $\alpha$-olefin having 3 to 12 carbon atoms of the invention is an ethylene polymer containing a constituent unit derived from the $\alpha$-olefin having 3 to 12 carbon atoms in an amount of usually 2.0 mol% or less, preferably 0.02 to 1.5 mol%, more preferably 0.02 to 1.30 mol%.

Here, as the $\alpha$-olefin having 3 to 12 carbon atoms (hereinafter also simply referred to as "$\alpha$-olefin"), there may be mentioned propylene, 1-butene, 1-pentene, 1-hexene, 4-methyl-1-pentene, 3-methyl-1-pentene, 1-octene, 1-decene, and the like. In the invention, among these $\alpha$-olefins, it is preferred to use at least one selected from 1-hexene, 4-methyl-1-pentene, and 1-octene.

The polyethylene of the invention contains, as the essential component, 5 to 95% by mass of an ethylene polymer (A) having a density (d) of 0.910 to 0.930 g/cm$^3$ and an HLMFR of 0.1 to 3.0 g/10 minutes and an ethylene polymer (B) having a density (d) of 0.955 to 0.965 g/cm$^3$ and an HLMFR of 10 to 100 g/10 minutes.

3. Characteristics of Ethylene Polymer (A)

The ethylene polymer (A) of the invention is a homopolymer of ethylene or a copolymer of ethylene and an $\alpha$-olefin having 3 to 12 carbon atoms. A method for producing the homopolymer of ethylene or the copolymer of ethylene and an $\alpha$-olefin having 3 to 12 carbon atoms will be mentioned later.

The ethylene polymer (A) has a density of 0.910 to 0.930 g/cm$^3$, preferably 0.912 to 0.928 g/cm$^3$, and further preferably 0.915 to 0.925 g/cm$^3$. The density can be measured by the same method as in the case of the density (d) of the aforementioned characteristic [b].

When the density (d) is less than 0.910 g/cm$^3$, insufficient rigidity of the molded article is made obvious, while when it exceeds 0.930 g/cm$^3$, durability is deficient.

The adjustment of the density (d) can be, for example, performed by varying the amount of the $\alpha$-olefin to be copolymerized with ethylene, and the density can be decreased when the amount of the $\alpha$-olefin is increased.

The ethylene polymer (A) has an HLMFR of 0.1 to 3.0 g/10 minutes, preferably 0.2 to 2.5 g/10 minutes, and further preferably 0.3 to 2.0 g/10 minutes. HLMFR can be measured by the same method as in the case of the HLMFR of the aforementioned characteristic [a].

When HLMFR is less than 0.1 g/10 minutes, the fluidity is insufficient at the time of molding, and molding becomes in an unstable state, so that the case is not practical. When HLMFR exceeds 3.0 g/10 minutes, the impact resistance tends to decrease.

The adjustment of HLMFR can be achieved either by varying the amount of the chain transfer agent (hydrogen or the like) that coexists in the ethylene polymer or by varying polymerization temperature, and HLMFR can be increased by increasing the amount of hydrogen or by raising the polymerization temperature.

The ethylene polymer (A) preferably has a molecular weight distribution of 1 to 10, which distribution is represented by the ratio of weight-average molecular weight (Mw) to number-average molecular weight (Mn) (Mw/Mn) measured by a gel permeation chromatographic (GPC) method. When the molecular weight distribution (Mw/Mn) exceeds 10, the mechanical strength tends to decrease.

Mw/Mn of the ethylene polymer (A) is more preferably 2.0 or more, for example, 2.5 or more, 3.0 or more, or 3.5 or more and preferably 10 or less, for example, 9.0 or less, 8.0 or less, 6.0 or less, or 5.0 or less. Mw/Mn of the ethylene polymer (A) can be limited by any of the above lower limit values and any of the upper limit values. For example, it is 2.0 to 10, 2.0 to 9.0, 3.0 to 5.0, 3.0 to 8.0, 2.5 to 6.0, 3.5 to 8.0, 3.5 to 6, 3.5 to 5.0, or the like.

The molecular weight distribution (Mw/Mn) of the ethylene polymer (A) can be mainly adjusted by the kind of the polymerization catalyst to be used in the polymerization reaction of the ethylene polymer (A), and a metallocene-based catalyst may be preferably mentioned as the polymerization catalyst.

The measurement of GPC can be performed by the following method.

Apparatus: Alliance GPC V2000 model manufactured by WATERS Co.
Columns: two columns of HT-806M and one column of HT-G manufactured by Showa Denko K.K.
Measurement temperature: 145°C
Concentration: 1 mg/1 ml
Solvent: o-dichlorobenzene

Incidentally, the calculation of the molecular weight and the calibration of the column can be carried out in accordance with the following methods.

GPC chromatogram data are incorporated into a computer at a frequency of 1 point/second and data processing is performed according to the description of "Size Exclusion Chromatography", Chapter 4, written by Sadao Mori, published by Kyoritsu Shuppan Co., Ltd. Thus, Mw and Mn values can be calculated. The conversion of a measured retention volume into a molecular weight is performed using a calibration curve with standard polystyrenes, the curve being prepared in advance.

The molecular weight distribution (Mw/Mn) can be controlled within a predetermined range mainly by selecting a polymerization catalyst and polymerization conditions and also can be controlled within a predetermined range by mixing a plurality of components having different molecular weights.

In the ethylene polymer (A), a temperature (Tm) (°C) at the maximum peak position on an endothermic curve measured by a differential scanning calorimeter (DSC) and the density (d) preferably satisfies a relation represented by the following equation (D):

$$Tm < 400 \times d - 250 ... \text{ Equation (D)}.$$

When the temperature (Tm) and the density (d) has the relation of the equation (D), it indicates that the compositional distribution of the ethylene polymer (A) is narrow, and the case is preferred since the mechanical strength of the hollow body is improved.

Here, the measurement of the temperature at the maximum peak position by DSC can be performed using DSC-7 model manufactured by Perkin Elmer Co. That is, about 5 mg of a sample of the ethylene polymer is charged into an aluminum pan, temperature is raised to 200°C at a rate of 10 (°C/minute) and kept at that temperature for 5 minutes, thereafter, temperature is lowered to room temperature at a rate of 10 (°C/minute), an endothermic curve is measured while again raising the temperature at a rate of 10 (°C/minute), and a temperature at the position showing a maximum peak is determined.

4. Production Method of Ethylene Polymer (A)

The production method of the ethylene polymer (A) is not particularly limited but it can be preferably produced by polymerization using, as a polymerization catalyst, a specific metallocene-based catalyst, i.e., a catalyst having a metallocene complex of a specific structure, especially a metallocene complex having a cyclopentadienyl ring and a heterocyclic aromatic group or a metallocene complex having a cyclopentadienyl ring and a fluorenyl ring.

Moreover, as the ethylene polymer (A) having a long-chain branching structure, it is also possible to utilize one which is formed as a polymer having a long-chain branching structure through the formation of a polyethylene (macromonomer) having a terminal vinyl group by chain transfer to ethylene and through the copolymerization of the macromonomer and ethylene.

It is important that the ethylene polymer (A) is polymerized by a metallocene-based catalyst containing Ti, Zr, or Hf. As the metallocene-based catalyst, there is exemplified one obtained by combining a complex in which a ligand having a cyclopentadiene skeleton is coordinated to a transition metal, which is called a metallocene complex, and a cocatalyst. As specific metallocene-based catalysts, there may be mentioned those obtained by combining a metallocene complex in which a ligand having a cyclopentadiene skeleton such as methylcyclopentadiene, dimethylcyclopentadiene, or indene is coordinated to a transition metal including Ti, Zr, or Hf and an organometallic compound belonging to the group 1 to the group 3 elements in the long period type periodic table (hereinafter, the term "periodic table" refers to long period type periodic table unless otherwise stated), such as aluminoxane, as a cocatalyst, and supported ones obtained by supporting the complex catalysts on a carrier such as silica.

The metallocene-based catalyst to be used in the invention contains a catalyst component (A) and a catalyst component (B) to be described below, and is a catalyst which, if necessary, comprises a catalyst component (C) in combination.

Catalyst component (A): a metallocene complex
Catalyst component (B): a compound that reacts with the catalyst component (A) to form a cationic metallocene compound
Catalyst component (C): a fine particle carrier

(1) Catalyst Component (A)

As the catalyst component (A), a metallocene compound of a transition metal belonging to the group 4 in the periodic table is used. Specifically, compounds represented by the following general formulae (I) to (VII) are used.

$$(C_5H_{5-a}R^1{}_a)(C_5H_{5-b}R^2{}_b)MXY \qquad \text{General formula (I)}$$

$$Q^1(C_5H_{4-c}R^1{}_c)(C_5H_{4-b}R^2{}_d)MXY \qquad \text{General formula (II)}$$

$$Q^2(C_5H_{4-e}R^3{}_e)ZMXY \qquad \text{General formula (III)}$$

$$(C_5H_{5-f}R^3{}_f)ZMXY \qquad \text{General formula (IV)}$$

$$(C_5H_{5-f}R^3{}_f)MXYW \qquad \text{General formula (V)}$$

$$Q^3(C_5H_{5-g}R^4{}_g)(C_5H_{5-h}R^5{}_H)MXY \qquad \text{General formula (VI)}$$

$$Q^4Q^5(C_5H_{3-i}R^6{}_i)(C_5H_{3-j}R^7{}_j)MXY \qquad \text{General formula (VII)}$$

Here, $Q^1$, $Q^4$, and $Q^5$ represent each a bonding group that crosslinks two conjugated five-membered ring ligands, $Q^2$ represents a bonding group that crosslinks the conjugated five-membered ring ligand and the Z group, $Q^3$ represents a bonding group that crosslinks $R^4$ and $R^5$, M represents a transition metal belonging to the group 3 to the group 12 in the periodic table, X, Y, and W represent each independently a hydrogen atom, a halogen atom, a hydrocarbon group having 1 to 20 carbon atoms, an oxygen-containing hydrocarbon group having 1 to 20 carbon atoms, a nitrogen-containing hydrocarbon group having 1 to 20 carbon atoms, a phosphorus-containing hydrocarbon group having 1 to 20 carbon atoms, or a silicon-containing hydrocarbon having 1 to 20 carbon atoms, Z represents a ligand containing an oxygen atom or a sulfur atom, a silicon-containing hydrocarbon group having 1 to 40 carbon atoms, a nitrogen-containing hydrocarbon group having 1 to 40 carbon atoms, or a phosphorus-containing hydrocarbon group having 1 to 40 carbon atoms. M is preferably a transition metal belonging to the group 4, such as Ti, Zr, or Hf.

$R^1$ to $R^7$ represent each independently a hydrocarbon group having 1 to 20 carbon atoms, a halogen group, a halogen-containing hydrocarbon group having 1 to 20 carbon atoms, an alkoxy group, an aryloxy group, an oxygen-containing hydrocarbon group, a silicon-containing hydrocarbon group, a phosphorus-containing hydrocarbon group, a nitrogen-containing hydrocarbon group, or a boron-containing hydrocarbon group. Of these, at least one of $R^1$ to $R^5$ is preferably a heterocyclic aromatic group. Of the heterocyclic aromatic groups, a furyl group, a benzofuryl group, a thienyl group, or a benzothienyl group is preferred and furthermore, a furyl group or a benzofuryl group is preferred. These heterocyclic aromatic groups may have a hydrocarbon group having 1 to 20 carbon atoms, a halogen group, a halogen-containing hydrocarbon group having 1 to 20 carbon atoms, an oxygen-containing hydrocarbon group, a silicon-containing hydrocarbon group, a phosphorus-containing hydrocarbon group, a nitrogen-containing hydrocarbon group, or a boron-containing hydrocarbon group but, in that case, a hydrocarbon group having 1 to 20 carbon atoms or a silicon-containing hydrocarbon group is preferred. Further, adjacent two $R^1$, two $R^2$, two $R^3$, two $R^4$, two $R^5$, two $R^6$, or two $R^7$ may be combined with each other to form a ring having 4 to 10 carbon atoms. Moreover, a, b, c, d, e, f, g, h, i, and j are integers that satisfy $0 \leq a \leq 5$, $0 \leq b \leq 5$, $0 \leq c \leq 4$, $0 \leq d \leq 4$, $0 \leq e \leq 4$, $0 \leq f \leq 5$, $0 \leq g \leq 5$, $0 \leq h \leq 5$, $0 \leq i \leq 3$, and $0 \leq j \leq 3$, respectively.

As the binding groups $Q^1$, $Q^4$, and $Q^5$ that crosslink the two conjugated five-membered ring ligands, the bonding group $Q^2$ that crosslinks the conjugated five-membered ring ligand and the Z group, and the bonding group $Q^3$ that crosslinks $R^4$ and $R^5$, the following groups may be specifically mentioned. The groups are alkylene groups such as a methylene group and an ethylene group, alkylidene groups such as an ethylidene group, a propylidene group, an isopropylidene group, a phenylmethylidene group, and a diphenylmethylidene group, silicon-containing crosslinking groups such as a dimethylsilylene group, a diethylsilylene group, a dipropylsilylene group, a diphenylsilylene group, a methylethylsilylene group, a methylphenylsilylene group, a methyl-t-butylsilylene group, a disilylene group, and a tetramethyldisilylene group, germanium-containing crosslinking groups, alkylphosphines, amines, and the like. Of these, alkylene groups, alkylidene groups, silicon-containing crosslinking groups, and germanium-containing crosslinking groups are particularly preferably used.

Specific Zr complexes represented by the aforementioned general formulae (I), (II), (III), (IV), (V), (VI), and (VII) will be exemplified below, but compounds in which Zr is replaced with Hf or Ti can be used as well. Further, the metallocene complexes represented by the general formulae (I), (II), (III), (IV), (V), (VI), and (VII) can be used as a mixture of two or more of compounds represented by the same general formula or compounds represented by different general formulae.

Compounds of General Formula (I)

biscyclopentadienylzirconium dichloride, bis(n-butylcyclopentadienyl)zirconium dichloride, bis(2-methylindenyl)zirconium dichloride, bis(2-methyl-4,5-benzoindenyl)zirconium dichloride, bisfluorenylzirconium dichloride, bis(4H-azulenyl)zirconium dichloride, bis(2-methyl-4H-azulenyl)cyclopentadienylzirconium dichloride, bis(2-methylbiscyclopentadienyl)zirconium dichloride, bis(2-methyl-4-phenyl-4H-azulenyl)zirconium dichloride, bis(2-methyl-4-(4-chlorophenyl)-4H-azulenyl)zirconium dichloride, bis(2-furylcyclopentadienyl)zirconium dichloride, bis(2-furylindenyl)zirconium dichloride, bis(2-furyl-4,5-benzoindenyl)zirconium dichloride.

Compounds of General Formula (II)

dimethylsilylenebis(1,1'-cyclopentadienyl)zirconium dichloride, dimethylsilylenebis[1, l'-(2-methylindenyl)] zirconium dichloride, dimethylsilylenebis[1,1'-(2-methyl-4-phenyl-indenyl)]zirconium dichloride, ethylenebis[1,1'-(2-methyl-4,5-benzoindenyl)]zirconium dichloride, dimethylsilylenebis[1,1'-(2-methyl-4H-azulenyl)]zirconium dichloride, dimethylsilylenebis[1,1'-(2-methyl-4-phenyl-4H-azulenyl) zirconium dichloride, dimethylsilylenebis {1,1'-[2-methyl-4-(4-chlorophenyl)-4H-azulenyl]}zirconium dichloride, dimethylsilylenebis[1,1'-(2-ethyl-4-phenyl-4H-azulenyl)]zirconium dichloride, ethylenebis[1,1'-(2-methyl-4H-azulenyl)]zirconium dichloride.

dimethylsilylenebis[1,1'-(2-furylcyclopentadienyl)]zirconium dichloride, dimethylsilylenebis{1,1'-[2-(2-furyl)-4,5-dimethyl-cyclopentadienyl]}zirconium dichloride, dimethylsilylenebis{1,1'-{2-[2-(5-trimethylsilyl)furyl]-4,5-dimethyl-cyclopentadienyl}zirc onium dichloride, dimethylsilylenebis{1,1'-[2-(2-furyl)indenyl]}zirconium dichloride, dimethylsilylenebis{1,1'-[2-(2-furyl)-4-phenyl-indenyl]}zirconium dichloride, dimethylsilylenebis{1,1'-[2-(2-(5-methyl)furyl)-4-phenyl-indenyl]}zirconium dichloride, dimethylsilylenebis{1,1'-[2-(2-(5-methyl)furyl)-4-(4-isopropyl)phenyl-indenyl]}zirconium dichloride, dimethylsilylenebis{1,1'-[2-(2-(5-methyl)furyl)-4-(4-t-butyl)phenyl-indenyl]}zirconium dichloride, isopropylidene(cyclopentadienyl)(9-fluorenyl)zirconium dichloride, isopropylidene(cyclopentadienyl)[9-(2,7-t-butyl)fluorenyl]zirconium dichloride, diphenylmethylene(cyclopentadienyl)[9-(2,7-t-butyl)fluorenyl]zirconium dichloride, diphenylmethylene(cyclopentadienyl)(9-fluorenyl)zirconium dichloride, diphenylmethylene(cyclopentadienyl)[9-(2,7-t-butyl)fluorenyl]zirconium dichloride, dimethylsilylene(cyclopentadienyl)(9-fluorenyl)zirconium dichloride, diphenylsilylene(cyclopentadienyl) [9-(2,7-t-butyl)fluorenyl]zirconium dichloride.

Compounds of general formula (III)

(t-butylamide)(tetramethyl-$\eta^5$-cyclopentadienyl)-1,2-ethanediylzirconium dichloride, (methylamide)-(tetramethyl-$\eta^5$-cyclopentadienyl)-1,2-ethanediyl-zirconium dichloride, (ethylamide)(tetramethyl-$\eta^5$-cyclopentadienyl)-methylenezirconium dichloride, (t-butylamide)dimethyl-(tetramethyl-$\eta^5$-cyclopentadienyl)silanezirconium dichloride, (t-butylamide)dimethyl(tetramethyl-$\eta^5$-cyclopentadienyl)silanezirconium dibenzyl, (benzylamide)dimethyl(tetramethyl-$\eta^5$-cyclopentadienyl)silanezirconium dichloride, (phenylphosphide)dimethyl(tetramethyl-$\eta^5$-cyclopentadienyl)silanezirconium dibenzyl.

Compounds of General Formula (IV)

(cyclopentadienyl)(phenoxy)zirconium dichloride, (2,3-dimethylcyclopentadienyl)(phenoxy)zirconium dichloride, (pentamethylcyclopentadienyl)(phenoxy)zirconium dichloride, (cyclopentadienyl)(2,6-di-t-butylphenoxy)zirconium dichloride, (pentamethylcyclopentadienyl)(2,6-di-i-propylphenoxy)zirconium dichloride.

Compounds of General Formula (V)

(cyclopentadienyl)zirconium trichloride, (2,3 -dimethylcyclopentadienyl)zirconium trichloride, (pentamethylcyclopentadienyl)zirconium trichloride, (cyclopentadienyl)zirconium triisopropoxide, (pentamethylcyclopentadienyl)zirconium triisopropoxide.

Compounds of General Formula (VI)

ethylenebis(7,7'-indenyl)zirconium dichloride, dimethylsilylenebis { 7,7'-(1 -methyl-3 -phenylindenyl)}zirconium dichloride, dimethylsilylenebis {7,7'-[1-methyl-4-(1-naphthyl)indenyl]}zirconium dichloride, dimethylsilylenebis[7,7'-(1-ethyl-3-phenylindenyl)]zirconium dichloride, dimethylsilylenebis { 7,7'-[1-isopropyl-3-(4-chlorophenyl)indenyl]}zirconium dichloride.

Compounds of General Formula (VII)

(i) Exemplification of Complexes Containing Secondary Carbon:

$(Me_2Si)_2\{\eta^5\text{-}C_5H\text{-}3,5\text{-}(CHMe_2)_2\}_2ZrCl_2$, $(Me_2Si)_2\{\eta^5\text{-}C_5H\text{-}3,5\text{-}(CHMe_2)_2\}_2ZrMe_2$, $(Me_2Si)_2\{\eta^5\text{-}C_5H\text{-}3,5\text{-}(CHMe_2)_2\}_2Zr(n\text{-}C_4H_9)_2$, $(Me_2Si)_2\{\eta^{55}\text{-}C_5H\text{-}3,5\text{-}(CH_{Me2})_2\}_2Zr(CH_2C_6H_5)_2$, rac-$(Me_2Si)_2\{\eta^5\text{-}C_5H\text{-}3\text{-}(CHMe_2)\text{-}5\text{-}Me\}_2ZrCl_2$, rac-$(Me_2Si)_2\{\eta^5\text{-}C_5H\text{-}3\text{-}(CHMe_2)\text{-}5\text{-}Me\}_2ZrMe_2$, rac-$(Me_2Si)_2\{\eta^5\text{-}C_5H\text{-}3\text{-}(CHMe)\text{-}5\text{-}Me\}_2Zr(n\text{-}C_4H_9)_2$, rac-$(Me_2Si)_2\{\eta^5\text{-}C_5H\text{-}3\text{-}(CHMe)\text{-}5\text{-}Me\}_2Zr(CH_2C_6H_5)_2$, meso-$(Me_2Si)_2\{\eta^5\text{-}C_5H\text{-}3\text{-}(CHMe_2)\text{-}5\text{-}Me\}_2ZrCl_2$, meso-$(Me_2Si)_2\{\eta^5\text{-}C_5H\text{-}3\text{-}(CHMe)\text{-}5\text{-}Me\}_2ZrMe_2$, meso-$(Me_2Si)_2\{\eta^5\text{-}C_5H\text{-}3\text{-}(CHMe)\text{-}5\text{-}Me\}_2Zr(n\text{-}C_4H_9)_2$, meso-$(Me2Si)_2\{\eta^5\text{-}C_5H\text{-}3\text{-}(CHMe_2)\text{-}5\text{-}Me\}_2Zr(CH_2C6H_5)_2$, $(Me_2Si)_2\{\eta^5\text{-}C_5H\text{-}3,5\text{-}(2\text{-adamantyl})_2\}_2ZrCl_2$, $(Me_2Si)_2\{\eta^5\text{-}C_5H\text{-}3,5\text{-}(2\text{-adamantyl})_2\}_2ZrMe_2$, $(Me_2Si)_2\{\eta^5\text{-}C_5H\text{-}3,5\text{-}(2\text{-adamantyl})_2\}_2Zr(n\text{-}C_4H_9)_2$, $(Me_2Si)_2\{\eta^5\text{-}C_5H\text{-}3,5\text{-}(2\text{-adamantyl})_2\}_2Zr(CH_2C_6H_5)_2$, rac-$(Me_2Si)_2\{\eta^5\text{-}C_5H\text{-}3\text{-}(2\text{-adamantyl})\text{-}5\text{-}Me\}_2ZrCl_2$, rac-$(Me_2Si)_2\{\eta^5\text{-}C_5H\text{-}3\text{-}(2\text{-adamantyl})\text{-}5\text{-}Me\}_2ZrMe_2$, rac-$(Me_2Si)_2\{\eta^5\text{-}C_5H\text{-}3\text{-}(2\text{-adamantyl})\text{-}5\text{-}Me\}_2Zr(n\text{-}C_4H_9)_2$, rac-$(Me_2Si)_2\{\eta^5\text{-}C_5H\text{-}3\text{-}(2\text{-adamantyl})\text{-}5\text{-}Me\}_2Zr(CH_2C_6H_5)_2$, meso-$(Me_2Si)_2\{\eta^5\text{-}C_5H\text{-}3\text{-}(2\text{-adamantyl})\text{-}5\text{-}Me\}_2ZrCl_2$, meso-$(Me_2Si)_2\{\eta^5\text{-}C_5H\text{-}3\text{-}(2\text{-adamantyl})\text{-}5\text{-}Me\}_2ZrMe_2$, meso-$(Me_2Si)_2\{\eta^5\text{-}C_5H\text{-}3\text{-}(2\text{-adamantyl})\text{-}5\text{-}Me\}_2Zr(n\text{-}C_4H_9)_2$, meso-$(Me_2Si)_2\{\eta^5\text{-}C_5H\text{-}3\text{-}(2\text{-adamantyl})\text{-}5\text{-}Me\}_2Zr(CH_2C_6H_5)_2$, $(Me_2Si)_2\{\eta^5\text{-}C_5H\text{-}3,5\text{-}(cyclohexyl)_2\}_2ZrCl_2$, $(Me_2Si)_2\{\eta^5\text{-}C_5H\text{-}3,5\text{-}(cyclohexyl)_2\}_2ZrMe_2$, $(Me_2Si)_2\{\eta^5\text{-}C_5H\text{-}3,5\text{-}(cyclohexyl)_2\}_2Zr(n\text{-}C_4H_9)_2$, $(Me_2Si)_2\{\eta^5\text{-}C_5H\text{-}3,5\text{-}(cyclohexyl)_2\}_2Zr(CH_2C_6H_5)_2$, rac-$(Me_2Si)_2\{\eta^5\text{-}C_5H\text{-}3\text{-}(cyclohexyl)\text{-}5\text{-}Me\}_2ZrCl_2$, rac-$(Me_2Si)_2\{\eta^5\text{-}C_5H\text{-}3\text{-}(cyclohexyl)\text{-}5\text{-}Me\}_2ZrMe_2$, rac-$(Me_2Si)_2\{\eta^5\text{-}C_5H\text{-}3\text{-}(cyclohexyl)\text{-}5\text{-}Me\}_2Zr(n\text{-}C_4H_9)_2$, rac-$(Me_2Si)_2\{\eta^5\text{-}C_5H\text{-}3\text{-}(cyclohexyl)\text{-}5\text{-}Me\}_2Zr(CH_2C_6H_5)_2$, meso-$(Me_2Si)_2\{\eta^5\text{-}C_5H\text{-}3\text{-}(cyclohexyl)\text{-}5\text{-}Me\}_2ZrCl_2$, meso-$(Me_2Si)_2\{\eta^5\text{-}C_5H\text{-}3\text{-}(cyclohexyl)\text{-}5\text{-}Me\}_2ZrMe_2$, meso-$(Me_2Si)_2\{\eta^5\text{-}C_5H\text{-}3\text{-}(cyclohexyl)\text{-}5\text{-}Me\}_2Zr(n\text{-}C_4H_9)_2$, meso-$(Me_2Si)_2\{\eta^5\text{-}C_5H\text{-}3\text{-}(cyclohexyl)\text{-}5\text{-}Me\}_2Zr(CH_2C_6H_5)_2$.

(ii) Exemplification of Compounds Having Tertiary Carbon

$(Me_2Si)_2\{\eta^5\text{-}C_5H\text{-}3,5\text{-}(CMe_3)_2\}_2ZrCl_2$, $(Me_2Si)_2\{\eta^5\text{-}C_5H\text{-}3,5\text{-}(CMe_3)_2\}_2ZrMe_2$, $(Me_2Si)_2\{\eta^5\text{-}C_5H\text{-}3,5\text{-}(CMe_3)_2\}_2Zr(n\text{-}C_4H_9)_2$, $(Me_2Si)_2\{\eta^5\text{-}C_5H\text{-}3,5\text{-}(CMe_3)_2\}_2Zr(CH_2C_6H_5)_2$, rac-$(Me_2Si)_2\{\eta^5\text{-}C_5H\text{-}3\text{-}(CMe_3)\text{-}5\text{-}Me\}_2ZrCl_2$, rac-$(Me_2Si)_2\{\eta^5\text{-}C_5H\text{-}3\text{-}(CMe_3)\text{-}5\text{-}Me\}_2ZrMe_2$, rac-$(Me_2Si)_2\{\eta^5\text{-}C_5H\text{-}3\text{-}(CMe_3)\text{-}5\text{-}Me\}_2Zr(n\text{-}C_4H_9)_2$, rac-$(Me_2Si)_2\{\eta^5\text{-}C_5H\text{-}3\text{-}(CMe_3)\text{-}5\text{-}Me\}_2Zr(CH_2C_6H_5)_2$, meso-$(Me_2Si)_2\{\eta^5\text{-}C_5H\text{-}3\text{-}(CMe_3)\text{-}5\text{-}Me\}_2ZrCl_2$, meso-$(Me_2Si)_2\{\eta^5\text{-}C_5H\text{-}3\text{-}(CMe_3)\text{-}5\text{-}Me\}_2ZrMe_2$, meso-$(Me_2Si)_2\{\eta^5\text{-}C_5H\text{-}3\text{-}(CMe_3)\text{-}5\text{-}Me\}_2Zr(n\text{-}C_4H_9)_2$, meso-$(Me_2Si)_2\{\eta^5\text{-}C_5H\text{-}3\text{-}(CMe_3)\text{-}5\text{-}Me\}_2Zr(CH_2C_6H_5)_2$, $(Me_2Si)_2\{\eta^5\text{-}C_5H\text{-}3,5\text{-}(1\text{-adamantyl})_2\}_2ZrCl_2$, $(Me_2Si)_2\{\eta^5\text{-}C_5H\text{-}3,5\text{-}(l\text{-adamantyl})_2\}_2ZrMe_2$, $(Me_2Si)_2\{\eta^5\text{-}C_5H\text{-}3,5\text{-}(1\text{-adamantyl})_2\}_2Zr(n\text{-}C_4H_9)_2$, $(Me_2Si)_2\{\eta^5\text{-}C_5H\text{-}3,5\text{-}(1\text{-adamantyl})_2\}_2Zr(CH_2C_6H_5)_2$, rac-$(Me_2Si)_2\{\eta^5\text{-}C_5H\text{-}3\text{-}(1\text{-adamantyl})\text{-}5\text{-}Me\}_2ZrCl_2$, rac-$(Me_2Si)_2\{\eta^5\text{-}C_5H\text{-}3\text{-}(1\text{-adamantyl})\text{-}5\text{-}Me\}_2ZrMe_2$, rac-$(Me_2Si)_2\{\eta^5\text{-}C_5H\text{-}3\text{-}(1\text{-adamantyl})\text{-}5\text{-}Me\}_2Zr(n\text{-}C_4H_9)_2$, rac-$(Me_2Si)_2\{\eta^5\text{-}C_5H\text{-}3\text{-}(1\text{-adamantyl})\text{-}5\text{-}Me\}_2Zr(CH_2C_6H_5)_2$, meso-$(Me_2Si)_2\{\eta^5\text{-}C_5H\text{-}3\text{-}(1\text{-adamantyl})\text{-}5\text{-}Me\}_2ZrCl_2$, meso-$(Me_2Si)_2\{\eta^5\text{-}C_5H\text{-}3\text{-}(1\text{-adamantyl})\text{-}5\text{-}Me\}_2ZrMe_2$, meso-$(Me_2Si)_2\{\eta^5\text{-}C_5H\text{-}3\text{-}(1\text{-adamantyl})\text{-}5\text{-}Me\}_2Zr(n\text{-}C_4H_9)_2$, meso-$(Me_2Si)_2\{\eta^5\text{-}C_5H\text{-}3\text{-}(1\text{-adamantyl})\text{-}5\text{-}Me\}_2Zr(CH_2C_6H_5)_2$, $(Me_2Si)_2\{\eta^5\text{-}C_5H\text{-}3,5\text{-}(1,1\text{-dimethylpropyl})_2\}_2ZrCl_2$, $(Me_2Si)_2\{\eta^5\text{-}C_5H\text{-}3,5\text{-}(1,1\text{-dimethylpropyl})_2\}_2ZrMe_2$, $(Me_2Si)_2\{\eta^5\text{-}C_5H\text{-}3,5\text{-}(1,1\text{-dimethylpropyl})_2\}_2Zr(n\text{-}C_4H_9)_2$, $(Me_2Si)_2\{\eta^5\text{-}C_5H\text{-}3,5\text{-}(1,1\text{-dimethylpropyl})_2\}_2Zr(CH_2C_6Hs)_2$, rac-$(Me_2Si)_2\{\eta^5\text{-}C_2H\text{-}3\text{-}(1,1\text{-dimethylpropyl})\text{-}5\text{-}Me\}_2ZrCl_2$, rac-$(Me_2Si)_2\{\eta^5\text{-}C_5H\text{-}3\text{-}(1,1\text{-dimethylpropyl})\text{-}5\text{-}Me\}_2ZrMe_2$, rac-$(Me_2Si)_2\{\eta^5\text{-}C_5H\text{-}3\text{-}(1,1\text{-dimethylpropyl})\text{-}5\text{-}Me\}_2Zr(n\text{-}C_4H_9)_2$, rac-$(Me_2Si)_2\{\eta^5\text{-}C_5H\text{-}3\text{-}(1,1\text{-dimethylpropyl})\text{-}5\text{-}Me\}_2Zr(CH_2C_6H_5)_2$, meso-$(Me_2Si)_2\{\eta^5\text{-}C_5H\text{-}3\text{-}(1,1\text{-dimethylpropyl})\text{-}5\text{-}Me\}_2ZrCl_2$, meso-$(Me_2Si)_2\{\eta^5\text{-}C_5H\text{-}3\text{-}(1,1\text{-dimethylpropyl})\text{-}5\text{-}Me\}_2ZrMe_2$, meso-$(Me_2Si)_2\{\eta^5\text{-}C_5H\text{-}3\text{-}(1,1\text{-dimethylpropyl})\text{-}5\text{-}Me\}_2Zr(n\text{-}C_4H_9)_2$, meso-$(Me_2Si)_2\{\eta^5\text{-}C_5H\text{-}3\text{-}(1,1\text{-dimethylpropyl})\text{-}5\text{-}Me\}_2Zr(CH_2C_6H_5)_2$.

(iii) Exemplification of Compounds Containing Alkylsilyl Group

$(Me_2Si)_2\{\eta^5\text{-}C_5H\text{-}3,5\text{-}(dimethylsilyl)_2\}_2ZrCl_2$, $(Me_2Si)_2\{\eta^5\text{-}C_5H\text{-}3,5\text{-}(dimethylsilyl)_2\}_2ZrMe_2$, $(Me_2Si)_2\{\eta^5\text{-}C_5H\text{-}3,5\text{-}(dimethylsilyl)_2\}_2Zr(n\text{-}C_4H_9)_2$, $(Me_2Si)_2\{\eta^5\text{-}C_5H\text{-}3,5\text{-}(dimethylsilyl)_2\}_2Zr(CH_2C_6H_5)_2$, rac-$(Me_2Si)_2\{\eta^5\text{-}C_5H\text{-}3\text{-}(dimethylsilyl)\text{-}5\text{-}Me\}_2ZrCl_2$, rac-$(Me_2Si)_2\{\eta^5\text{-}C_5H\text{-}3\text{-}(dimethylsilyl)\text{-}5\text{-}Me\}_2ZrMe_2$, rac-$(Me_2Si)_2\{\eta^5\text{-}C_5H\text{-}3\text{-}(dimethylsilyl)\text{-}5\text{-}Me\}_2Zr(n\text{-}C_4H_9)_2$, rac-$(Me_2Si)_2\{\eta^5\text{-}C_5H\text{-}3\text{-}(dimethylsilyl)\text{-}5\text{-}Me\}_2Zr(CH_2C_6H_5)_2$, meso-$(Me_2Si)_2\{\eta^5\text{-}C_5H\text{-}3\text{-}(dimethylsilyl)\text{-}5\text{-}Me\}_2ZrCl_2$, meso-$(Me_2Si)_2\{\eta^5\text{-}C_5H\text{-}3\text{-}(dimethylsilyl)\text{-}5\text{-}Me\}_2ZrMe_2$, meso-$(Me_2Si)_2\{\eta^5\text{-}C_5H\text{-}3\text{-}(dimethylsilyl)\text{-}S\text{-}Me\}_2Zr(n\text{-}C_4H_9)_2$, meso-$(Me_2Si)_2\{\eta^5\text{-}C_5H\text{-}3\text{-}(dimethylsilyl)\text{-}S\text{-}Me\}_2Zr(CH_2C_6H_5)_2$, $(Me_2Si)_2\{\eta^5\text{-}C_5H\text{-}3,5\text{-}(trimethylsilyl)_2\}_2ZrCl_2$, $(Me_2Si)_2\{\eta^5\text{-}C_5H\text{-}3,5\text{-}(trimethylsilyl)_2\}_2ZrMe_2$, $(Me_2Si)_2\{\eta^5\text{-}C_5H\text{-}3,5\text{-}(trimethylsilyl)_2\}_2Zr(n\text{-}C_4H_9)_2$, $(Me_2Si)_2\{\eta^5\text{-}C_5H\text{-}3,5\text{-}(trimethylsilyl)_2\}_2Zr(CH_2C_6H_5)_2$, rac-$(Me_2Si)_2\{\eta^5\text{-}C_5H\text{-}3\text{-}(trimethylsilyl)\text{-}5\text{-}Me\}_2ZrCl_2$, rac-$(Me_2Si)_2\{\eta^5\text{-}C_5H\text{-}3\text{-}(trimethylsilyl)\text{-}5\text{-}Me\}_2ZrCl_2$, rac-$(Me_2Si)_2\{\eta^5\text{-}C_5H\text{-}3\text{-}(trimethylsilyl)\text{-}5\text{-}Me\}_2ZrMe_2$, rac-$(Me_2Si)_2\{\eta^5\text{-}C_5H\text{-}3\text{-}(trimethylsilyl)\text{-}5\text{-}Me\}_2Zr(n\text{-}C_4H_9)_2$, rac-$(Me_2Si)_2\{\eta^5\text{-}C_5H\text{-}3\text{-}(trimethylsilyl)\text{-}5\text{-}Me\}_2Zr(CH_2C_6H_5)_2$, meso-$(Me_2Si)_2\{\eta^5\text{-}C_5H\text{-}3\text{-}(trimethylsilyl)\text{-}5\text{-}Me\}_2ZrCl_2$, meso-$(Me_2Si)_2\{\eta^5\text{-}C_5H\text{-}3\text{-}(trimethylsilyl)\text{-}5\text{-}Me\}_2ZrMe_2$, meso-$(Me_2Si)_2\{\eta^5\text{-}C_5H\text{-}3\text{-}(trimethylsilyl)\text{-}5\text{-}Me\}_2Zr(n\text{-}C_4H_9)_2$, meso-$(Me_2Si)_2\{\eta^5\text{-}C_5H\text{-}3\text{-}(trimethylsilyl)\text{-}5\text{-}Me\}_2Zr(CH_2C_6H_5)_2$, $(Me_2Si)_2\{\eta^5\text{-}C_5H\text{-}3,5\text{-}(diphenylsilyl)_2\}_2ZrCl_2$, $(Me_2Si)_2\{\eta^5\text{-}C_5H\text{-}3,5\text{-}(diphenylsilyl)_2\}_2ZrMe_2$, $(Me_2Si)_2\{\eta^5\text{-}C_5H\text{-}3,5\text{-}(diphenylsilyl)_2\}_2Zr(n\text{-}C_4H_9)_2$, $(Me_2Si)_2\{\eta^5\text{-}C_5H\text{-}3,5\text{-}(diphenylsi-}$

lyl)$_2$}$_2$Zr(CH$_2$C$_6$H$_5$)$_2$, rac-(Me$_2$Si)$_2${$\eta^5$-C$_5$H-3-(diphenylsilyl)-5-Me}$_2$ZrCl$_2$, rac-(Me$_2$Si)$_2${$\eta^5$-C$_5$H-3-(diphenylsilyl)-5-Me}$_2$ZrMe$_2$, rac-(Me$_2$Si)$_2${$\eta^5$-C$_5$H-3-(diphenylsilyl)-5-Me}$_2$Zr(n-C$_4$H$_9$)$_2$, rac-(Me$_2$Si)$_2${$\eta^5$-C$_5$H-3-(diphenylsilyl)-5-Me}$_2$Zr(CH$_2$C$_6$H$_5$)$_2$, meso-(Me$_2$Si)$_2${$\eta^5$-C$_5$H-3-(diphenylsilyl)-5-Me}$_2$ZrCl$_2$, meso-(Me$_2$Si)$_2${$\eta^5$-C$_5$H-3-(diphenylsilyl)-5-Me}$_2$ZrMe$_2$, meso-(Me$_2$Si)$_2${$\eta^5$-C$_5$H-3-(diphenylsilyl)-5-Me}$_2$Zr(n-C$_4$H$_9$)$_2$, meso-(Me$_2$Si)$_2${$\eta^5$-C$_5$H-3-(diphenylsilyl)-5-Me}$_2$Zr(CH$_2$C$_6$H$_5$)$_2$, (Me$_2$Si)$_2${$\eta^5$-C$_5$H-3,5-(phenylmethylsilyl)$_2$}$_2$ZrCl$_2$, (Me$_2$Si)$_2${$\eta^5$-C$_5$H-3,5-(phenylmethylsilyl)$_2$}$_2$ZrMe$_2$, (Me$_2$Si)$_2${$\eta^5$-C$_5$H-3,5-(phenylmethylsilyl)$_2$}$_2$Zr(n-C$_4$H$_9$)$_2$, (Me$_2$Si)$_2${$\eta^5$-C$_5$H-3,5-(phenylmethylsily1)$_2$}$_2$Zr(CH$_2$C$_6$H$_5$)$_2$, rac-(Me$_2$Si)$_2${$\eta^5$-C$_5$H-3-(phenylmethylsilyl)-5-Me}$_2$ZrCl$_2$, rac-(Me$_2$Si)$_2${$\eta^5$-C$_5$H-3-(phenylmethylsilyl)-5-Me}$_2$ZrMe$_2$, rac-(Me$_2$Si)$_2${$\eta^5$-C$_5$H-3-(phenylmethylsilyl)-5-Me}$_2$Zr(n-C$_4$H$_9$)$_2$, rac-(Me$_2$Si)$_2${$\eta^5$-C$_5$H-3-(phenylmethylsilyl)-5-Me}$_2$Zr(CH$_2$C$_6$H$_5$)$_2$, meso-(Me$_2$Si)$_2${$\eta^5$-C$_5$H-3-(phenylmethylsilyl)-5-Me}$_2$ZrCl$_2$, meso-(Me$_2$Si)$_2${$\eta^5$-C$_5$H-3-(phenylmethylsilyl)-5-Me}$_2$ZrMe$_2$, meso-(Me$_2$Si)$_2${$\eta^5$-C$_5$H-3-(phenylmethylsilyl)-5-Me}$_2$Zr(n-C$_4$H$_9$)$_2$, meso-(Me$_2$Si)$_2${$\eta^5$-C$_5$H-3-(phenylmethylsilyl)-5-Me}$_2$Zr(CH$_2$C$_6$H$_5$)$_2$.

Incidentally, "Me" in the above exemplifications (i) to (iii) of the general formula (VII) indicates a methyl group.

Among the aforementioned exemplifications (i) to (iii) of the general formula (VII), preferred are rac-(Me$_2$Si)$_2${$\eta^5$-C$_5$H-3-(CHMe$_2$)-5-Me}$_2$ZrCl$_2$, rac-(Me$_2$Si)$_2${$\eta^5$-C$_5$H-3-(CHMe$_2$)-5-Me}$_2$ZrMe$_2$, meso-(Me$_2$Si)$_2${$\eta^5$-C$_5$H-3-(CHMe$_2$)-5-Me}$_2$ZrCl$_2$, meso-(Me$_2$Si)$_2${$\eta^5$-C$_5$H-3-(CHMe$_2$)-5-Me}$_2$ZrMe$_2$, rac-(Me$_2$Si)$_2${$\eta^5$-C$_5$H-3-(dimethylsilyl)-5-Me}$_2$ZrCl$_2$, rac-(Me$_2$Si)$_2${$\eta^5$-C$_5$H-3-(dimethylsilyl)-5-Me}$_2$ZrMe$_2$, meso-(Me$_2$Si)$_2${$\eta^5$-C$_5$H-3-(dimethylsilyl)-5-Me}$_2$ZrCl$_2$, and meso-(Me$_2$Si)$_2${$\eta^5$-C$_5$H-3-(dimethylsilyl)-5-Me}$_2$ZrMe$_2$.

Incidentally, compounds in which the silylene group in the compounds of these specific examples is replaced with a germylene group are also exemplified as preferable compounds.

As special examples of the metallocene complex, there can be also used transition metal compounds having a ligand containing one or more elements other than carbon in the 5-membered ring or 6-membered ring, which are disclosed in JP-A-7-188335 and Journal of American Chemical Society, 1996, Vol. 118, 2291.

Moreover, examples of the metallocene complex having a heterocyclic hydrocarbon group as a substituent are disclosed in Japanese Patent No. 3674509.

Among the catalyst components (A) described in the above, as a preferred metallocene complex for producing the ethylene polymer (A), the metallocene complexes represented by the general formula (I) or the general formula (II) are preferred and, of these, the metallocene complexes having a cyclopentadienyl ring and a heterocyclic aromatic group are preferred, and further, the metallocene complexes having an indenyl ring skeleton are preferred. From the viewpoint of capability of generating a polymer having high molecular weight and excellent copolymerizability in the copolymerization of ethylene and other $\alpha$-olefins, the metallocene complexes represented by the general formula (II) are preferred, and the metallocene complexes represented by the general formula (II) and having an indenyl ring skeleton are most preferred. The capability of producing a high-molecular-weight body has an advantage that polymers having various molecular weights can be designed by various methods for adjusting the molecular weight of a polymer as described later.

Furthermore, from the viewpoint of capability of producing a polyethylene having high molecular weight and long-chain branching, among the metallocene complexes represented by the general formula (II), the following compound group is preferred.

As one example of preferred embodiments, the compound group is a crosslinked metallocene complex containing at least one heterocyclic aromatic group in the compound as R$^1$ to R$^2$. As preferred heterocyclic aromatic groups, there may be mentioned a group consisting of a furyl group, a benzofuryl group, a thienyl group, and a benzothienyl group. These substituents may further have a substituent such as a silicon-containing group. Among substituents selected from the group consisting of a furyl group, a benzofuryl group, a thienyl group, and a benzothienyl group, a furyl group and a benzofuryl group are further preferred. Furthermore, the substituent is preferably introduced into the 2-position of the substituted cyclopentadienyl group or the substituted indenyl group and particularly preferred is a compound having at least one substituted cyclopentadienyl group having no other condensed ring structure.

By using one of the compounds as the metallocene complex, and further, by employing specific polymerization conditions, an ethylene polymer (A) preferable in the invention can be easily produced.

The metallocene complex is preferably used as a supported catalyst as described below. In the first compound group, it is considered that heterogeneity is generated at the active site structure by the interaction between a solid acid on the carrier and the so-called heteroatom contained in the furyl group or the thienyl group, and thus the long-chain branching is easily formed. Also in the second compound group, it is considered that, since the space around the active site is changed by the use of the supported catalyst, the long-chain branching is easily formed.

(2) Catalyst Component (B)

The method for producing the ethylene polymer (A) according to the present invention is characterized in that, as essential components of the olefin polymerization catalyst, in addition to the above catalyst component (A), there are contained the compound that reacts with the metallocene compound of the catalyst component (A) (catalyst component (A), hereinafter sometimes simply referred to as "A") to form a cationic metallocene compound (catalyst component (B), hereinafter sometimes simply referred to as "B") and, if necessary, the fine particle carrier (catalyst component (C), hereinafter sometimes simply referred to as "C").

As one of the catalyst component (B), an organoaluminum oxy compound may be mentioned.

The organoaluminum oxy compound has an Al-O-Al bond in the molecule, and the number of the bonds is in the range of usually 1 to 100, preferably 1 to 50. Such organoaluminum oxy compound is usually a product obtained by reacting an organoaluminum compound with water.

The reaction of the organoaluminum with water is usually carried out in an inert hydrocarbon (solvent). As the inert hydrocarbon, there can be used aliphatic hydrocarbons, alicyclic hydrocarbons, and aromatic hydrocarbons such as pentane, hexane, heptane, cyclohexane, methylcyclohexane, benzene, toluene, and xylene, but it is preferable to use an aliphatic hydrocarbon or an aromatic hydrocarbon.

As the organoaluminum compound to be used for preparing the organoaluminum oxy compound, any of the compounds represented by the general formula (VIII) can be used but preferably, a trialkylaluminum is used.

$$R^5_t AlX^3_{3-t} \qquad \text{General formula (VIII)}$$

wherein $R^5$ represents a hydrocarbon group having 1 to 18 carbon atoms, preferably 1 to 12 carbon atoms, such as an alkyl group, an alkenyl group, an aryl group, or an aralkyl group, $X^3$ represents a hydrogen atom or a halogen atom, and t represents an integer of $1 \leq t \leq 3$.

The alkyl group in the trialkylaluminum may be any of a methyl group, an ethyl group, a propyl group, an isopropyl group, a butyl group, an isobutyl group, a pentyl group, a hexyl group, an octyl group, a decyl group, or a dodecyl group, but a methyl group is particularly preferred.

The above organoaluminum compounds may be also used in combinations of two or more thereof.

The reaction ratio of water to the organoaluminum compound (molar ratio of water/Al) is preferably 0.25/1 to 1.2/1, particularly preferably 0.5/1 to 1/1, and the reaction temperature is usually in the range of usually -70 to 100°C, preferably -20 to 20°C. The reaction time is selected from the range of usually 5 minutes to 24 hours, preferably 10 minutes to 5 hours. As the water required for the reaction, there may be utilized not only simple water but also crystal water contained in copper sulfate hydrate, aluminum sulfate hydrate, or the like and a component from which water may be formed in the reaction system.

Of the organoaluminum oxy compounds described above, one obtained by reacting an alkylaluminum and water is usually referred to as an aluminoxane and particularly, methylaluminoxane (including those essentially composed of methylaluminoxane (MAO)) is suitable as the organoaluminum oxy compound.

Of course, as the organoaluminum oxy compound, two or more of the organoaluminum oxy compounds described above can also be used in combination, and a solution or dispersion of the organoaluminum oxy compound in a aforementioned inert hydrocarbon solvent mentioned above may be used.

In addition, as other specific examples of the catalyst component (B), borane compounds and borate compounds may be mentioned.

When the borane compounds are more specifically expressed, there may be mentioned triphenylborane, tri(o-tolyl)borane, tri(p-tolyl)borane, tri(m-tolyl)borane, tri(o-fluorophenyl)borane, tris(p-fluorophenyl)borane, tris(m-fluorophenyl)borane, tris(2,5-difluorophenyl)borane, tris(3,5-difluorophenyl)borane, tris(4-trifluoromethylphenyl)borane, tris(3,5-ditrifluoromethylphenyl)borane, tris(2,6-ditrifluoromethylphenyl)borane, tri s(pentafluorophenyl)borane, tris(perfluoronaphthyl)borane, tris(perfluorobiphenyl)borane, tris(perfluoroanthryl)borane, tris(perfluorobinaphthyl)borane, and the like.

Of these, tris(3,5-ditrifluoromethylphenyl)borane, tris(2,6-ditrifluoromethylphenyl)borane, tri s(pentafluorophenyl)borane, tris(perfluoronaphthyl)borane, tri s(perfluorobiphenyl)borane, tris(perfluoroanthryl)borane, and tris(perfluorobinaphthyl)borane are more preferred, and further preferably, tris(2,6-ditrifluoromethylphenyl)borane, tri s(pentafluorophenyl)borane, tris(perfluoronaphthyl)borane, and tris(perfluorobiphenyl)borane are exemplified as preferred compounds.

Further, when the borate compounds are specifically expressed, a first example is a compound represented by the following general formula (IX).

$$[L^1\text{-}H]^+[BR^6R^7X4X^5]^- \qquad \text{General formula (IX)}$$

In the formula (IX), $L^1$ is a neutral Lewis base, H is a hydrogen atom, $[L^1\text{-}H]$ is a Bronsted acid such as an ammonium, an anilinium, or a phosphonium.

As the ammonium, there can be exemplified trialkyl-substituted ammoniums such as trimethylammonium, triethylammonium, tripropylammonium, tributylammonium, and tri(n-butyl)ammonium, and dialkylammoniums such as di(n-propyl)ammonium and dicyclohexylammonium.

As the anilinium, there can be exemplified N,N-dialkylaniliniums such as N,N-dimethylanilinium, N,N-diethylanilinium, and N,N-2,4,6-pentamethylanilinium.

Furthermore, as the phosphonium, there may be mentioned triarylphosphoniums such as triphenylphosphonium, tributylphosphonium, tri(methylphenyl)phosphonium, and tri(dimethylphenyl)phosphonium, and trialkylphosphoniums.

In the formula (IX), $R^6$ and $R^7$ are each an aromatic or substituted aromatic hydrocarbon group having 6 to 20, preferably 6 to 16 carbon atoms, which are the same or different from each other, and may be linked to each other with a crosslinking group. As the substituent of the substituted aromatic hydrocarbon group, preferred is an alkyl group represented by a methyl group, an ethyl group, a propyl group, or an isopropyl group, or a halogen atom such as fluorine, chlorine, bromine, or iodine.

Furthermore, $X^4$ and $X^5$ are each independently a hydride group, a halide group, a hydrocarbon group containing 1 to 20 carbon atoms, or a substituted hydrocarbon group containing 1 to 20 carbon atoms, one or more hydrogen atoms of which are replaced with a halogen atom.

As specific examples of the compound represented by the above general formula (IX), there can be exemplified tributylammonium tetra(pentafluorophenyl)borate, tributylammonium tetra(2,6-ditrifluoromethylphenyl)borate, tributylammonium tetra(3,5-ditrifluoromethylphenyl)b orate, tributylammonium tetra(2,6-difluorophenyl)borate, tributylammonium tetra(perfluoronaphthyl)borate, dimethylanilinium tetra(pentafluorophenyl)borate, dimethylanilinium tetra(2,6-ditrifluoromethylphenyl)b orate, dimethylanilinium tetra(3,5-ditrifluoromethylphenyl)borate, dimethylanilinium tetra(2,6-difluorophenyl)borate, dimethylanilinium tetra(perfluoronaphthyl)borate, triphenylphosphonium tetra(pentafluorophenyl)b orate, triphenylphosphonium tetra(2,6-ditrifluoromethylphenyl)borate, triphenylphosphonium tetra(3,5-ditrifluoromethylphenyl)borate, triphenylphosphonium tetra(2,6-difluorophenyl)borate, triphenylphosphonium tetra(perfluoronaphthyl)borate, trimethylammonium tetra(2,6-ditrifluoromethylphenyl)borate, triethylammonium tetra(pentafluorophenyl)borate, triethylammonium tetra(2,6-ditrifluoromethylphenyl)borate, triethylammonium tetra(perfluoronaphthyl)borate, tripropylammonium tetra(pentafluorophenyl)b orate, tripropylammonium tetra(2,6-ditrifluoromethylphenyl)borate, tripropylammonium tetra(perfluoronaphthyl)b orate, di(1-propyl)ammonium tetra(pentafluorophenyl)borate, dicyclohexylammonium tetraphenylborate, and the like.

Of these, preferred are tributylammonium tetra(pentafluorophenyl)borate, tributylammonium tetra(2,6-ditrifluoromethylphenyl)borate, tributylammonium tetra(3,5-ditrifluoromethylphenyl)borate, tributylammonium tetra(perfluoronaphthyl)borate, dimethylanilinium tetra(pentafluorophenyl)borate, dimethylanilinium tetra(2,6-ditrifluoromethylphenyl)b orate, dimethylanilinium tetra(3,5-ditrifluoromethylphenyl)borate, and dimethylanilinium tetra(perfluoronaphthyl)borate.

Further, a second example of the borate compound is represented by the following general formula (X).

$$[L^2]^+[BR^6R^7X^4X^5]^- \qquad \text{General formula (X)}$$

In the formula (X), as $L^2$, there may be mentioned a carbocation, a methyl cation, an ethyl cation, a propyl cation, an isopropyl cation, a butyl cation, an isobutyl cation, a tert-butyl cation, a pentyl cation, a tropinium cation, a benzyl cation, a trityl cation, a sodium cation, a proton, and the like. Further, $R^6$, $R^7$, $X^4$, and $X^5$ are the same as defined in the above general formula (IX).

As specific examples of the above compound, there can be exemplified trityl tetraphenylborate, trityl tetra(o-tolyl)borate, trityl tetra(p-tolyl)borate, trityl tetra(m-tolyl)borate, trityl tetra(o-fluorophenyl)borate, trityl tetra(p-fluorophenyl)borate, trityl tetra(m-fluorophenyl)borate, trityl tetra(3,5-difluorophenyl)borate, trityl tetra(pentafluorophenyl)borate, trityltetra(2,6 ditrifluoromethylphenyl)borate, trityl tetra(3,5-ditrifluoromethylphenyl)borate, trityl tetra(perfluoronaphthyl)borate, tropinium tetraphenylborate, tropinium tetra(o-tolyl)borate, tropinium tetra(p-tolyl)borate, tropinium tetra(m-tolyl)borate, tropinium tetra(o-fluorophenyl)borate, tropinium tetra(p-fluorophenyl)borate, tropinium tetra(m-fluorophenyl)borate, tropinium tetra(3,5-difluorophenyl)borate, tropinium tetra(pentafluorophenyl)borate, tropinium tetra(2,6-ditrifluoromethylphenyl)borate, tropinium tetra(3, 5-ditrifluoromethylphenyl)borate, tropinium tetra(perfluoronaphthyl)borate, $NaBPh_4$, $NaB(o-CH_3-Ph)_4$, $NaB(p-CH_3-Ph)_4$, $NaB(m-CH_3-Ph)_4$, $NaB(o-F-Ph)_4$, $NaB(p-F-Ph)_4$, $NaB(m-F-Ph)_4$, $NaB(3,5-F_2-Ph)_4$, $NaB(C_6F_5)_4$, $NaB(2,6-(CF_3)_2-Ph)_4$, $NaB(3,5-(CF_3)_2-Ph)_4$, $NaB(C_{10}F_7)_4$, $H^+BPh_4^-\cdot2$ diethyl ether, $H^+B(3,5-F_2-Ph)_4^-\cdot2$ diethyl ether, $H^+B(C_6F_5)_4^-\cdot2$ diethyl ether, $H^+B(2,6-(CF_3)_2-Ph)_4^-\cdot2$ diethyl ether, $H^+B(3,5-(CF_3)_2-Ph)_4^-\cdot2$ diethyl ether, and $H^+B(C_{10}H_7)_4^-\cdot2$ diethyl ether. Incidentally, the above "Ph" represents a phenyl group.

Of these, preferred are trityl tetra(pentafluorophenyl)borate, trityl tetra(2,6-ditrifluoromethylphenyl)borate, trityl tetra(3,5-ditrifluoromethylphenyl)borate, trityl tetra(perfluoronaphthyl)borate, tropinium tetra(pentafluorophenyl)borate, tropinium tetra(2,6-ditrifluoromethylphenyl)borate, tropinium tetra(3,5-ditrifluoromethylphenyl)borate, tropinium tetra(perfluoronaphthyl)borate, $NaB(C_6F_5)_4$, $NaB(2,6-(CF_3)_2-Ph)_4$, $NaB(3,5-(CF_3)_2-Ph)_4$, $NaB(C_{10}F_7)_4$, $H^+B(C_6F_5)_4^-\cdot2$ diethyl ether, $H^+B(2,6-(CF_3)_2-Ph)_4^-\cdot2$ diethyl ether, $H^+B(3,5-(CF_3)_2-Ph)_4^-\cdot2$ diethyl ether, and $H^+B(C_{10}H_7)_4^-\cdot2$ diethyl ether.

More preferably, of these, there may be mentioned trityl tetra(pentafluorophenyl)borate, trityl tetra(2,6-ditrifluoromethylphenyl)borate, tropinium tetra(pentafluorophenyl)b orate, tropinium tetra(2,6-difluoromethylphenyl)borate,

$NaB(C_6F_5)_4$, $NaB(2,6-(CF_3)_2-Ph)_4$, $H^+B(C_6F_5)_4^-\cdot2$ diethyl ether, $H^+B(2,6-(CF_3)_2-Ph)_4^-\cdot2$ diethyl ether, $H^+B(3,5-(CF_3)_2-Ph)_4^-\cdot2$ diethyl ether, and $H^+B(C_{10}H_7)_4^-\cdot2$ diethyl ether.

Further particularly preferable catalyst component (B) is an organoaluminum oxy compound.

By using one of the compounds as the catalyst component (B), and further, by employing specific polymerization conditions, an ethylene polymer (A) preferable in the invention can be easily produced.

(3) Catalyst Component (C)

As the fine particle carrier that is a catalyst component (C), there may be mentioned an inorganic carrier, a particulate polymer carrier, or a mixture thereof. As the inorganic carrier, a metal, a metal oxide, a metal chloride, a metal carbonate, a carbonaceous material, or a mixture thereof can be used.

As suitable metals that can be used as the inorganic carriers, for example, iron, aluminum, nickel, and the like may be mentioned.

Further, as the metal oxide, either single oxides or composite oxides belonging to the group 1 to the group 14 elements of the periodic table can be mentioned and, for example, there can be exemplified natural or synthetic various single oxides or composite oxides such as $SiO_2$, $Al_2O_3$, $MgO$, $CaO$, $B_2O_3$, $TiO_2$, $ZrO_2$, $Fe_2O_3$, $Al_2O_3 \cdot MgO$, $Al_2O_3 \cdot CaO$, $Al_2O_3 \cdot SiO_2$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$, $SiO_2 \cdot MgO$, and the like.

Here, the above formula is not a molecular formula and only represents the composition, and the structure and catalyst component ratio of the composite oxide to be used in the invention are not particularly limited.

The metal oxide to be used in the invention may be one that has absorbed a small amount of moisture and also may be one that contains a small amount of impurities.

As the metal chloride, for example, a chloride of an alkali metal or an alkaline earth metal is preferred, and specifically, $MgCl_2$, $CaCl_2$, and the like are especially preferred.

As the metal carbonate, a carbonate of an alkali metal or an alkaline earth metal is preferred, and specifically, magnesium carbonate, calcium carbonate, barium carbonate, and the like may be mentioned.

As the carbonaceous material, for example, carbon black, active carbon, and the like may be mentioned.

The above inorganic carriers can be all suitably used in the invention but particularly, the use of a metal oxide, silica, alumina, or the like is preferred.

These inorganic carriers are preferably used after calcined at usually 200 to 800°C, preferably 400 to 600°C in the air or an inert gas such as nitrogen or argon to regulate the amount of surface hydroxyl groups to 0.8 to 1.5 mmol/g.

The properties of the inorganic carriers are not particularly limited but, usually, it is preferable to use an inorganic carrier having an average particle size of 5 to 200 $\mu$m, preferably 10 to 150 $\mu$m, an average pore size of 20 to 1000 Å, preferably 50 to 500 Å, a specific surface area of 150 to 1000 $m^2/g$, preferably 200 to 700 $m^2/g$, a pore volume of 0.3 to 2.5 $cm^3/g$, preferably 0.5 to 2.0 $cm^3/g$, and an apparent specific gravity of 0.10 to 0.50 $g/cm^3$.

The above-described inorganic carrier can be, as a matter of course, used as it is but can be used after the carrier is brought into contact with an organoaluminum compound such as trimethylaluminum, triethylaluminum, triisobutylaluminum, trihexylaluminum, tripropylaluminum, tributylaluminum, trioctylaluminum, tridecylaluminum, or diisobutylaluminum hydride, or an organoaluminum oxy compound containing an Al-O-Al bond, as a pretreatment.

As further particularly preferable catalyst component (C), $SiO_2$, $Al_2O_3$, and $Al_2O_3 \cdot SiO_2$ may be mentioned.

By using one of the compounds as the catalyst component (C), and further, by employing specific polymerization conditions, an ethylene polymer (A) preferable in the invention can be easily produced.

(4) Contact Method and the like

With regard to the metallocene catalyst according to the invention, at the time of obtaining the catalyst composed of the catalyst component (A), the catalyst component (B), and optionally the catalyst component (C), a method of bringing the components into contact with one another is not particularly limited and, for example, the following methods can be arbitrarily employed.

Contact method (1): After the catalyst component (A) and the catalyst component (B) are brought into contact with each other, the catalyst component (C) is brought into contact therewith.

Contact method (2): After the catalyst component (A) and the catalyst component (C) are brought into contact with each other, the catalyst component (B) is brought into contact therewith.

Contact method (3): After the catalyst component (B) and the catalyst component (C) are brought into contact with each other, the catalyst component (A) is brought into contact therewith.

Of these contact methods, the contact methods (1) and (3) are preferred, and the contact method (1) is most preferred. In any contact methods, there is usually employed a method of bringing the components into contact with one another in an inert atmosphere such as nitrogen or argon, generally in the presence of a liquid inert hydrocarbon, e.g., an aromatic hydrocarbon such as benzene, toluene, xylene, or ethylbenzene (usually 6 to 12 carbon atoms) or an aliphatic or alicyclic hydrocarbon such as heptane, hexane, decane, dodecane, or cyclohexane (usually 5 to 12 carbon atoms), under stirring or without stirring.

This contact is preferably performed at a temperature of usually -100°C to 200°C, preferably -50°C to 100°C, further preferably 0°C to 50°C, for 5 minutes to 50 hours, preferably 30 minutes to 24 hours, more preferably 30 minutes to 12 hours.

Further, at the time of the contact of the catalyst component (A), the catalyst component (B), and the catalyst component (C), as described above, there can be used both of an aromatic hydrocarbon solvent in which certain component(s) are soluble or sparingly soluble and an aliphatic or alicyclic hydrocarbon solvent in which certain component(s) are insoluble or sparingly soluble.

In the case of carrying out the contact reaction of the components stepwise, the solvent or the like used in the preceding step may be directly used as a solvent in the subsequent contact reaction without removing it. Alternatively, after the preceding contact reaction using a soluble solvent, a liquid inert hydrocarbon (e.g., an aliphatic hydrocarbon, an alicyclic hydrocarbon, or an aromatic hydrocarbon, such as pentane, hexane, decane, dodecane, cyclohexane, benzene, toluene, or xylene) in which certain component(s) are insoluble or sparingly soluble may be added thereto to recover a desired product as a solid matter or a part or all of the soluble solvent is once removed by a means such as drying to take out the desired product as a solid matter, and thereafter, the subsequent contact reaction of the desired product may be carried out using any of the above-described inert hydrocarbon solvents. In the invention, the contact reaction of the components may be conducted plural times.

In the invention, the use ratio of the catalyst component (A), the catalyst component (B), and the catalyst component (C) is not particularly limited, but is preferably in the following range.

In the case where an organoaluminum oxy compound is used as the catalyst component (B), the atomic ratio of aluminum in the organoaluminum oxy compound to the transition metal (M) in the catalyst component (A) (Al/M) is desirably in the range of usually 1 to 100,000, preferably 5 to 1,000, more preferably 50 to 200 and, in the case where a borane compound or a borate compound is used, the atomic ratio of boron to the transition metal (M) in the metallocene compound (B/M) is desirably selected from the range of usually 0.01 to 100, preferably 0.1 to 50, more preferably 0.2 to 10.

Furthermore, in the case where a mixture of an organoaluminum oxy compound and a borane compound or a borate compound is used as the catalyst component (B), for each compound in the mixture, it is desirable to select a use ratio the same as described above relative to the transition metal (M).

The amount of the catalyst component (C) to be used is 1 g, per 0.0001 to 5 mmol, preferably per 0.001 to 0.5 mmol, more preferably per 0.01 to 0.1 mmol of the transition metal in the catalyst component (A).

The catalyst component (A), the catalyst component (B), and the catalyst component (C) are brought into contact with one another by any of the contact methods (1) to (3), and thereafter, by removing the solvent, a catalyst for olefin polymerization can be obtained as a solid catalyst. The removal of the solvent is desirably performed under normal pressure or under reduced pressure, at 0 to 200°C, preferably at 20 to 150°C, for 1 minute to 50 hours, preferably for 10 minutes to 10 hours.

Incidentally, the metallocene catalyst can be also obtained by the following method.

Contact method (4): The catalyst component (A) and the catalyst component (C) are brought into contact with each other and the solvent is removed to form a solid catalyst component, which is brought into contact with an organoaluminum oxy compound, a borane compound, a borate compound, or a mixture thereof under polymerization conditions.

Contact method (5): An organoaluminum oxy compound, a borane compound, a borate compound, or a mixture thereof is brought into contact with the catalyst component (C) and the solvent is removed to form a solid catalyst component, which is brought into contact with the catalyst component (A) under polymerization conditions.

Also in the case of the above contact methods (4) and (5), as the component ratio, the contact conditions, and the solvent removal conditions, the same conditions as described above can be used.

Further, as a component serving as both of the catalyst component (B) and the catalyst component (C) that are essential components for the method of producing the ethylene polymer (A) according to the invention, it is also possible to use a phyllosilicate.

The phyllosilicate is a silicate compound having a crystal structure in which planes configured by an ionic bond and the like are stacked in parallel with a weak bonding force.

Most phyllosilicates are naturally mainly produced as a main component of clay minerals, but these phyllosilicates are not particularly limited to naturally occurring ones and may be artificially synthesized ones.

Of these, smectite group, vermiculite group, and mica group such as montmorillonite, sauconite, beidellite, nontronite, saponite, hectorite, stevensite, bentonite, and taeniolite are preferable.

In general, natural products are often non-ion-exchangeable (non-swellable) and, in that case, in order to have a preferred ion exchangeability (or swellability), it is preferable to perform a treatment for imparting the ion exchangeability (or swellability). Among such treatments, particularly preferred include the following chemical treatments.

Here, as the chemical treatments, there can be used both of a surface treatment in which impurities attached to the surface are removed and a treatment which influences the crystal structure and/or chemical composition of the phyllosilicate.

Specifically, there may be mentioned (i) an acid treatment carried out using hydrochloric acid, sulfuric acid, or the like, (ii) an alkali treatment carried out using NaOH, KOH, NH$_3$, or the like, (iii) a salt treatment using a salt composed of a cation containing at least one atom selected from the group 2 to the group 14 of the periodic table and at least one anion selected from the group consisting of halogen atoms and inorganic acid-derived anions, (iv) a treatment with an organic substance such as an alcohol, a hydrocarbon compound, formamide, or aniline, and the like. These treatments may be carried out singly or in combination of two or more thereof.

As for the phyllosilicate, at any time before, during, or after any steps, the particle properties can be regulated by grinding, granulating, sizing, fractionating, or the like. The method may be any purposive one. In particular, as for the granulation method, for example, there may be mentioned a spray granulation method, a rolling granulation method, a compression granulation method, a stirring granulation method, a briquetting method, a compacting method, an extrusion granulation method, a fluidized bed granulation method, an emulsifying granulation method, an in-liquid granulation method, and the like. Among the above, particularly preferred granulation methods are a spray granulation method, a rolling granulation method, and a compression granulation method.

The phyllosilicate described above can be, as a matter of course, used as it is, but the phyllosilicate can be used in combination with an organoaluminum compound such as trimethylaluminum, triethylaluminum, triisobutylaluminum, tripropylaluminum, tributylaluminum, trihexylaluminum, trioctylaluminum, tridecylaluminum, or diisobutylaluminum hydride or an organoaluminum oxy compound containing an Al-O-Al bond.

In the metallocene catalyst according to the invention, for supporting the catalyst component (A) on the phyllosilicate, the catalyst component (A) and the phyllosilicate may be brought into contact with each other, or the catalyst component (A), the organoaluminum compound, and the phyllosilicate may be brought into contact with one another.

The contact method of the components is not particularly limited and, for example, the following method can be arbitrarily employed.

Contact method (6): After the catalyst component (A) and the organoaluminum compound are brought into contact with each other, the resultant is brought into contact with the phyllosilicate carrier.

Contact method (7): After the catalyst component (A) and the phyllosilicate carrier are brought into contact with each other, the resultant is brought into contact with the organoaluminum compound.

Contact method (8): After the organoaluminum compound and the phyllosilicate carrier are brought into contact with each other, the resultant is brought into contact with the catalyst component (A).

Of these contact methods, the contact methods (6) and (8) are preferred. Even in any contact methods, there is usually employed a method of bringing the components into contact with one another in an inert atmosphere such as nitrogen or argon, generally in the presence of a liquid inert hydrocarbon, e.g., an aromatic hydrocarbon such as benzene, toluene, xylene, or ethylbenzene (usually 6 to 12 carbon atoms) or an aliphatic or alicyclic hydrocarbon such as heptane, hexane, decane, dodecane, or cyclohexane (usually 5 to 12 carbon atoms), under stirring or without stirring.

The use ratio of the catalyst component (A), the organoaluminum compound, and the phyllosilicate carrier is not particularly limited, but is preferably in the following range.

The amount of the catalyst component (A) to be supported is 0.0001 to 5 mmol, preferably 0.001 to 0.5 mmol, and more preferably 0.01 to 0.1 mmol per 1 g of the phyllosilicate carrier.

Further, the amount of Al to be supported in the case of using the organoaluminum compound is desirably in the range of 0.01 to 100 mol, preferably 0.1 to 50 mol, more preferably 0.2 to 10 mol.

For the method of supporting and solvent removal, the same conditions as in the case of the inorganic carrier may be used.

When the phyllosilicate is used as a component serving as both of the catalyst component (B) and the catalyst component (C), the polymerization activity is high and the productivity of the ethylene-based polymer having long-chain branching is improved.

The thus obtained olefin polymerization catalyst may be used after a preliminary polymerization of monomers is performed as needed.

As a production example of the metallocene catalyst, for example, it can be produced with reference to the "Catalyst" and "Blending Ratio of Raw Materials and Conditions" described in JP-T-2002-535339 and JP-A-2004-189869. Furthermore, the index of the polymer can be regulated by various polymerization conditions and, for example, it can be regulated by the methods described in JP-A-2-269705 and JP-A-3-21607.

The ethylene polymer (A) is obtained by homopolymer of ethylene or copolymerization of ethylene with an α-olefin having 3 to 12 carbon atoms, for example, propylene, 1-butene, 1-pentene, 1-hexene, 4-methyl-1-pentene, 1-octene, or the like. Moreover, it is also possible to perform copolymerization with a diene in the case where modification is purposed. Examples of the diene compound to be used at this time include butadiene, 1,4-hexadiene, ethylidenenorbornene, dicyclopentadiene, and the like. Incidentally, the comonomer content at the polymerization can be selected arbitrarily but, for example, in the case of the copolymerization of ethylene with an α-olefin having 3 to 12 carbon atoms,

the $\alpha$-olefin content in the ethylene-$\alpha$-olefin copolymer is 0 to 40% by mol, preferably 0 to 30% by mol.

The molecular weight of the produced polymer can be controlled to some extent by varying the polymerization conditions such as the polymerization temperature and the molar ratio of the catalyst, but the control of the molecular weight can be more effectively performed by the addition of hydrogen to the polymerization reaction system.

Further, even when a component for the purpose of water removal, a so-called scavenger, is added into the polymerization system, the polymerization can be carried out without any trouble.

As such a scavenger, there are used organoaluminum compounds such as trimethylaluminum, triethylaluminum, and triisobutylaluminum, the above-described organoaluminum oxy compounds, modified organoaluminum compounds containing a branched alkyl, organozinc compounds such as diethylzinc and dibutylzinc, organomagnesium compounds such as diethylmagnesium, dibutylmagnesium, and ethylbutylmagnesium, Grignard compounds such as ethylmagnesium chloride and butylmagnesium chloride. Of these, preferred are triethylaluminum, triisobutylaluminum, and ethylbutylmagnesium, and particularly preferred is triethylaluminum.

It can be also applied to a multistage polymerization method having two or more stages in which polymerization conditions such as hydrogen concentration, the amount of the monomer(s), polymerization pressure, and polymerization temperature are different from each other, without any problem.

The ethylene polymer (A) can be produced by a production process such as a gas-phase polymerization method, a solution polymerization method, or a slurry polymerization method, and preferably, a slurry polymerization method is desirable. The polymerization temperature among the polymerization conditions for the ethylene polymer (A) can be selected from the range of 0 to 200°C. In the slurry polymerization, the polymerization is carried out at a temperature lower than the melting point of the product polymer. The polymerization pressure may be selected from the range of atmospheric pressure to about 10 MPa. The production can be performed by carrying out the slurry polymerization of ethylene and an $\alpha$-olefin in the presence of an inert hydrocarbon solvent selected from aliphatic hydrocarbons such as hexane, heptane, and isobutene, aromatic hydrocarbons such as benzene, toluene, and xylene, alicyclic hydrocarbons such as cyclohexane and methylcyclohexane, in a state that oxygen, water, and the like are substantially absent.

The ethylene polymer (A) may be one obtained by sequential and continuous polymerization in a single polymerization vessel or a plurality of reactors connected in series or in parallel and may be one mixed after a plurality of ethylene polymers are separately polymerized, as long as it satisfies a predetermined range defined in the present invention.

5. Characteristics of Ethylene Polymer (B)

The ethylene polymer (B) of the invention is a homopolymer of ethylene or a copolymer of ethylene and an $\alpha$-olefin having 3 to 12 carbon atoms. A method for producing the homopolymer of ethylene or the copolymer of ethylene and an $\alpha$-olefin having 3 to 12 carbon atoms will be mentioned later.

The ethylene polymer (B) has a density of 0.955 to 0.965 $g/cm^3$, preferably 0.956 to 0.964 $g/cm^3$, and further preferably 0.956 to 0.963 $g/cm^3$. The density can be measured by the same method as in the case of the density (d) of the aforementioned requirement [b].

When the density is less than 0.955 $g/cm^3$, insufficient rigidity of the molded article is made obvious, while when it exceeds 0.965 $g/cm^3$, impact resistance is insufficient.

The adjustment of the density can be, for example, performed by varying the amount of the $\alpha$-olefin to be copolymerized with ethylene, and the density can be decreased by increasing the amount of the $\alpha$-olefin.

The ethylene polymer (B) has an HLMFR of 10 to 100 g/10 minutes, preferably 11 to 80 g/10 minutes, and further preferably 12 to 50 g/10 minutes. HLMFR can be measured by the same method as in the case of the HLMFR of the aforementioned requirement [a].

When HLMFR is less than 10 g/10 minutes, the fluidity is insufficient at the time of molding, and molding becomes in an unstable state, so that the case is not practical. When HLMFR exceeds 100 g/10 minutes, the impact resistance tends to decrease.

The adjustment of HLMFR can be achieved either by varying the amount of the chain transfer agent (hydrogen or the like) that coexists during the ethylene polymerization or by varying polymerization temperature, and HLMFR can be increased by increasing the amount of hydrogen or by raising the polymerization temperature.

In the ethylene polymer (B), an inflection point of elongation viscosity caused by strain hardening is preferably observed in double logarithmic plot of elongation viscosity $\eta(t)$ (unit: Pa·second) measured at a temperature of 170°C and an elongational strain rate of 0.1 (unit: 1/second) and elongation time t (unit: second).

The ethylene polymer (B) of the invention preferably has a long-chain branching structure. When the ethylene polymer (B) has the long-chain branching structure, an inflection point of elongation viscosity caused by strain hardening is observed in the polyethylene of the invention and an effect of improving the moldability thereof is exhibited.

The presence or absence of the inflection point of elongation viscosity caused by strain hardening is observed in the measurement of a degree of strain hardening. With regard to a method for measuring the degree of strain hardening, principally the same value is obtained by any method as long as it can measure uniaxial elongation viscosity and, for example, measurement methods and details of measurement instruments are described in a known literature: Polymer 42 (2001) 8663.

For the measurement of the inflection point of elongation viscosity caused by strain hardening according to the invention, the following may be mentioned as a preferable measurement method and measurement instrument.

For the measurement of the elongation viscosity, specifically, a specimen was prepared by using a capillary rheometer (manufactured by Intesco Co.) at a temperature of 190°C with a capillary of 3 mm$\phi\times$15 mmL and at a piston speed of 20 mm/minute. Then, elongation viscosity was measured using a Melten Rheometer manufactured by Toyo Seiki Seisaku-Sho, Ltd. under the conditions of a pre-heating time of 15 minutes, a temperature of 170°C, and a strain rate of 0.1/s.

Calculation method: as for the elongation viscosity at a temperature of 170°C and a strain rate of 0.1/second, the time t (second) on the axis of abscissa and the elongation viscosity $\eta$ (t) (Pa·second) on the axis of ordinate are plotted in a log-log graph. Incidentally, the presence or absence of the strain hardening is judged whether an inflection point at which the elongation viscosity changes from an upward projecting curve to a downward projecting curve is present or not.

In order to obtain the ethylene polymer (B) having a long-chain branching structure, polymerization is preferably carried out by employing an appropriate polymerization catalyst, which is preferably selected from the polymerization catalysts to be mentioned later.

In the ethylene polymer (B), a melt tension (MT) measured at 210°C is 10 mN or more and 200 mN or less, preferably 20 mN or more and 186 mN or less, and further preferably 30 mN or more and 176 mN or less. When the melt tension is less than 10 mN, draw down at the time of molding becomes large and molding tends to be difficult.

The melt tension is measured under the conditions of a nozzle diameter of 2.095 mm$\phi$, a nozzle length of 8.00 mm, an inflow angle of 180°, a set temperature of 210°C, a piston pushing speed of 10.0 mm/minute, and a take-up speed of 4.0 m/minute, using a capillograph manufactured by Toyo Seiki Seisaku-sho, Ltd.

The melt tension can be adjusted by the amount of long-chain branching contained in the polyethylene and, usually, can be increased by increasing the amount of the long-chain branching.

In the ethylene polymer (B), a molecular weight distribution represented by the ratio of weight-average molecular weight (Mw) to number-average molecular weight (Mn) (Mw/Mn) measured by a GPC method is preferably 5 to 40, further preferably 6 to 35, and further suitably 7 to 30. When the molecular weight distribution (Mw/Mn) is less than 5, draw down resistance tends to be deficient and, when it exceeds 10, mechanical strength tends to decrease.

The measurement of GPC can be conducted in the same manner as in the case of the ethylene polymer (A).

The molecular weight distribution (Mw/Mn) can be mainly controlled within a predetermined range by selecting a polymerization catalyst and polymerization conditions and also can be controlled within a predetermined range by mixing a plurality of components having different molecular weights. As the catalyst, mainly, a chromium catalyst may be mentioned as a preferable catalyst.

In the ethylene polymer (B), HLMFR (unit: g/10 minutes) and the density (d) (unit: g/cm³) preferably satisfies a relation represented by the following equation (ii):

$$d \geq 0.0080 \times \text{Log}_{10}(\text{HLMFR}) + 0.9520 \qquad \text{Equation (ii)}.$$

FIG. 3 is a graph showing a relation between the density (d) and HLMFR of the ethylene polymer (B).

The wavy line in the graph shows a lower limit value of the density (d) of the ethylene polymer (B) specified by the equation (ii).

In the case where the ethylene polymer (B) cannot satisfy equation (ii), there is a concern that the rigidity of the polyethylene of the invention is insufficient.

In order that the ethylene polymer (B) may satisfy the equation (ii), mainly by selecting a polymerization catalyst and polymerization conditions, the predetermined range can be achieved. As the catalyst, mainly, a chromium catalyst may be mentioned as a preferable catalyst.

With regard to the $\alpha$-olefin having 3 or more carbon atoms, in order to satisfy the relation between HLMFR and the density (d) of the equation (ii), the amount of the $\alpha$-olefin at the time of polymerization should be limited. Moreover, since the copolymer of ethylene and the $\alpha$-olefin is inferior in the melt tension as compared with the ethylene homopolymer, the ethylene homopolymer is most desirable.

In the ethylene polymer (B), HLMFR (unit: g/10 minutes) and the melt tension (MT) (unit: mN) satisfy a relation represented by the equation (iii):

$$MT \geq -170 \times \text{Log}_{10}(\text{HLMFR}) + 360 \qquad \text{Equation (iii)}.$$

Moreover, HLMFR (unit: g/10 minutes) and MT (unit: mN) preferably satisfy a relation represented by the equation.

$$MT \geq -140 \times Log_{10}(HLMFR) + 400 \qquad \text{Equation (iv)}.$$

FIG. 4 is a graph showing a relation between HLMFR and the melt tension (MT) of the ethylene polymer (B). The wavy line shows a lower limit value of the melt tension (MT) of the ethylene polymer (B) specified by the equation (iii). In the case where the ethylene polymer (B) cannot satisfy the equation (iii), there is a concern that the moldability of the polyethylene of the invention is insufficient.

In order that the ethylene polymer (B) satisfies the equation (iii), mainly by selecting a polymerization catalyst and polymerization conditions, the predetermined range can be achieved. As the catalyst, mainly, a chromium catalyst may be mentioned as a preferable catalyst.

6. Production Method of Ethylene Polymer (B)

For the ethylene polymer (B) of the invention, it is preferred that ethylene is polymerized in the presence of a chromium catalyst obtained by activation by calcination of a chromium catalyst, especially a chromium compound supported inorganic oxide carrier, in a non-reducing atmosphere to convert at least a part of chromium atoms to hexavalent atoms, subsequently supporting an organoaluminum compound in an inert hydrocarbon solvent, and removing the solvent and drying.

In the case where an ethylene polymer is obtained using an organoaluminum compound-supported chromium catalyst, by decreasing hydrogen addition into the polymerization system, an ethylene polymer having high rigidity and melt tension is obtained, so that ethylene is preferably polymerized in an atmosphere where hydrogen is absent.

Also, in the case where an ethylene polymer is obtained using an organoaluminum compound-supported chromium catalyst, preferably by adding no α-olefin other than ethylene into the polymerization system, an ethylene polymer having high rigidity and melt tension is obtained. Thus, in order to obtain an ethylene polymer having improved melt tension, it is preferred to decrease the amount of the α-olefin to be copolymerized with ethylene.

The chromium catalyst to be used in the polymerization of the ethylene polymer (B) is preferably an organoaluminum compound-supported chromium catalyst. Particularly, a dialkylaluminum alkoxide compound-supported chromium catalyst is preferred, and more preferred is a chromium catalyst prepared by supporting a chromium compound on an inorganic oxide carrier, conducting activation by calcination in a non-reducing atmosphere to convert at least a part of chromium atoms to hexavalent atoms, supporting the dialkylaluminum alkoxide compound in an inert hydrocarbon solvent, and then removing the solvent and drying.

As the chromium catalyst, there may be mentioned one generally known as Phillips catalyst. Summary of the catalyst is described in the literatures: M. P. McDaniel, Advances in Catalysis, Volime 33, Page 47, 1985, Academic Press Inc., M. P. McDaniel, Handbook of Heterogeneous Catalysts, Page 2400, 1977, VCH, M. B. Welch, et al., Handbook of Polyolefins: Synthesis and Properties, Page 21, 1993, Marcel Dekker, and the like.

The inorganic oxide carrier in the chromium catalyst is preferably an oxide of a metal of the group 2, 4, 13 or 14 in the periodic table. Specifically, there may be mentioned magnesia, titania, zirconia, alumina, silica, thoria, silica-titania, silica-zirconia, silica-alumina, and mixtures thereof. Above all, silica, silica-titania, silica-zirconia, and silica-alumina are preferred. In the case of silica-titania, silica-zirconia, and silica-alumina, there is used the inorganic oxide carrier containing titanium, zirconium or aluminum atoms in an amount of from 0.2 to 10% by mass, preferably from 0.5 to 7% by mass, and more preferably from 1 to 5% by mass, as a metal component other than silica.

Production methods, physical properties and characteristics of carriers suitable for these chromium catalysts are described in the literatures: C. E. Marsden, Preparation of Catalysts, Volume V, Page 215, 1991, Elsevier Science Publishers, C. E. Marsden, Plastics, Rubber and Composites Processing and Applications, Volume 21, Page 193, 1994, and the like.

In the present invention, the inorganic oxide carrier is selected so that a specific surface area of the carrier of the chromium catalyst before activation by calcination is 250 to 1,000 m$^2$/g, preferably 300 to 900 m$^2$/g, and more preferably 400 to 800 m$^2$/g. In the case where the specific surface area is less than 250 m$^2$/g, there is a concern that both durability and impact resistance are decreased, although it is considered to be associated with that molecular weight distribution is narrowed and long-chain branching is increased. The carrier having a specific surface area exceeding 1,000 m$^2$/g has a concern that the production becomes difficult.

As pore volume of the inorganic oxide carrier, there is used one having a pore volume of 0.5 to 3.0 cm$^3$/g, preferably 1.0 to 2.0 cm$^3$/g, and more preferably 1.2 to 1.8 cm$^3$/g, similar to the case of the carrier used in general chromium catalysts. When the pore volume is less than 0.5 cm$^3$/g, pores become small by polymerized polymer at the time of polymerization and a monomer cannot diffuse, so that there is a concern that activity is decreased. The carrier having a pore volume exceeding 3.0 cm $cm^3$/g has a concern that the production becomes difficult.

As an average particle size of the inorganic oxide carrier, there is used one having an average particle size of 10 to 200 $\mu$m, preferably 20 to 150 $\mu$m, and more preferably 30 to 100 $\mu$m, similar to the carrier used in general chromium catalysts.

A chromium compound is supported on the inorganic oxide carrier. The chromium compound may be any compound so long as at least a part of chromium atoms are converted to hexavalent atoms by calcining and activating in a non-reducing atmosphere after supporting, and there may be mentioned chromium oxides, halides of chromium, oxyhalides, chromates, bichromates, nitrates, carboxylates, and sulfates of chromium, chromium-1,3-diketo compounds, chromic acid esters, and the like. Specific examples include chromium trioxide, chromium trichloride, chromyl chloride, potassium chromate, ammonium chromate, potassium bichromate, chromium nitrate, chromium sulfate, chromium acetate, chromium tris(2-ethylhexanoate), chromium acetylacetonate, bis(tert-butyl)chromate, and the like. Of those, chromium trioxide, chromium acetate, and chromium acetylacetonate are preferred. Even in the case of using the chromium compound having an organic group, such as chromium acetate or chromium acetylacetonate, the following are known: the organic group moiety burns by activation by calcination in a non-reducing atmosphere described hereinafter; finally, the chromium compound reacts with a hydroxyl group on the surface of the inorganic oxide carrier, similar to the case of using chromium trioxide, at least a part of chromium atoms are converted to hexavalent atoms, and the chromium compound is fixed in the form of a structure of a chromic acid ester (V. J. Ruddick, et al., J. Phys. Chem., Volume 100, Page 11062, 1996; S. M. Augustine, et al., J. Catal., Volume 161, Page 641, 1996).

The chromium compound can be supported on the inorganic oxide carrier by a conventional method such as impregnation, solvent distillation, or sublimation, and an appropriate method can be used depending on the kind of the chromium compound to be used. The amount of the chromium compound to be supported is generally from 0.2 to 2.0% by mass, preferably from 0.3 to 1.7% by mass, and more preferably from 0.5 to 1.5% by mass, in terms of chromium atom, based on the carrier.

After supporting the chromium compound on the carrier, an activation treatment is conducted by calcination. The activation by calcination can be conducted under a non-reducing atmosphere that does not substantially contain moisture, for example, under oxygen or the air. In such a case, an inert gas may coexist. Preferably, the activation by calcination is conducted under flowing state using the air that has been sufficiently dried by the passage through molecular sieves or the like. The activation by calcination is conducted at a temperature of 350 to 900°C, preferably 420 to 850°C, and more preferably 450 to 800°C, for 30 minutes to 48 hours, preferably 1 to 36 hours, and more preferably 2 to 24 hours. By the activation by calcination, at least a part of chromium atoms of the chromium compound supported on the inorganic oxide carrier is oxidized into hexavalent atoms, and the chromium compound is chemically fixed on the carrier. When the activation by calcination is conducted at a temperature lower than 350°C, there is a concern that polymerization activity is lost. On the other hand, when the activation by calcination is conducted at a temperature exceeding 900°C, sintering occurs and there is a concern that activity is decreased.

In the production of the ethylene polymer, before supporting the chromium compound or before the activation by calcination after supporting the chromium compound, ethylene polymerization activity, molecular weight of the ethylene polymer, and molecular weight distribution can be controlled by adding a metal alkoxide or an organometallic compound, represented by a titanium alkoxide such as titanium tetraisopropoxide, a zirconium alkoxide such as zirconium tetrabutoxide, an aluminum alkoxide such as aluminum tributoxide, an organoaluminum such as trialkylaluminum, an organomagnesium such as dialkylmagnesium, or a fluorine-containing salt such as ammonium fluorosilicate.

As for the metal alkoxide or organometallic compound, the organic group moiety burns by the activation by calcination in a non-reducing atmosphere, and those are oxidized into metal oxides such as titania, zirconia, alumina, or magnesia, which are to be contained in the catalyst. In the case of the fluorine-containing salt, the inorganic oxide carrier is fluorinated. These methods are described in the following literatures: C. E. Marsden, Plastics, Rubber and Composites Processing and Applications, Volume 21, Page 193, 1994; T. Pullukat, et al., J. Polym. Sci., Polym. Chem. Ed., Volume 18, Page 2857, 1980; M. P. McDaniel, et al., J. Catal., Volume 82, Page 118, 1983; and the like.

In the invention, it is preferred that a dialkylaluminum alkoxide compound is supported on a chromium catalyst activated by calcining, in an inert hydrocarbon solvent, further the solvent is removed to dry, and the catalyst thus obtained is used as a dialkylaluminum alkoxide compound-supported chromium catalyst.

The dialkylaluminum alkoxide is a compound represented by the following general formula (XI):

$$R^1R^2Al(OR^3) \qquad \text{General formula (XI)}$$

wherein $R^1$, $R^2$, and $R^3$ are each an alkyl group having 1 to 18 carbon atoms and may be the same or different.

Specific examples of the dialkylaluminum alkoxide include dimethylaluminum methoxide, dimethylaluminum ethoxide, dimethylaluminum n-propoxide, dimethylaluminum isopropoxide, dimethylaluminum n-butoxide, dimethylaluminum isobutoxide, dimethylaluminum amyloxide, dimethylaluminum hexyloxide, dimethylaluminum octyloxide, diethylaluminum methoxide, diethylaluminum ethoxide, diethylaluminum n-propoxide, diethylaluminum isopropoxide, diethylaluminum n-butoxide, diethylaluminum isobutoxide, diethylaluminum amyloxide, diethylaluminum hexyloxide, diethylaluminum octyloxide, di-n-propylaluminum methoxide, di-n-propylaluminum ethoxide, di-n-propylaluminum n-propoxide, di-n-propylaluminum isopropoxide, di-n-propylaluminum n-butoxide, di-n-propylaluminum isobutoxide, di-n-propylaluminum amyloxide, di-n-propylaluminum hexyloxide, di-n-propylaluminum octyloxide, di-n-butylaluminum methoxide, di-n-butylaluminum ethoxide, di-n-butylaluminum n-propoxide, di-n-butylaluminum isopropoxide, di-n-butylaluminum n-butoxide, di-n-butylaluminum isobutoxide, di-n-butylaluminum amyloxide, di-n-butylaluminum hexyloxide, di-n-butylaluminum octyloxide, diisobutylaluminum methoxide, diisobutylaluminum ethoxide, diisobutyl aluminum n-propoxide, diisobutylaluminum isopropoxide, diisobutylaluminum n-butoxide, diisobutylaluminum isobutoxide, diisobutylaluminum amyloxide, diisobutylaluminum hexyloxide, diisobutyl aluminum octyloxide, dihexylaluminum methoxide, dihexylaluminum ethoxide, dihexylaluminum n-propoxide, dihexylaluminum isopropoxide, dihexylaluminum n-butoxide, dihexylaluminum isobutoxide, dihexylaluminum amyloxide, dihexylaluminum hexyloxide, dihexylaluminum octyloxide, dioctylaluminum methoxide, dioctylaluminum ethoxide, dioctylaluminum n-propoxide, dioctylaluminum isopropoxide, dioctylaluminum n-butoxide, dioctylaluminum isobutoxide, dioctylaluminum amyloxide, diocylaluminum hexyloxide, dioctylaluminum octyloxide, and the like. Of these, diethylaluminum ethoxide, diethylaluminum n-propoxide, diethylaluminum n-butoxide, di-n-butylaluminum ethoxide, di-n-butylaluminum n-propoxide, di-n-butylaluminum n-butoxide, diisobutylaluminum ethoxide, diisobutylaluminum n-propoxide and diisobutylaluminum n-butoxide are preferred.

The dialkylaluminum alkoxide can be easily synthesized by (i) a method of reacting trialkylaluminum with an alcohol, (ii) a method of reacting dialkylaluminum halide with a metal alkoxide, and the like.

The amount of the dialkylaluminum alkoxide compound to be supported is, as a molar ratio of the organoaluminum compound to the chlorine atom, is 0.1 to 20, preferably 0.3 to 15, and more preferably 0.5 to 10. When the molar ratio exceeds 20, ethylene polymerization activity is decreased as compared with the case that the dialkylaluminum alkoxide compound is not supported, and there is a concern that molecular weight distribution becomes wide and durability is improved, but impact resistance is decreased. The reason for the decrease in activity is not clear, but it is considered that excess dialkylaluminum alkoxide compound bonds to the chromium active site to inhibit the ethylene polymerization reaction.

The method for supporting the dialkylaluminum alkoxide compound is not particularly limited so long as it is a method of bringing a chromium catalyst after activation by calcination, into contact in a liquid phase of an inert hydrocarbon. For example, preferred is a method of mixing the chromium catalyst after activation by calcination with an inert hydrocarbon solvent such as propane, n-butane, isobutene, n-pentane, isopentane, hexane, heptane, octane, decane, cyclohexane, benzene, toluene or xylene to form a slurry state, and adding the dialkylaluminum alkoxide compound to the slurry. The dialkylaluminum alkoxide compound to be added may be diluted with the above inert hydrocarbon solvent, or may be added without dilution. The solvent for dilution and the solvent for supporting may be the same or different.

The amount of the inert hydrocarbon solvent to be used is preferably an amount sufficient to conduct stirring in at least the slurry state at the time of preparing a catalyst. The amount of the solvent to be used is not particularly limited so long as it is such an amount. For example, the solvent can be used in an amount of 2 to 20 g per 1 g of the chromium catalyst after activation by calcination. Moreover, the stirring rate at the time of the supporting reaction is preferably such a rate that stirring is homogeneously conducted in the slurry state.

In the invention, the order of addition of the dialkylaluminum alkoxide compound and the chromium catalyst to the solvent at the time of treating the chromium catalyst with the dialkylaluminum alkoxide compound in an inert hydrocarbon solvent is arbitrary. Specifically, the operation of the supporting reaction of suspending the chromium catalyst in the inert hydrocarbon solvent, adding the dialkylaluminum alkoxide compound to the resulting suspension, and stirring the resulting mixture is preferred.

Moreover, in order to enhance the catalyst activity, it is preferred to add a modified methylaluminoxane (MMAO) or an organomagnesium such as dibutylmagnesium or butylethylmagnesium separately in addition to the dialkylaluminum alkoxide. Of these, MMAO is preferably used for the enhancement of the catalyst activity. As a specific method, the chromium catalyst is suspended in an inert hydrocarbon solvent and MMAO is added thereto. After stirring the whole, an operation of a supporting reaction of adding and stirring the dialkylaluminum compound is preferred.

The supporting reaction temperature is 0 to 150°C, preferably 10 to 100°C, and more preferably 20 to 80°C. The supporting reaction time is 5 minutes to 8 hours, preferably 30 minutes to 6 hours, and more preferably 1 to 4 hours. The organoaluminum compound reacts with chromium atoms in which at least a part thereof have been converted into hexavalent atoms after activation by calcination, and the hexavalent atoms are reduced to chromium atoms having low atomic valence. This phenomenon can be confirmed by the fact that the chromium catalyst after activation by calcination has orange color inherent in hexavalent chromium atom, whereas the chromium catalyst having been subjected to the supporting operation by the organoaluminum compound has green color or bluish green color. That is, it is presumed from the change in color of the chromium catalyst that at least a part of hexavalent chromium atoms is reduced to trivalent or divalent chromium atoms.

In recent years, Terano et al. have measured atomic valence of a Cr atom by X-ray photoelectron spectroscopy after supporting triethylaluminum on an activated chromium catalyst in a heptane solvent and then performing drying, and observed the presence of not only hexavalent chromium atoms, but also divalent, trivalent and heptavalent chromium atoms ( M. Terano, et al., J. Mol. Catal. A: Chemical, Volume 238, Page 142, 2005 ). However, it is said that the proportion of actual polymerization active sites in all Cr atoms is about 10 to 30% (M. P. McDaniel, et al., J. Phys. Chem., Volume 95, Page 3289, 1991), and the conclusion is not reached at this time as to what is the atomic valence of the chromium atom at the polymerization active site. Monoi et al. advocate that a catalyst comprising silica having supported thereon a trialkylchromium complex shows the same polymerization behaviors as Phillips catalyst (T. Monoi, et al., Polym. J., Volume 35, Page 608, 2003), and Espelid et al. advocate that a trivalent chromium atom is the atomic valence of the active site, based on theoretical calculation of activation energy of the ethylene insertion reaction at a model active site of Phillips catalyst (O. Espelid, et al., J. Catal., Volume 195, Page 125, 2000).

It is necessary to quickly remove the solvent after stopping the stirring and completing the supporting operation.

The removal of the solvent is conducted by drying under reduced pressure, and in such a case, filtration can be employed together. The drying under reduced pressure is conducted so as to obtain the organoaluminum compound-supported chromium catalyst as a free-flowing powder. When the catalyst is stored for a long period of time without separating the catalyst from the solvent, the catalyst undergoes deterioration with the passage of time, and ethylene polymerization activity is decreased. Therefore, it is preferred to shorten the contact time with a solvent as far as possible, including the contact time with a solvent in the supporting reaction, and quickly separate and remove the solvent.

The detailed reason why the effect of the increase in the polymerization activity is obtained by quick separation and removal of the solvent is not clear, but it is considered that the reaction between the chromium active site and the organoaluminum compound continues to proceed in the presence of a solvent, and as a result, chromium atoms that have been activated by calcining in a non-reducing atmosphere to convert a part thereof into hexavalent atoms are over-reduced to divalent, monovalent or zerovalent chromium atoms, thereby changing into a catalyst structure that inhibits an ethylene polymerization reaction. However, it is difficult to specifically show an over-reduction state, for example, to show specific number of atomic valence of chromium in the over-reduction state. Alternatively, it is also considered that organoaluminum species that will be formed by the reaction between the dialkylaluminum alkoxide compound and the hexavalent chromium atoms (accurately, chromium oxide chemically bonded to the silanol groups on silica surface) coordinate to the polymerization active site, thereby inhibiting the ethylene polymerization reaction.

The time required to remove the solvent and achieve drying after the completion of the supporting reaction is preferably 3 times or less, more preferably 2 times or less, and particularly preferably 1 time or less the supporting reaction time. The overall time from the initiation of the supporting to the completion of the solvent removal and drying is 5 minutes to 24 hours, preferably 30 minutes to 18 hours, and more preferably 1 to 12 hours.

The organoaluminum compound-supported chromium catalyst after the completion of the drying is preferably in a dry and smooth state with free flowing.

In the case of using the organoaluminum compound and the chromium catalyst in combination, there are considered a method of directly or separately feeding the chromium catalyst and the organoaluminum compound to a reactor in the presence or absence of a diluent solvent, and a method of once premixing or contacting the chromium catalyst with the organoaluminum compound in a solvent, and feeding the mixed slurry to a reactor. However, in any of the methods, continuous production is conducted while separately feeding the chromium catalyst and the organoaluminum compound to the reactor. Therefore, unless the amounts of the chromium catalyst and organoaluminum compound continuously fed and a ratio thereof are accurately adjusted, the polymerization activity and the molecular weight of the resulting polyethylene vary, and it becomes difficult to continuously produce molded articles within the same specification.

In the case of conducting the production of the ethylene polymer using the organoaluminum compound-supported chromium catalyst described above, any method of a liquid phase polymerization method such as slurry polymerization or solution polymerization, or a gas phase polymerization can be employed. The slurry polymerization method is particularly preferred, and both of a slurry polymerization method using a pipe loop type reactor and a slurry polymerization method using an autoclave type reactor can be used. Of these, the slurry polymerization method using a pipe loop type reactor is preferred (the details of a pipe loop type reactor and a slurry polymerization using the same are described in Kazuo Matsuura and Naotaka Mikami, "Technical Handbook for Polyethylene", Page 148, 2001, Kogyo Chosakai Publishing Co., Ltd.).

The liquid phase polymerization method is generally conducted in a hydrocarbon solvent. There is used as a hydrocarbon solvent a single compound of inert hydrocarbons such as propane, n-butane, isobutene, n-pentane, isopentane, hexane, heptane, octane, decane, cyclohexane, benzene, toluene, or xylene, or a mixture thereof. The gas phase polymerization method can employ generally known polymerization methods such as fluidized bed or stirred bed, in the co-presence of an inert gas, and there can be employed a so-called condensing mode in which a medium for removing the heat of polymerization coexists according need.

The polymerization temperature in the liquid phase polymerization method is generally 0 to 300°C, practically 20 to 200°C, preferably 50 to 180°C, and more preferably 70 to 150°C. Catalyst concentration and ethylene concentration in the reactor can be optional concentrations sufficient to make polymerization proceed. For example, the catalyst concentration may range from about 0.0001 to about 5% by mass based on the weight of contents in the reactor in the case of the liquid phase polymerization. Similarly, the ethylene concentration may range from about 1% to about 10% by mass based on the weight of contents in the reactor in the case of the liquid phase polymerization.

As the polymerization method, there can be conducted not only single stage polymerization that produces an ethylene polymer using one reactor but also, in order to improve production amount, multistage polymerization in which at least two reactors are connected. In the case of the multistage polymerization, preferred is two-stage polymerization in which two reactors are connected and a reaction mixture obtained by polymerizing in a first-stage reactor is continuously fed to the subsequent second-stage reactor.

In the case of the liquid phase polymerization method, the polymerization is conducted at a ratio of hydrogen concentration (% by mass) (referred to as Hc in short) in the liquid layer to ethylene concentration (ETc) in the liquid phase Hc/ETc is $1.0 \times 10^{-3}$ or less, preferably $5.0 \times 10^{-4}$ or less, and further preferably under a condition that hydrogen is absent in the liquid phase.

Moreover, in the case of the gas phase polymerization method, the polymerization is conducted at a ratio of hydrogen partial pressure (MPa) (referred to as Hp in short) in the reactor to ethylene partial pressure (ETp) in the reactor Hp/ETp is $1.0 \times 10^{-3}$ or less, preferably $5.0 \times 10^{-4}$ or less, and further preferably under a condition that hydrogen is absent in the liquid phase.

According to the production method of the ethylene polymer (B), an ethylene polymer having a chromium content of 0.1 to 20 mass ppm is preferred, and more preferred is 0.2 to 15 mass ppm. When the chromium content is more than 20 mass ppm, catalyst residue in the ethylene polymer increases to ting the resin with a hue and cleanness of content of the resulting molded article is not maintained, so that the case is not preferred.

7. Polyethylene Containing Ethylene Polymers (A) and (B)

The polyethylene of the invention contains the ethylene polymer (A) and the ethylene polymer (B), and may further contain optional components to be mentioned later within a range where the characteristics [a] to [e] are satisfied at the same time. A compositional ratio of the ethylene polymer (A) to the ethylene polymer (B) is 95 to 5% by mass of the ethylene polymer (B) relative to 5 to 95% by mass of the ethylene polymer (A), preferably 90 to 10% by mass of the ethylene polymer (B) relative to 10 to 90% by mass of the ethylene polymer (A), and further preferably 80 to 20% by mass of the ethylene polymer (B) relative to 20 to 80% by mass of the ethylene polymer (A). When the compositional ratio of the ethylene polymer (A) is less than 5% by mass, in the final resin composition, it is not achieved to control HLMFR within the predetermined range and there is a concern of deterioration in moldability and a decrease in environmental stress cracking resistance owing to a decrease in melt tension. On the other hand, when the compositional ratio of the ethylene polymer (A) exceeds 95% by mass, HLMFR and density of the polyethylene of the invention decrease and there is a concern of a decrease in fluidity and rigidity and also there is a concern of giving a polymer having a decreased balance between rigidity and environmental stress cracking resistance.

8. Other Additives

Into the polyethylene of the invention, the following substances can be blended as the optional components within a range where the characteristics [a] to [e] are satisfied at the same time, in addition to the ethylene polymer (A) and the ethylene polymer (B).

For example, there can be used various ethylene-based polymers such as high density polyethylene, low density polyethylene, high pressure process polyethylene, polar monomer-graft-modified polyethylene, ethylene-based wax, ultrahigh-molecular-weight polyethylene, and ethylene-based elastomers, and modified products thereof. The addition of high density polyethylene is preferred for enhancing rigidity, thermal resistance, impact strength, and the like. The addition of low density polyethylene is preferred for improving flexibility, impact resistance, easy adhering ability, transparency, low-temperature strength, and the like. The addition of high pressure process polyethylene is preferred for enhancing flexibility, easy adhering ability, transparency, low-temperature strength, molding processability, and the like. The addition of the polar monomer-graft-modified polyethylene such as maleic acid-modified polyethylene, an ethylene-acrylic acid derivative copolymer, or ethylene-vinyl acetate copolymer is preferred for improving flexibility, easy adhering ability, coloring ability, affinity to various materials, gas barrier properties, and the like. The addition of ethylene-based wax is preferred for enhancing coloring ability, affinity to various materials, molding processability, and the like. The addition of ultrahigh-molecular-weight polyethylene is preferred for improving mechanical strength, abrasion resistance, and the like. The addition of the ethylene-based elastomer is preferred for enhancing flexibility, mechanical strength, impact strength, and the like.

Moreover, in addition to the above polymers, various resins can be used. Specifically, there may be mentioned various Nylon resins, various polyamides, polyethylene terephthalate (PET), polybutylene terephthalate (PBT), various polyesters, polycarbonate resins, EVOH, EVA, PMMA, PMA, various engineering plastics, polylactic acid and the like, celluloses, natural rubbers, polyurethanes, polyvinyl chloride, fluorine-based resins such as Teflon (registered trademark), inorganic polymers such as silicon resins, and the like.

The polyethylene of the invention can be molded into a desired molded article by various molding machines after pelletized by mechanical melt-mixing by means of a pelletizer, homogenizer, or the like, according to a conventional method.

Further, the polyethylene obtained by the above method may be blended with another olefin-based polymer, rubber, and the like and also known additives such as antioxidants, ultraviolet absorbers, light stabilizers, metal harm inhibitors, lubricants, antistatic agents, antifogging agents, anti-blocking agents, processing aids, coloring pigments, crosslinking agents, foaming agents, inorganic or organic fillers, and flame retardants, according to a conventional method.

As the additives, for example, one or more of antioxidants (phenol-based, phosphorus-based, sulfur-based), lubricants, antistatic agents, light stabilizers, ultraviolet absorbers, metal harm inhibitors, and the like may be appropriately used in combination. As the fillers, it is possible to use calcium carbonate, talc, metal powders (aluminum, copper, iron, lead, etc.), silica, diatomaceous earth, alumina, gypsum, mica, clay, asbestos, graphite, carbon black, titanium oxide, and the like and, of these, it is preferred to use calcium carbonate, talc, mica, and the like. In any cases, the polyethylene resin composition can be blended with various additives according to need and kneaded by a kneading extruder, a Banbury mixer, or the like to form a molding material.

Examples of the antioxidants include monophenol-based ones such as 2,4-dimethyl-6-t-butylphenol, 2,6-di-t-butylphenol, 2,6-di-t-butyl-p-cresol, 2,6-di-t-butyl-4-ethylphenol, 2,4,6-tri-t-butylphenol, 2,5-di-t-butylhydroquinone, butylated hydroxyanisole, n-octadecyl-3-(3',5'-di-t-butyl-4'-hydroxyphenyl)propionate, and stearyl-β-(3,5-di-t-butyl-4-hydroxyphenyl)propionate; bisphenol-based ones such as 4,4'-dihydroxydiphenyl, 2,2'-methylenebis(4-methyl-6-t-butylphenol), 2,2'-methylenebi s(4-ethyl-6-t-butylphenol), 4,4'-methylenebis(2,6-di-t-butylphenol), 4,4'-butylenebis(3-methyl-6-t-butylphenol), and 2,6-bis(2'-hydroxy-3'-t-butyl-5'-methylbenzyl)-4-methylphenol; tri- or further polyphenol-based ones such as 1,1,3-tris(2'-methyl-4'-hydroxy-5'-t-butylphenyl)butane, 1,3,5-trimethyl-2,4,6-tris(3',5'-di-t-butyl-4'-hydroxybenzyl)benzene, tris(3,5-di-t-butyl-4-hydroxyphenyl) isocyanurate, tris[β-(3,5-di-t-butyl-4-hydroxyphenyl)propionyloxyethyl] isocyanurate, and tetrakis[methylene-3-(3',5'-di-t-butyl-4'-hydroxyphenyl)propionate]methane; thiobisphenol-based ones such as 2,2'-thiobis(4-methyl-6-t-butylphenol), 4,4'-thiobis(2-methyl-6-t-butylphenol), and 4,4'-thiobis(3-methyl-6-t-butylphenol); naphthylamine-based ones such as aldol-α-naphthylamine, phenyl-α-naphthylamine, and phenyl-β-naphthylamine; diphenylamine-based ones such as p-isopropoxydiphenylamine; phenylenediamine-based ones such as N,N'-diphenyl-p-phenylenediamine, N,N'-di-β-naphthyl-p-phenylenediamine, N-cyclohexyl-N'-phenyl-p-phenylenediamine, and N-isopropyl-N'-phenyl-p-phenylenediamine; and the like. Of these, monophenol-based, bisphenol-based, tri or further polyphenol-based, and thiobisphenol-based ones are preferred.

Specific examples of the light stabilizers and the ultraviolet absorbers include 4-t-butylphenyl salicylate, 2,4-dihydroxybenzophenone, 2,2'-dihydroxy-4-methoxybenzophenone, ethyl-2-cyano-3,3'-diphenylacrylate, 2-ethylhexyl-2-cyanao-3,3'-diphenylacrylate, 2(2'-hydroxy-3'-t-butyl-5'-methylphenyl)-5-chlorobenzotriazole, 2(2'-hydroxy-3,5-di-t-butylphenyl)benzotriazole, 2(2'-hydroxy-5'-methylphenyl)benzotriazole, 2-hydroxy-5-chlorobenzophenone, 2-hydroxy-4-methoxybenzophenone-2-hydroxy-4-octoxybenzophenone, 2(2'-hydroxy-4-octoxyphenyl)benzotriazole, monoglycol salicylate, oxalic acid amide, phenyl salicylate, 2,2',4,4'-tetrahydroxybenzophenone, and the like.

As the metal harm inhibitors, hydrazide derivatives, oxalic acid derivatives, salicylic acid derivatives, and the like may be mentioned.

As the hydrazide derivative metal harm inhibitors, there may be mentioned N,N'-diacetyladipic acid dihydrazide, adipic acid bis(α-phenoxypropionyl hydrazide), terephthalic acid bis(α-phenoxypropionylhydrazide), sebacic acid bis(α-phenoxypropionylhydrazide), isophthalic acid bis(β-phenoxypropionyl hydrazide), and the like; as the oxalic acid derivative metal harm inhibitors, there may be mentioned N,N'-dibenzal(oxalyl dihydrazide), N-benzal-(oxalyl dihydrazide), oxalyl bis-4-methylbenzylidenehydrazide, oxalyl bis-3-ethoxybenzylidenehydrazide, and the like; and as the salicylic acid derivative metal harm inhibitors, 3-(N-salicyloyl)amino-1,2,4-triazole, and decamethylenedicarboxylic acid disalicyloylhydrazide.

In the invention, a preferable metal harm inhibitor is a salicylic acid derivative metal harm inhibitor.

The amount of the stabilizer to be added is not particularly limited but is preferably 0.001 to 5 parts by mass, further preferably 0.001 to 3 parts by mass relative to 100 parts by mass of the polyethylene. When the amount is less than 0.001 parts by mass, a sufficient stabilization effect is not obtained, while when it exceeds 5 parts by mass, an influence of coloration and the like occurs and molding failure tends to occur, so that an effect that meets the increase of the amount is not obtained and the case becomes non-economical.

The stabilizer in the polyethylene can be measured using fluorescent X-ray analysis, gas chromatography, or liquid chromatography.

9. Molding of Polyethylene

From the polyethylene of the invention, various molded bodies can be produced by various molding methods.

Preferably, it is molded mainly by a hollow molding method or the like and suitably, various molded articles such as hollow containers are obtained.

The blow molded articles from the polyethylene of the invention can be produced by an extrusion blow molding method using a conventionally known multilayer hollow molding machine without particular limitation. For example, after heating and melting the constituent resin of each layer with a plurality of extruders, molten parison is extruded by dies of multilayer, then the parison is sandwiched between molds, and air is blown into the inside of the parison, thereby producing a multilayered blow molded article.

Moreover, since the polyethylene of the invention is excellent in molding processability, there are provided, as products, tanks such as fuel tanks, kerosene cans, drum cans, containers for chemicals, containers for agricultural chemicals, containers for solvents, and various plastic bottles. As other use applications, there may be mentioned various pipes for gas and water and sewerage, films, laminates, coatings, fibers, injection molded bodies, compressive injection molded bodies, rotational molded bodies, or extrusion molded bodies for foods and daily goods, and the like.

Moreover, since the polyethylene obtained in the invention has a characteristic of wide molecular weight distribution and is excellent in compatibility with the other ethylene-based polymers, the polyethylene can be also used in the product uses mentioned above not only as a single material but also as a blend material with the other polyethylene for tension improvement.

Since the polyethylene of the invention satisfies the above characteristics, molded bodies using the same are excellent in environmental stress cracking resistance and impact resistance, thin, light in weight, and excellent in rigidity and thermal resistance, and also, compatibility of the resin components is high, surface properties of the molded bodies are excellent, and appearance thereof is particularly satisfactory. Moreover, molding can be conducted more thinly and more lightly in weight, crystallization speed is high, high-speed moldability is excellent, high cycle molding is possible, and pinch-off characteristics are satisfactory.

Therefore, the polyethylene is suitable for use applications such as containers, which require such characteristics. For example, it can be also suitably used in use applications such as fuel tanks for automobiles, other cosmetic containers, containers for detergents, shampoos, and rinses, or containers for foods such as edible oil.

10. Molded Body

The blow molded article of the polyethylene (blow plastic molded article) of the present invention has a structure having at least one layer of the polyethylene, and preferably a multilayered structure. Also, the molded article may have a single layer structure composed of the polyethylene of the invention. In the case where the blow molded article has a multilayered structure, the molded article preferably has a permeation-reducing blocking layer, and a barrier layer is generally used as the permeation-reducing blocking layer.

When the layer structure of the blow molded article of the invention has two or more layers, the innermost layer and the outermost layer are preferably composed of the polyethylene of the invention.

The blow molded article of the invention preferably has a multilayered structure containing a permeation-reducing blocking layer in which at least one layer of a barrier layer is present to reduce permeation of volatile substances and the barrier layer is composed of a polar blocking polymer. For example, in the case of a plastic fuel tank, when the wall of the tank is formed to have a multilayered structure, there is an advantage that the barrier layer (the layer itself does not have sufficient moldability and mechanical strength) can be fixed between two layers composed of the polyethylene of the invention. As a result, particularly during coextrustion blow molding, the moldability of a material having two layers or more of the polyethylene of the invention is improved by mainly receiving an influence of improved moldability of the polyethylene of the invention. Furthermore, the improved performance of the polyethylene of the invention gives very important influence on mechanical strength of a material, and hence it becomes possible to remarkably increase the strength of the blow molded article of the invention.

Furthermore, in the blow molded article, the surface of the polyethylene resin layer of the invention may be covered with a base layer by a treatment such as fluorination, surface covering or plasma polymerization.

The blow molded article is preferably a blow molded article having a 4 kinds and 6 layers structure, which comprises an innermost layer, an adhesive layer, a barrier layer, an adhesive layer, a regrind layer, and an outermost layer laminated in the order from the inside. By sandwiching the barrier layer with the adhesive layers, high barrier properties are exhibited. By the presence of the regrind layer between the outermost layer and the adhesive layer, there are exhibited effects of reducing costs through reduction of raw material costs and maintaining the rigidity of the blow molded article.

The following will describe constitution of each layer and layer constitution ratios in the above embodiment in detail.

(1) Outermost layer

A resin constituting the outermost layer of the blow molded article is preferably the polyethylene of the invention.

(2) Innermost layer

A resin constituting the innermost layer of the blow molded article is preferably the polyethylene of the invention, and may be the same as the resin constituting the outermost layer or may be different from the resin.

(3) Barrier layer

A resin forming the barrier layer of the blow molded article is selected from an ethylene vinyl alcohol resin, a polyamide resin, a polyethylene terephthalate resin, a polybutylene terephthalate resin, and the like, but the resin is particularly preferably composed of an ethylene vinyl alcohol resin. The ethylene vinyl alcohol resin has a degree of saponification of preferably 93% or more, more preferably 96% or more, and has an ethylene content of preferably 25 to 50% by mol.

(4) Adhesive layer

A resin forming the adhesive layer of the blow molded article is selected from a high density polyethylene graft-modified with an unsaturated carboxylic acid or a derivative thereof, a low density polyethylene, and a linear low density polyethylene. The resin is particularly preferably composed of a high density polyethylene graft-modified with an unsaturated carboxylic acid or a derivative thereof.

The content of the unsaturated carboxylic acid or a derivative thereof is preferably 0.01 to 5% by mass, more preferably 0.01 to 3% by mass, and further preferably 0.01 to 1% by mass. When the content of the unsaturated carboxylic acid or a derivative thereof is less than 0.01% by mass, sufficient adhesive performance is not exhibited, while when it exceeds 5% by mass, an unsaturated carboxylic acid that does not contribute to adhesiveness adversely affects adhesiveness.

(5) Regrind layer

A resin forming the regrind layer of the blow molded article is a composition containing the polyethylene resin forming the outermost layer, the polyethylene resin forming the innermost layer, the resin forming the barrier layer, and the resin forming the adhesive layer.

Each component of the resins forming the regrind layer can use fresh material. Furthermore, unnecessary portions such as scraps, burr, and the like of a multilayered laminate containing each layer composed of each of the resins are recovered and reutilized, and such recycled products can be used as a raw material of each component. For example, a regrind resin obtained by crushing a blow molded article (e.g., fuel tank product for automobiles, and the like) once formed, used and utilized may be mentioned. In the case of using molded burr generated at the time of preparing a multilayered laminate or unused parison as a recycled material, compatibility of various components may be sometimes decreased, so that a compatibilizer or the resin constituting the adhesive layer may further be mixed.

(6) Layer Constitution Ratio of Blow molded article

The blow molded article is not limited in the thickness constitution of each layer but, in the thickness ratio, the outermost layer is 10 to 30%, the innermost layer is 20 to 50%, the barrier layer is 1 to 15%, the adhesive layer is 1 to 15%, and the regrind layer is 30 to 60% (provided that the total of all the layer thickness constitution ratios is 100%).

The layer constitution ratio of the outermost layer is preferably 10 to 30%, more preferably 10 to 25%, and further preferably 10 to 20%, relative to the layer thickness of the blow molded article. When the layer constitution ratio of the outermost layer is less than 10%, impact performance is deficient, and when it exceeds 30%, molding stability of the blow molded article tends to be impaired.

The layer constitution ratio of the innermost layer is preferably 20 to 50%, more preferably 35 to 50%, and further preferably 40 to 50%, relative to the layer thickness of the blow molded article. When the layer constitution ratio of the innermost layer is less than 20%, deficiency in rigidity of the blow molded article becomes apparent, and when it exceeds 50%, molding stability of the blow molded article tends to be impaired.

The layer constitution ratio of the barrier layer is preferably 1 to 15%, more preferably 1 to 10%, and further preferably 1 to 5%, relative to the layer thickness of the blow molded article. When the layer constitution ratio of the barrier layer is less than 1%, barrier performance is unsatisfactory, and when it exceeds 15%, impact performance tends to be deficient.

The layer constitution ratio of the adhesive layer is preferably 1 to 15%, more preferably 1 to 10%, and more preferably 1 to 5%, relative to the layer thickness of the blow molded article. When the layer constitution ratio of the adhesive layer is less than 1%, adhesive performance is unsatisfactory, and when it exceeds 15%, deficiency in rigidity of the blow molded article tends to become apparent.

The layer constitution ratio of the regrind layer is preferably 30 to 60%, more preferably 35 to 50%, and further preferably 35 to 45%. When the layer constitution ratio of the regrind layer is less that 30%, molding stability of the hollow plastic material is impaired, and when it exceeds 60%, impact performance tends to be deficient.

11. Use Applications and the like of Blow molded articles

As the use applications of the blow molded article, there may be, for example, mentioned fuel tanks for automobiles, various fuel tanks, kerosene cans, drum cans, containers for chemicals, containers for agricultural chemicals, containers for solvents, and various plastic bottles, and the like.

The polyethylene of the invention is excellent in moldability and impact resistance and also has an excellent balance between rigidity and durability, as mentioned above. Therefore, even when it is molded as a material of a blow molded article, especially a multilayered structure containing a barrier layer, strength deterioration, insufficient molding, and the like caused by the barrier layer does not adversely affect the polyethylene layer and the barrier properties are also excellent. Accordingly, the polyethylene is suitable for fuel tanks for automobiles, for which light weight and high impact resistance are required.

Examples

The following will describe the present invention more specifically with reference to Examples, but the invention should not be construed as being limited to these Examples unless it exceeds the gist.

1. Various Evaluation (Measurement) Methods

(1) Melt Flow Rate (HLMFR) Measured at Temperature of 190°C and Load of 21.6 kg

It was measured in accordance with JIS K6922-2:1997.

(2) Density (d)

It was measured in accordance with JIS K7112:2004.

(3) Flexural Modulus

It was measured in accordance with JIS K7171:2008.

(4) Melt Tension (MT)

It was measured under the conditions of a nozzle diameter of 2.095 mm$\phi$, a nozzle length of 8.00 mm, an inflow angle of 180°, a set temperature of 210°C, a piston pushing speed of 10.0 mm/minute, and a take-up speed of 4.0 m/minute, using a capillograph manufactured by Toyo Seiki Seisaku-sho, Ltd.

(5) Temperature at Maximum Peak Position Measured by Differential Scanning Calorimeter (DSC)

Here, the measurement of the temperature at maximum peak position by a differential scanning calorimeter (DSC) was performed using DSC-7 model manufactured by Perkin-Elmer Corp. That is, about 5 mg of a sample of the ethylene polymer was charged into an aluminum pan, temperature was raised to 200°C at a rate of 10 (°C/minute) and kept at that temperature for 5 minutes, thereafter, temperature was lowered to room temperature at a rate of 10 (°C/minute), an endothermic curve was measured while again raising the temperature at a rate of 10 (°C/minute), and a temperature at the position showing a maximum peak was determined.

(6) Critical Shear Rate

It was measured in accordance with JIS K7199:1999 (ISO 11443:1995).

It was measured at 190°C using a capillary having a diameter (D) of 5 mm, a ratio (L/D) of a length (L) to the diameter of 2, using a capillary rheometer manufactured by INTESCO Co., Ltd.

(7) Charpy Impact Strength Measured at -40°C

It was measured at -40°C by preparing a specimen of type 1 and cooling it in a constant-temperature bath, a hitting direction being edgewise and the type of a notch being type A (0.25 mm), in accordance with JIS K-7111(2004).

(8) Failure time (T) in Full notch creep test

I accordance with JIS K-6992-2(2004), after a sheet having a thickness of 5.9 mm was compression-molded, a specimen having a shape and a size of a section "Nominal diameter 50" shown in FIG. 2 of Annex 5 (definition) of JIS K-6992-2(2004) was prepared and a full notch creep test (FNCT) was performed in pure water at 80°C. Tensile loads were 88N, 98N, and 108N and the number of test items was 2 per each load. From the resulting 6-point plotting of the failure time and nominal stress in the log-log scale, the failure time at a nominal stress of 6 MPa determined by a least squares method was used as an index of the creep resistance.

(9) Molecular Weight Measurement by GPC Method

Measurement was performed under the conditions shown below and a ratio of weight-average molecular weight to number-average molecular weight was determined. A universal calibration curve was prepared with monodisperse polystyrenes and calculation was conducted as molecular weight of a linear polyethylene.

Apparatus: Alliance GPC V2000 model manufactured by WATERS Co.
Columns: two columns of HT-806M and one column of HT-G manufactured by Showa Denko K.K.
Measurement temperature: 145°C
Concentration: 1 mg/1 ml
Solvent: o-dichlorobenzene

Incidentally, the calculation of the molecular weight and the calibration of the column can be carried out in accordance with the following methods.
GPC chromatogram data are incorporated into a computer at a frequency of 1 point/second and data processing is performed according to the description of "Size Exclusion Chromatography", Chapter 4, written by Sadao Mori, published by Kyoritsu Shuppan Co., Ltd. Thus, Mw and Mn values can be calculated. The conversion of a measured retention volume into a molecular weight was performed using a calibration curve with standard polystyrenes, the curve being prepared in advance.

(10) Inflection Point of Elongation viscosity

It was measured under the following conditions.

Apparatus: a Melten Rheometer manufactured by Toyo Seiki Seisaku-Sho, Ltd.
Measurement temperature: 170°C
Strain rate: 0.1/second

Preparation of specimen: it was prepared through extrusion using a capillary rheometer manufactured by Intesco Co. at a temperature of 190°C with a capillary of 3 mm$\phi$×15 mmL at a piston speed of 20 mm/minute.
Calculation method: as for the elongation viscosity at a temperature of 170°C and a strain rate of 0.1/second, the time t (second) on the axis of abscissa and the elongation viscosity $\eta$ (t) (Pa. second) on the axis of ordinate were plotted in a log-log graph. Incidentally, the presence or absence of strain hardening was judged whether an inflection point at which the elongation viscosity changes from an upward projecting curve to a downward projecting curve was present or not.

(11) Rough-Surface Resistance

A fuel tank for automobiles was hollow-molded and one where surface of the molded article was smooth was ranked as "O" and one where it was not smooth was ranked as "×".

(12) Draw-Down Resistance

A fuel tank for automobiles was hollow-molded, draw down and wall-thickness homogeneity of a parison were evaluated. One where both properties were satisfactory was ranked as "O" and one where molding failure occurred or molding failure was not observed but wall-thickness distribution was relatively large was ranked as "×".

(13) Drop Impact Resistance

A fuel tank for automobiles was hollow-molded, an antifreezing solution was fully poured therein, the whole was cooled to -40°C and vertically dropped onto a concrete surface, and the presence or absence of liquid spill was judged. One where liquid spill was not observed when the tank was dropped from a height of 9 m was ranked as "O" and one where the tank was broken and liquid spill was observed when it was dropped from a height of 9 m was ranked as "×".

(14) Heat Resistance/Pressure Resistance

A fuel tank for automobiles was hollow-molded and the tank was subjected to an internal pressure/heat resistance test at an internal pressure of 0.05 MPa and 60°C. After the passage of 1,000 hours, one where perforation, cracking, and/or the like were not generated was ranked as "O" and one where perforation, cracking, and/or the like were generated was ranked as "×".

(15) Deformation Resistance against Internal Pressure

A fuel tank for automobiles was hollow-molded and the tank was subjected to a deformation resistance test against internal pressure at an internal pressure of 0.05 MPa and 60°C. After the passage of 500 hours, one where deformation was not large after the pressure was removed and temperature was returned to ordinary temperature was ranked as "O" and one where deformation was remarkably large was ranked as "×".

(16) Overall Evaluation

The above-described rough surface, draw-down resistance, drop impact resistance, heat resistance/pressure resistance, and deformation resistance against internal pressure were evaluated and one which was satisfactory in all items was ranked as "O" and the other was ranked as "×".

2. Preparation of Materials to be Used

[Synthesis of Catalyst Component (A)]

According to the method disclosed in Example 3 of JP-A-2009-96907, dimethylsilylene-bis f 1,1'-[2-(2-(5-methyl)furyl)-4-(4-t-butyl)phenyl-indenyl]}zirconium dichloride was synthesized as a catalyst component (A).

(1) Synthesis of 4-(4-t-butylphenyl)-indene

To a 1,000 ml glass-made reaction vessel were added 40 g (0.19 mol) of 1-bromo-4-t-butyl-benzene and 400 ml of dimethoxyethane (DME), the whole was cooled to -70°C on a dry ice-methanol bath. Thereto was added dropwise 260 ml (0.38 mol) of a 1.46 mol/L t-butyllithium-pentane solution. After the dropwise addition, the whole was stirred for 5 hours while the temperature was gradually returned to room temperature. It was again cooled to -70°C on the dry ice-methanol bath and 100 ml of a DME solution containing 46 ml (0.20 mol) of triisopropyl borate was added dropwise thereto. After the dropwise addition, the whole was stirred overnight while gradually returning the temperature to room temperature.

To the reaction solution was added 100 ml of distilled water, and after stirring for 30 minutes, an aqueous solution of 50 g of sodium carbonate and 150 ml of distilled water, 30 g (0.15 mol) of 4-bromoindene, and 5 g (4.3 mmol) of tetrakis(triphenylphosphino)palladium were added thereto in the order. Then, low-boiling-point components were removed, followed by heating at 80°C for 5 hours.

The reaction solution was poured into 1 L of ice-water, extraction with ether was conducted from the resulting mixture three times, and the ether layer was washed with a saturated sodium chloride solution until neutral. Sodium sulfate was added thereto and the whole was allowed to stand overnight to dry the reaction solution. Anhydrous sodium sulfate was filtrated off, the solvent was removed by distillation under reduced pressure, and purification was conducted on a silica gel column to obtain 37 g (yield 98%) of 4-(4-t-butylphenyl)-indene as a pale yellow liquid.

(2) Synthesis of 2-bromo-4-(4-t-butylphenyl)-indene

To a 1,000 ml glass-made reaction vessel were added 37 g (0.15 mol) of 4-(4-t-butylphenyl)-indene, 400 ml of dimethylsulfoxide (DMSO), and 11 ml of distilled water, and 35 g (0.20 mol) of N-bromosuccinimide was gradually added thereto, followed by stirring at room temperature for 1 hour as it was.
The reaction solution was poured into 1 L of ice-water and extraction with toluene was conducted from the resulting mixture three times. The toluene layer was washed with a saturated sodium chloride solution, 4.3 g (22 mmol) of p-toluenesulfonic acid was added in a 1,000 ml glass-made reaction vessel, and the whole was heated and refluxed for 2 hours while removing water.
The reaction solution was transferred to a separating funnel and washed with a sodium chloride solution until neutral. Sodium sulfate was added thereto and the whole was allowed to stand overnight to dry the reaction solution. Anhydrous sodium sulfate was filtrated off, the solvent was removed by distillation under reduced pressure, and purification was conducted on a silica gel column to obtain 46 g (yield 95%) of 2-bromo-4-(4-t-butylphenyl)-indene as a pale yellow solid.

(3) Synthesis of 2-(2-(5-methylfuryl))-4-(4-t-butylphenyl)-indene

To a 1,000 ml glass-made reaction vessel were added 13.8 g (0.17 mol) of methylfuran and 400 ml of DME, and the whole was cooled to -70°C on a dry ice-methanol bath. Thereto was added dropwise 111 ml (0.17 mol) of a 1.52 mol/L n-butyllithium-hexane solution. After the dropwise addition, the whole was stirred for 3 hours while gradually returning the temperature to room temperature. It was again cooled to -70°C on the dry ice-methanol bath and 100 ml of a DME solution containing 41 ml (0.18 mol) of triisopropyl borate was added dropwise thereto. After the dropwise addition, the whole was stirred overnight while gradually returning the temperature to room temperature.
To the reaction solution was added 50 ml of distilled water, and after stirring for 30 minutes, an aqueous solution of 54 g of sodium carbonate and 100 ml of distilled water, 46 g (0.14 mol) of 2-bromo-4-(4-t-butylphenyl)-indene, and 5 g (4.3 mmol) of tetrakis(triphenylphosphino)palladium were added thereto in the order. Then, the whole was heated while removing low-boiling-point components, followed by heating at 80°C for 3 hours.
The reaction solution was poured into 1 L of ice-water, extraction with ether was conducted from the resulting mixture three times, and the ether layer was washed with a saturated sodium chloride solution until neutral. Sodium sulfate was added thereto and the whole was allowed to stand overnight to dry the reaction solution. Anhydrous sodium sulfate was filtrated off, the solvent was removed by distillation under reduced pressure, purification was conducted on a silica gel column, and recrystallization was performed from hexane to obtain 30.7 g (yield 66%) of 2-(2-(5-methylfuryl))-4-(4-t-butylphenyl)-indene as colorless crystals.

(4) Synthesis of dimethylbis(2-(2-(5-methylfuryl))-4-(4-t-butylphenyl)-indenyl)silane

To a 1,000 ml glass-made reaction vessel were added 22 g (66 mmol) of 2-(2-(5-methylfuryl))-4-(4-t-butylphenyl)-indene and 200 ml of THF, and the whole was cooled to -70°C on a dry ice-methanol bath. Thereto was added dropwise 42 ml (67 mmol) of a 1.60 mol/L n-butyllithium-hexane solution. After the dropwise addition, the whole was stirred for 3 hours while gradually returning the temperature to room temperature. It was again cooled to -70°C on the dry ice-methanol bath, 0.3 ml (3.8 mmol) of 1-methylimidazole was added, and 100 ml of a THF solution containing 4.3 g (33 mmol) of dimethyldichlorosilane was added dropwise thereto. After the dropwise addition, the whole was stirred overnight while gradually returning the temperature to room temperature.
Distilled water was added to the reaction solution, which was transferred to a separating funnel and washed with a sodium chloride solution until neutral. Sodium sulfate was added thereto and the whole was allowed to stand overnight to dry the reaction solution. Anhydrous sodium sulfate was filtrated off, the solvent was removed by distillation under reduced pressure, and purification was conducted on a silica gel column to obtain 22 g (yield 92%) of dimethylbis(2-(2-(5-methylfuryl)-4-(4-t-butylphenyl)-indenyl)silane as a pale yellow solid.

(5) Synthesis of dimethylsilylenebis{1,1'-[2-(2-(5-methyl)furyl)-4-(4-t-butyl)phenyl-indenyl]}zirconium dichloride

To a 300 ml glass-made reaction vessel were added 11 g (16 mmol) of dimethylbis(2-(2-(5-methylfuryl))-4-(4-t-butylphenyl)-indenyl)silane and 200 ml of diethyl ether, and the whole was cooled to -70°C on a dry ice-methanol bath. Thereto was added dropwise 20 ml (32 mmol) of a 1.60 mol/L n-butyllithium-hexane solution. After the dropwise addition, the temperature was returned to room temperature and the whole was stirred for 3 hours. The solvent of the reaction solution was removed by distillation under reduced pressure, 200 ml of toluene and 10 ml of diethyl ether were added and the whole was cooled to -70°C on a dry ice-methanol bath. Thereto was added 3.7 g (16 mmol) of zirconium tetrachloride. Thereafter, the whole was stirred overnight while gradually returning the temperature to room temperature.

The solvent was removed by distillation under reduced pressure and recrystallization was performed from dichloromethane/hexane to obtain 1.3 g (yield 9%) of racemic body (purity 99% or more) of dimethylsilylenebis{1,1'-[2-(2-(5-methyl)furyl)-4-(4-t-butyl)phenyl-indenyl]}zirconium dichloride (catalyst component (A)) as yellowish orange crystals.

$^1$H-NMR value (CDCl$_3$) racemic body: $\delta$ 1.14 (s, 6H), $\delta$ 1.33 (s, 18H), $\delta$ 2.41 (s, 6H), $\delta$ 6.05 (d, 2H), $\delta$ 6.27 (d, 2H), $\delta$ 6.80 (dd, 2H), $\delta$ 6.92 (d, 2H), $\delta$ 7.08 (s, 2H), $\delta$ 7.31 (d, 2H), $\delta$ 7.44 (d, 4H), $\delta$ 7.58 (d, 4H).

[Preparation of Metallocene Catalyst (M-1)]

To 17 ml of toluene were added 8.5 ml (25 mmol) of a toluene solution of methylalumoxane (manufactured by Albemarle Co., Al concentration: 2.93 mol/L) and 105 mg of dimethylsilylenebis{1,1'-[2-(2-(5-methyl)furyl)-4-(4-t-butyl)phenyl-indenyl]}zirconium dichloride (catalyst component (A)), and the whole was stirred at room temperature for 30 minutes under light shielding to obtain a catalyst component solution.

Then, the above catalyst component solution was added to 5.0 g of SiO$_2$ (manufactured by GRACE Co., Sylopol 2212, average particle diameter: 12 $\mu$) calcined at 600°C for 8 hours under a nitrogen atmosphere, followed by stirring at 40°C for 1 hour. Thereafter, vacuum drying was conducted while maintaining a temperature of 40°C, to obtain a metallocene catalyst (M-1).

[Production of Ethylene Polymer (A-1)]

To an autoclave having an internal volume of 1.5 L, which was substituted with nitrogen, were added 1 mmol of tributylaluminum, 2 ml of a 2% hexane solution of STADIS 450, and 0.9 ml of 1-hexene, followed by introduction of 800 ml of isobutene. The internal temperature of the autoclave was raised to 80°C, 70 ml of hydrogen was added thereto, and ethylene was introduced so that ethylene partial pressure reached 1.0 MPa. Then, 27 mg of the metallocene catalyst (M-1) was introduced into the autoclave to initiate polymerization. During the polymerization, ethylene was additionally added at 80°C so as to maintain an ethylene partial pressure of 1.0 MPa. Moreover, in order to keep hydrogen concentration constant during the polymerization, the hydrogen concentration at the vapor phase part of the autoclave was measured and the polymerization was continued while appropriately adding hydrogen additionally. Furthermore, 1-hexene was continuously supplied in a ratio of 2% by mass of the additionally added ethylene. After 2 hours, the reaction was stopped by purging the internal pressure of the autoclave and isobutene.

As a result, 260 g of a polymer was recovered. Also, the average molar ratio of hydrogen/ethylene at the vapor phase part during the polymerization was 0.17%. As a result of physical property evaluation, the resulting ethylene polymer showed the following: HLMFR was 0.5 g/10 minutes, density was 0.9262 g/cm$^3$, Mw was 310,000, and Mw/Mn was 3.41.

[Production of Ethylene Polymers (A-2) to (A-13)]

In accordance with the aforementioned production method of the ethylene polymer (A-1), ethylene polymers (A-2) to (A-13) having properties shown in Table 1 were produced.

[Preparation of Chromium Catalyst (C-1)]

Fifteen grams of "Catalyst-1" having a chromium atom-supported amount of 1.1% by mass, a specific surface area of 500 m$^2$/g, and a pore volume of 1.5 cm$^3$/g (manufactured by W. R. Grace Co.) was placed in a quartz glass tube having a diameter of 5 cm fitted with a perforated plate. It was set on a cylindrical electric furnace for calcination and fluidized with an air that was allowed to pass through molecular sieves, and activation by calcination was conducted at a linear velocity of 6 cm/s at 500°C for 18 hours. There was obtained an orange chromium catalyst component which showed that it contained hexavalent chromium atom.

In a 100 ml flask previously substituted with nitrogen was placed 2 g of the chromium catalyst component, and 30 ml of hexane purified by distillation was added to form a slurry. Then, 2.1 ml of a 1.0 mol/L hexane solution of diethylaluminum ethoxide manufactured by Tosoh Finechem Corporation was added thereto (molar ratio of Al/Cr=5), followed by stirring at 40°C for 1 hour. After the completion of the stirring, the solvent was immediately removed under reduced pressure to obtain a chromium catalyst (C-1).

[Production of Ethylene Polymer (B-1)]

Into a 2.0 L autoclave thoroughly substituted with nitrogen were charged 100 mg of the aforementioned chromium catalyst (C-1) and 0.8 L of isobutene, and internal temperature was raised to 110°C. While keeping ethylene partial pressure at 1.0 MPa, polymerization was conducted so that catalyst productivity reached 3,000 g-polymer/g-catalyst. Then, the polymerization was terminated by releasing the content gas to the outside of the system. As a result of physical property evaluation, the resulting ethylene polymer showed the following: HLMFR was 36 g/10 minutes, density was 0.9640 $g/cm^3$, Mw was 27.0, and Mw/Mn was 18.3. FIG. 3 and FIG. 4 show a relation between the density (d) and HLMFR of the ethylene polymer (B-1) and a relation between HLMFR and the melt tension (MT), respectively.

[Production of Ethylene Polymers (B-2) to (B-16)]

In accordance with the aforementioned production method of the ethylene polymer (B-1), ethylene polymers (B-2) to (B-16) having properties shown in Table 2 were produced. FIG. 3 and FIG. 4 show a relation between the density (d) and HLMFR of the ethylene polymers (B-2) to (B-16) and a relation between HLMFR and the melt tension (MT) thereof, respectively.

[Example 1]

[Production and Evaluation of Polyethylene]

A polyethylene composition was produced by adding 500 ppm of IRGANOX 1010 manufactured by BASF Japan Co. and 1,500 ppm of IRGAFOS 168 manufactured by BASF Japan Co. to the ethylene polymer (A-1) and the ethylene polymer (B-1) in a ratio shown in Table 3 and melt-mixing them under condition of a kneading temperature of 210°C and a screw rotation speed of 40 rpm, using a LABO PLASTOMILL manufactured by Toyo Seiki Seisaku-sho, Ltd.
Table 5 and FIG. 2 show physical properties and evaluation results of the polyethylene composition. The obtained polyethylene composition showed satisfactory compatibility of individual components, had excellent moldability, excellent hollow moldability owing to appropriate fluidity and high melt tension, and mechanical properties such as a balance between density and environmental stress cracking properties and impact resistance.

[Example 2] to [Example 11]

Operations were conducted in the same manner as in Example 1 except that the composition was changed to that shown in Table 3. Table 5 and FIG. 1 and FIG. 2 show physical properties and evaluation results of the polyethylene compositions. The obtained polyethylene compositions showed satisfactory compatibility of individual components and had excellent moldability, excellent hollow moldability owing to appropriate fluidity and high melt tension, and excellent mechanical properties such as a balance between density and environmental stress cracking resistance and impact resistance.

[Comparative Example 1] to [Comparative Example 19]

Operations were conducted in the same manner as in Example 1 except that the composition was changed to that shown in Table 4. Table 6 and FIG. 1 and FIG. 2 show physical properties and evaluation results of the polyethylene compositions.

[Table 1]

| | | | A-1 | A-2 | A-3 | A-4 | A-5 | A-6 | A-7 | A-8 | A-9 | A-10 | A-11 | A-12 | A-13 |
|---|---|---|---|---|---|---|---|---|---|---|---|---|---|---|---|
| Physical properties | Polymerization catalyst | | Metallo-cene | Metallo-cene | Metallo-cene | Metallo-cene | Metallo-cene | Metallo-cene | Metallo-cene | Metallo-cene | Ziegler | Metallo-cene | Ziegler | Ziegler | Metallo-cene |
| | HLMFR | g/10 minutes | 0.5 | 1.1 | 0.3 | 1.0 | 0.1 | 2.0 | 2.0 | 0.02 | 0.5 | 1.0 | 0.1 | 0.1 | 0.5 |
| | Density | g/cm³ | 0.9262 | 0.9190 | 0.9162 | 0.9251 | 0.9258 | 0.9200 | 0.9200 | 0.9350 | 0.9380 | 0.9250 | 0.9380 | 0.9271 | 0.9190 |
| | Mw/Mn | - | 3.4 | 4.8 | 3.1 | 3.6 | 3.2 | 3.7 | 3.7 | 1.6 | 9.2 | 3.4 | 4.6 | 4.5 | 2.7 |
| | Tm | °C | 119.4 | 117.2 | 116.4 | 119.4 | 118.2 | 117.2 | 117.2 | 127.4 | 127.2 | 117.2 | 129.2 | 125.3 | 119.2 |
| | Right side value of Equation (D) | - | 120.5 | 117.6 | 116.5 | 120.0 | 120.3 | 118.0 | 118.0 | 124.0 | 125.2 | 120.0 | 125.2 | 120.8 | 117.6 |
| | Conformity | - | O | O | O | O | O | O | O | × | × | O | × | × | × |

[Table 2]

| | | | B-1 | B-2 | B-3 | B-4 | B-5 | B-6 | B-7 | B-8 | B-9 | B-10 | B-11 | B-12 | B-13 | B-14 | B-15 | B-16 |
|---|---|---|---|---|---|---|---|---|---|---|---|---|---|---|---|---|---|---|
| Polymerization catalyst | | | Chro-mium | Chro-mium | Chro-mium | Chro-mium | Chro-mium | Chro-mium | Chro-mium | Chro-mium | Chro-mium | Metallo-cene | Ziegler | Ziegler | Chro-mium | Ziegler | Chro-mium | Chro-mium |
| Physical properties | HLMFR [MFR in ( )] | g/10 minutes | 36 | 19 | 39 | 95 | 38 | 5.5 | 50 | 160 | 5.4 | 30 | (20) | (55) | 50 | (30) | 50 | 31 |
| | Density | g/cm³ | 0.9613 | 0.9601 | 0.9626 | 0.9621 | 0.9604 | 0.9490 | 0.9600 | 0.9620 | 0.9448 | 0.9580 | 0.9660 | 0.9680 | 0.9602 | 0.9670 | 0.9603 | 0.9602 |
| | Mw/Mn | - | 18.3 | 18.0 | 12.3 | 18.7 | 10.2 | 22.0 | 9.8 | 16.7 | 14.8 | 3.2 | 5.8 | 7.3 | 9.8 | 5.8 | 9.8 | 8.0 |
| | Inflection point of elongation viscosity | - | present | present | present | present | present | present | present | present | present | absent | absent | absent | present | absent | present | present |
| | MT | mN | 108 | 167 | 137 | 39 | 127 | 216 | 49 | 78 | 196 | 29 | 39 | 29 | 49 | 29 | 49 | 69 |

Table 3]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Ethylene polymer (A) | Polymerization catalyst | - | Metallocene | Metallocene | Metallocene | Metallocene | Metallocene | Metallocene | Metallocene | Metallocene | Metallocene | Metallocene | Metallocene |
| | | | A-1 | A-2 | A-3 | A-1 | A-1 | A-1 | A-1 | A-4 | A-4 | A-1 | A-5 |
| | HLMFR | g/10 minutes | 0.5 | 1.1 | 0.3 | 0.5 | 0.5 | 0.5 | 0.5 | 1.0 | 1.0 | 0.5 | 0.1 |
| | Density | g/cm$^3$ | 0.9262 | 0.9190 | 0.9162 | 0.9262 | 0.9262 | 0.9262 | 0.9262 | 0.9251 | 0.9251 | 0.9262 | 0.9258 |
| | Mw/Mn | | 3.4 | 4.8 | 3.1 | 3.4 | 3.4 | 3.4 | 3.4 | 3.6 | 3.6 | 3.4 | 3.2 |
| | Tm | °C | 119.4 | 117.2 | 116.4 | 119.4 | 119.4 | 119.4 | 119.4 | 119.4 | 119.4 | 119.4 | 118.2 |
| | Right side value of Equation (D) | - | 120.5 | 117.6 | 116.5 | 120.5 | 120.5 | 120.5 | 120.5 | 120.0 | 120.0 | 120.5 | 120.3 |
| | Coformity | - | O | O | O | O | O | O | O | O | O | O | O |
| | Compositional ratio | % by mass | 30 | 20 | 20 | 25 | 30 | 25 | 37 | 40 | 28 | 35 | 24 |
| Ethylene polymer (B) | Polymerization catalyst | - | Chromium | Chromium | Chromium | Chromium | Chromium | Chromium | Chromium | Chromium | Chromium | Chromium | Chromium |
| | | | B-1 | B-2 | B-2 | B-1 | B-1 | B-3 | B-4 | B-1 | B-1 | B-4 | B-5 |
| | HLMFR | g/10 minutes | 36 | 19 | 19 | 36 | 36 | 39 | 95 | 36 | 36 | 95 | 38 |
| | Density | (g/cm$^3$ | 0.9613 | 0.9601 | 0.9601 | 0.9613 | 0.9613 | 0.9626 | 0.9621 | 0.9613 | 0.9613 | 0.9621 | 0.9604 |
| | Mw/Mn | | 18.3 | 18.0 | 18.0 | 18.3 | 18.3 | 12.3 | 18.7 | 18.3 | 18.3 | 18.7 | 10.2 |
| | Inflection point of elongation viscosity | - | present | present | present | present | present | present | present | present | present | present | present |
| | MT | mN | 108 | 167 | 167 | 108 | 108 | 137 | 39 | 108 | 108 | 39 | 127 |
| | Compositional ratio | % by mass | 70 | 80 | 80 | 75 | 70 | 75 | 60 | 60 | 70 | 62 | 75 |

EP 3 438 183 B1

37

[Table 4]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|---|---|---|---|---|---|---|---|---|---|---|---|
| Ethylene polymer (A) | Polymerization catalyst | - | - | Metallocene | Metallocene | Metallocene | Metallocene | Metallocene | - | Metallocene | Ziegler | Metallocene | Metallocene | Metallocene | Ziegler | Metallocene | Ziegler | Metallocene | Metallocene | Metallocene | Metallocene |
| | | | - | A-6 | A-1 | A-1 | A-7 | A-1 | - | A-8 | A-9 | A-1 | A-1 | A-10 | A-11 | A-1 | A-12 | A-1 | A-1 | A-1 | A-13 |
| | HLMFR | g/10 minutes | - | 2.0 | 0.5 | 0.5 | 2.0 | 0.5 | - | 0.02 | 0.5 | 0.5 | 0.5 | 1.0 | 0.1 | 0.5 | 0.1 | 0.5 | 0.5 | 0.5 | 0.5 |
| | Density | g/cm³ | - | 0.9200 | 0.9262 | 0.9262 | 0.9200 | 0.9262 | - | 0.9350 | 0.9380 | 0.9262 | 0.9262 | 0.9250 | 0.9380 | 0.9262 | 0.9271 | 0.9262 | 0.9262 | 0.9262 | 0.9190 |
| | Mw/Mn | - | - | 3.7 | 3.4 | 3.4 | 3.7 | 3.4 | - | 1.6 | 9.2 | 3.4 | 3.4 | 3.4 | 4.6 | 3.4 | 4.5 | 3.4 | 3.4 | 3.4 | 2.7 |
| | Tm | °C | - | 117.2 | 119.4 | 119.4 | 117.2 | 119.4 | - | 127.4 | 127.2 | 119.4 | 119.4 | 117.2 | 129.2 | 119.4 | 125.3 | 119.4 | 119.4 | 119.4 | 119.2 |
| | Right side value of Equation (D) | - | - | 118.0 | 120.5 | 120.5 | 118.0 | 120.5 | - | 124.0 | 125.2 | 120.5 | 120.5 | 120.0 | 125.2 | 120.5 | 120.8 | 120.5 | 120.5 | 120.5 | 117.6 |
| | Conformity | - | - | O | O | O | O | O | - | × | × | O | O | O | × | O | × | O | O | O | × |
| | Compositional ratio | % by mass | - | 25 | 30 | 35 | 25 | 25 | - | 23 | 50 | 40 | 45 | 35 | 48 | 25 | 30 | 30 | 30 | 25 | 25 |
| Ethylene polymer (B) | Polymerization catalyst | - | Chromium | Chromium | Chromium | Chromium | Chromium | Chromium | Chromium | Metallocene | Ziegler | Chromium | Chromium | Chromium | Ziegler | Chromium | Ziegler | Chromium | Chromium | Chromium | Chromium |
| | | | B-6 | B-2 | B-7 | B-7 | B-8 | B-7 | B-9 | B-10 | B-11 | B-1 | B-1 | B-1 | B-12 | B-13 | B-14 | B-4 | B-15 | B-16 | B-4 |
| | HLMFR [MFR in ( )] | g/10 minutes | 5.5 | 19 | 50 | 50 | 160 | 50 | 5.4 | 30 | (20) | 36 | 36 | 36 | (55) | 50 | (30) | 95 | 50 | 31 | 95 |
| | Density | g/cm³ | 0.9490 | 0.9601 | 0.9600 | 0.9600 | 0.9620 | 0.9600 | 0.9448 | 0.9580 | 0.9660 | 0.9613 | 0.9613 | 0.9613 | 0.9680 | 0.9602 | 0.9670 | 0.9621 | 0.9603 | 0.9602 | 0.9621 |
| | Mw/Mn | - | 22.0 | 18.0 | 9.8 | 9.8 | 16.7 | 9.8 | 14.8 | 3.2 | 5.8 | 18.3 | 18.3 | 18.3 | 7.3 | 9.8 | 5.8 | 18.7 | 9.8 | 8.0 | 18.7 |
| | Inflection point of elongation viscosity | - | present | present | present | present | present | present | present | absent | absent | present | present | present | absent | present | absent | present | present | present | present |
| | MT | mN | 216 | 108 | 49 | 49 | 78 | 49 | 196 | 29 | 39 | 108 | 108 | 108 | 29 | 49 | 29 | 39 | 49 | 69 | 39 |
| | Compositional ratio | % by mass | 100 | 75 | 70 | 65 | 75 | 75 | 100 | 77 | 50 | 60 | 55 | 65 | 52 | 75 | 70 | 70 | 70 | 75 | 75 |

[Table 5]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Polyethylene | HLMFR | g/10 minutes | 4.5 | 5.7 | 4.3 | 5.3 | 5.2 | 9.5 | 4.8 | 5.4 | 4.2 | 4.2 | 4.8 |
| | Density | g/cm³ | 0.9513 | 0.9554 | 0.9524 | 0.9527 | 0.9518 | 0.9540 | 0.9511 | 0.9511 | 0.9512 | 0.9510 | 0.9513 |
| | Flexural modulus | MPa | 1256 | 1381 | 1286 | 1311 | 1284 | 1349 | 1201 | 1251 | 1211 | 1204 | 1224 |
| | MT | mN | 167 | 186 | 216 | 147 | 167 | 176 | 196 | 157 | 147 | 157 | 147 |
| | Critical shear rate | sec⁻¹ | >106 | >106 | >106 | >106 | 106 | >106 | 24 | 14 | 24 | 14 | 14 |
| | Charpy impact strength | kJ/m² | 10 | 34 | 32 | 14 | 23 | 10 | 20 | 17 | 22 | 32 | 27 |
| | Failure time | h | 141 | 50 | 500 | 27 | 105 | 12 | 221 | 100 | 200 | 209 | 178 |
| | Left side value of Equation (A) | - | 2.15 | 1.70 | 2.70 | 1.43 | 2.02 | 1.08 | 2.34 | 2.00 | 2.30 | 2.32 | 2.25 |
| | Right side value of Equation (A) | - | 1.88 | 0.45 | 1.49 | 1.39 | 1.70 | 0.94 | 1.95 | 1.95 | 1.91 | 1.98 | 1.74 |
| Evaluation | Conformity of Equation (A) | - | O | O | O | O | O | O | O | O | O | O | O |
| | Moldability (rough surface) | - | O | O | O | O | O | O | O | O | O | O | O |
| | Moldability (draw-down resistance) | - | O | O | O | O | O | O | O | O | O | O | O |
| | Drop | - | O | O | O | O | O | O | O | O | O | O | O |
| | Heat resistance/pressure resistance | - | O | O | O | O | O | O | O | O | O | O | O |
| | Deformation by internal pressure | - | O | O | O | O | O | O | O | O | O | O | O |
| | Overall evaluation | - | O | O | O | O | O | O | O | O | O | O | O |

[Table 6]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|---|---|---|---|---|---|---|---|---|---|---|---|
| | HLMFR | g/10 minutes | 5.5 | 6.0 | 6.0 | 4.6 | 20.1 | 7.2 | 5.4 | 5.6 | 6.3 | 3.0 | 2.8 | 4.8 | 5.4 | 5.7 | 5.5 | 10.0 | 6.2 | 6.6 | 17.0 |
| Polyethylene | Density | g/cm³ | 0.9490 | 0.9505 | 0.9500 | 0.9483 | 0.9553 | 0.9508 | 0.9448 | 0.9537 | 0.9515 | 0.9460 | 0.9450 | 0.9460 | 0.9520 | 0.9517 | 0.9504 | 0.9510 | 0.9511 | 0.9517 | 0.9534 |
| | Flexural modulus | MPa | 1148 | 1210 | 1208 | 1124 | 1380 | 1233 | 1050 | 1335 | 1273 | 1050 | 1043 | 1077 | 1272 | 1261 | 1256 | 1251 | 1249 | 1259 | 1340 |
| | MT | mN | 216 | 196 | 137 | 137 | 74 | 108 | 196 | 118 | 122 | 186 | 235 | 196 | 137 | 137 | 137 | 137 | 162 | 134 | 108 |
| | Critical shear rate | sec⁻¹ | 106 | >160 | 1.34 | 1.34 | >106 | 14 | >106 | 0.03 | 2.7 | 7 | 2.7 | 24 | 2.7 | 7 | 14 | 106 | 7 | 1.34 | >160 |
| | Charpy impact strength | kJ/m² | 10 | 30 | 32 | 26 | 8 | 23 | 9 | 40 | 27 | 32 | 33 | 24 | 18 | 31 | 29 | 10 | 22 | 27 | 6 |
| | Failure time | h | 70 | 65 | 70 | 450 | 106 | 48 | 96 | 137 | 59 | 1,600 | 2,000 | 1,650 | 600 | 339 | 137 | 180 | 56 | 34 | 9 |
| | Left side value of Equation (A) | - | 1.85 | 1.81 | 1.85 | 2.65 | 2.03 | 1.68 | 1.98 | 2.14 | 1.77 | 3.20 | 3.30 | 3.22 | 2.78 | 2.53 | 2.14 | 2.26 | 1.75 | 1.53 | 0.95 |
| | Right side value of Equation (A) | - | 2.68 | 2.16 | 2.33 | 2.92 | 0.48 | 2.05 | 4.14 | 1.04 | 1.81 | 3.72 | 4.07 | 3.72 | 1.63 | 1.74 | 2.19 | 1.98 | 1.95 | 1.74 | 1.14 |
| Evaluation | Conformity of Equation (A) | - | × | × | × | O | O | × | × | O | × | × | × | × | O | O | × | O | × | × | × |
| | Moldability (rough surface) | - | O | O | × | × | O | O | O | × | × | × | × | O | × | × | O | O | O | × | O |
| | Moldability (draw-down resistance) | - | O | O | × | × | × | × | O | × | × | O | O | O | × | × | × | × | O | × | × |
| | Drop | - | O | O | O | O | × | O | O | O | O | O | O | O | O | O | O | O | O | O | O |
| | Heat resistance/pressure resistance | - | × | × | × | O | O | × | × | O | × | × | × | × | O | O | × | O | × | × | × |
| | Deformation by internal pressure | - | × | O | O | × | O | O | × | O | O | × | × | × | O | O | O | O | O | O | O |
| | Overall evaluation | - | × | × | × | × | × | × | × | × | × | × | × | × | × | × | × | × | × | × | × |

3. Evaluation

With reference to the experimental results shown in Tables 1 to 6, the Experimental results will be explained.
Since HLMFR was 4.2 to 9.5 g/10 minutes, it was shown that the polyethylenes of Examples 1 to 11 were satisfactory in molding stability.
Since the density (d) was 0.9500 to 0.9554 g/cm$^3$, the polyethylenes of Examples 1 to 11 and Comparative Examples 2, 3, 5, 6, 8, 9, and 13 to 19 were excellent in the balance between rigidity and durability and the evaluation results of deformation resistance against internal pressure were also satisfactory. On the other hand, the polyethylenes of Comparative Examples 1, 4, 7, and 10 to 12 showed results of relatively low density of 0.9450 to 0.9490 and it was shown that the evaluation results of deformation resistance against internal pressure were low and rigidity was deficient.
Since the melt tension (MT) measured at 210°C was 147 mN or more, it was shown that the polyethylenes of Examples 1 to 11 and Comparative Examples 1, 2, 7, 10 to 12, and 17 were excellent in draw-down resistance and no inconvenience occurred at molding. On the other hand, the polyethylenes of Comparative Examples 3 to 6, 8, 9, 13 to 16, 18, and 19 had a melt tension (MT) of only 137 mN or less and exhibited a result that the draw-down resistance was also low.
The polyethylenes of Examples 1 to 11 and Comparative Examples 1, 2, 5 to 7, 12, 15, 16, and 19 had a critical shear rate of 14 sec$^{-1}$ or more, the critical shear rate being measured at 190°C using a capillary having a diameter (D) of 5 mm and a ratio of length (L) to diameter (L/D) of 2, and no problem occurred also at the evaluation of rough-surface resistance. On the other hand, the polyethylenes of Comparative Examples 3, 4, 8 to 11, 13, 14, 17, and 18 exhibited a critical shear rate of 7 sec$^{-1}$ or less and the surfaces of the molded articles did not become smooth.
The polyethylenes of Examples 1 to 11 and Comparative Examples 1 to 4 and 6 to 18 had a Charpy impact strength measured at -40°C of 9 or more, and no liquid spill occurred even in the drop impact resistance test. On the other hand, the polyethylenes of Comparative Examples 5 and 19 had such low Charpy impact strength measured at -40°C as 8 and 6, respectively, and since the tank was broken in the drop impact resistance test and liquid spill occurred, so that the impact resistance is not sufficient.
In the polyethylenes of Examples 1 to 11 and Comparative Examples 4, 5, 8, 13, 14, and 16, the failure time (T) (unit: hour) in a full notch creep test and the density (unit: g/cm$^3$) satisfied the relation shown in the above equation (A) and deformation was little even in the test of the deformation resistance against internal pressure, so that high durability was exhibited. On the other hand, the polyethylenes of Comparative Examples 1 to 3, 6, 7, 9 to 12, 15, and 17 to 19 did not conform the above equation (A) and also in the test of the deformation resistance against internal pressure, deformation was large and thus they exhibited a result of insufficient durability.
The polyethylene of the present invention has an excellent balance between rigidity and durability and is excellent in moldability and impact resistance. The blow molded article using the same (blow plastic molded article) has similar satisfactory properties, can be used as containers, bottles, cans, tanks, and the like. Especially, the polyethylene can provide a material useful as a material for hollow plastic products such as fuel tanks for automobiles, so that it is industrially extremely useful.

**Claims**

1. A polyethylene, which comprises, as an essential component, one or two or more ethylene polymers selected from the group consisting of a homopolymer of ethylene and a copolymer of ethylene and an α-olefin having 3 to 12 carbon atoms, and has the following characteristics [a], [b], [c], [d], and [e]:

    [a] a melt flow rate (HLMFR) measured at a temperature of 190°C and a load of 21.6 kg is 1 to 15 g/10 minutes,
    [b] a density (d) is 0.950 to 0.965 g/cm$^3$,
    [c] a melt tension (MT) measured at 210°C is 147 mN or more,
    [d] a critical shear rate measured at 190°C using a capillary having a diameter (D) of 5 mm and a ratio (L/D) of a length (L) to the diameter of 2, is 10 sec$^{-1}$ or more, and
    [e] a Charpy impact strength measured at -40°C is 9 kJ/m$^2$ or more,
    wherein the polyethylene comprises, as an essential component, 5 to 95% by mass of an ethylene polymer (A) having a density (d) of 0.910 to 0.930 g/cm$^3$ and an HLMFR of 0.1 to 3.0 g/10 minutes and an ethylene polymer (B) having a density (d) of 0.955 to 0.965 g/cm$^3$ and an HLMFR of 10 to 100 g/10 minutes,
    wherein the ethylene polymer (B) has a melt tension (MT) of 10 to 200 mN, and
    wherein, in the ethylene polymer (B), HLMFR (unit: g/10 minutes) and the melt tension (MT) (unit: mN) satisfy a relation represented by the following equation (iii):

$$MT \geq -170 \times \text{Log}_{10}(\text{HLMFR}) + 360 \quad \text{Equation (iii)},$$

wherein the compositional ratio of the ethylene polymer (A) to the ethylene polymer (B) is 95 to 5% by mass of the ethylene polymer (B) relative to 5 to 95% by mass of the ethylene polymer (A).

2. The polyethylene according to claim 1, which further has the following characteristic [f]:
[f] a failure time (T) (unit: hour) in a full notch creep test and the density (d) (unit: $g/cm^3$) satisfy a relation represented by the following equation (A):

$$\log_{10} T \geq -348.6 \times d + 333.5 \ ... \ \text{Equation (A)}.$$

3. The polyethylene according to claim 1, wherein the ethylene polymer (A) has a molecular weight distribution of 1 to 10, the molecular weight distribution being represented by a ratio of weight-average molecular weight (Mw) to number-average molecular weight (Mn) (Mw/Mn) measured by gel permeation chromatographic (GPC) method.

4. The polyethylene according to claim 1 or 3, wherein, in the ethylene polymer (A), a temperature (Tm) (°C) at maximum peak position on an endothermic curve measured by a differential scanning calorimeter (DSC) and the density (d) satisfy a relation represented by the following equation (D):

$$Tm < 400 \times d - 250 \ ... \ \text{Equation (D)}.$$

5. The polyethylene according to any one of claims 1, 3, or 4, wherein, in the ethylene polymer (B), an inflection point of elongation viscosity caused by strain hardening is observed in double logarithmic plot of elongation viscosity $\eta(t)$ (unit: Pa·second) measured at a temperature of 170°C and an elongational strain rate of 0.1 (unit: 1/second) and elongation time t (unit: second).

6. The polyethylene according to any one of claims 1, or 3 to 5, wherein the ethylene polymer (B) has a molecular weight distribution (Mw/Mn) of 5 to 40.

7. A blow molded article comprising a layer containing the polyethylene according to any one of claims 1 to 6.

8. The blow molded article according to claim 7, which is at least one selected from the group consisting of fuel tanks, kerosene cans, drum cans, containers for chemicals, containers for agricultural chemicals, containers for solvents, and plastic bottles.

**Patentansprüche**

1. Polyethylen, das als eine essentielle Komponente ein oder zwei oder mehr Polymere, ausgewählt aus der Gruppe, bestehend aus einem Homopolymer von Ethylen und einem Copolymer von Ethylen und einem $\alpha$-Olefin mit 3 bis 12 Kohlenstoffatomen, umfasst und die folgenden Eigenschaften [a], [b], [c], [d] und [e] aufweist:

[a] ein Schmelzflussindex (HLMFR), gemessen bei einer Temperatur von 190°C und einer Last von 21,6 kg beträgt 1 bis 15 g/10 min,
[b] eine Dichte (d) beträgt 0,950 bis 0,965 $g/cm^3$,
[c] eine Schmelzspannung (MT), gemessen bei 210°C, beträgt 147 mN oder mehr,
[d] eine kritische Schergeschwindigkeit, gemessen bei 190°C unter Verwendung einer Kapillare mit einem Durchmesser (D) von 5 mm und einem Verhältnis (L/D) einer Länge (L) zum Durchmesser von 2, beträgt 10 $sek^{-1}$ oder mehr und
[e] eine Charpy-Schlagzähigkeit, gemessen bei -40°C, beträgt 9 $kJ/m^2$ oder mehr,
wobei das Polyethylen als eine essentielle Komponente 5 bis 98 Masse-% eines Ethylenpolymers (A) mit einer Dichte von 0,910 bis 0,930 $g/cm^3$ und einem HLMFR von 0,1 bis 3,0 g/10 Minuten und ein Ethylenpolymer (B) mit einer Dichte (d) von 0,955 bis 0,965 $g/cm^3$ und einem HLMFR von 10 bis 100 g/10 Minuten umfasst,
wobei das Ethylenpolymer (B) eine Schmelzspannung (MT) von 200 mN und
wobei bei dem Ethylenpolymer (B) HLMFR (Einheit: g/10 Minuten) und die Schmelzspannung (MT) (Einheit:

mN) eine durch die folgende Gleichung (iii) dargestellte Beziehung erfüllen:

$$MT \geq -170 \times Log_{10}(HLMFR) + 360 \qquad Gleichung\ (iii)$$

wobei das Zusammensetzungsverhältnis von Ethylenpolymer (A) zu Ethylenpolymer (B) 95 bis 5 Masse-% des Ethylenpolymers (B), relativ zu 5 bis 95 Masse-% des Ethylenpolymers (A), beträgt.

2. Polyethylen gemäß Anspruch 1, das ferner die folgende Eigenschaft [f] aufweist:
   [f] eine Zeitspanne bis zum Ausfall (T) (Einheit: Stunde) in einem Full Notch Creep-Test und eine Dichte (d) (Einheit: g/cm$^3$) erfüllen eine durch die folgende Gleichung (A) dargestellte Beziehung:

$$log_{10}T \geq -348,6 \times d + 333,5 \qquad Gleichung\ (A).$$

3. Polyethylen gemäß Anspruch 1, wobei das Ethylenpolymer (A) eine Molekulargewichtsverteilung von 1 bis 10 aufweist, wobei die Molekulargewichtsverteilung durch ein Verhältnis von gewichtsgemittelten Molekulargewichts (Mw) zu zahlengemittelten Molekulargewicht (Mn) (Mw/Mn), gemessen durch ein Gelpermeationschromatographie (GPC)-Verfahren, dargestellt wird.

4. Polyethylen gemäß Anspruch 1 oder 3, wobei bei dem Ethylenpolymer (A) eine Temperatur (TM) (°C) bei einer maximalen Peakposition in einer endothermen Kurve, gemessen durch ein Differenzkalorimeter (DSC), und die Dichte (d) eine durch die folgende Gleichung (D) dargestellte Beziehung erfüllen:

$$Tm < 400 \times d - 250 \qquad Gleichung\ (D).$$

5. Polyethylen gemäß einem der Ansprüche 1, 3 oder 4, wobei bei dem Ethylenpolymer (B) ein Wendepunkt der Dehnviskosität, verursacht durch Dehnungshärtung, in einer doppeltlogarithmischen Auftragung der Dehnviskosität $\eta(t)$ (Einheit: Pa·Sekunde), gemessen bei einer Temperatur von 170°C und einer Dehngeschwindigkeit von 0,1 (Einheit: 1/Sekunde) und einer Dehnzeit t (Einheit: Sekunde), beobachtet wird.

6. Polyethylen gemäß einem der Ansprüche 1 oder 3 bis 5, wobei das Ethylenpolymer (B) eine Molekulargewichtsverteilung (Mw/Mn) von 5 bis 40 aufweist.

7. Blasformteil, umfassend eine Schicht, die das Polyethylen gemäß einem der Ansprüche 1 bis 6 enthält.

8. Blasformteil gemäß Anspruch 7, das mindestens eines, ausgewählt aus der Gruppe, bestehend aus Kraftstofftanks, Kerosinbehälter, Fässer, Behälter für Chemikalien, Behälter für Agrarchemikalien, Behälter für Lösungsmittel und Kunststoffflaschen, ist.


**Revendications**

1. Polyéthylène, qui comprend, en tant que composant essentiel, un ou deux polymères d'éthylène ou plus sélectionnés dans le groupe consistant en un homopolymère d'éthylène et un copolymère d'éthylène et une $\alpha$-oléfine ayant 3 à 12 atomes de carbone, et présente les caractéristiques [a], [b], [c], [d] et [e] suivantes :

   [a] un indice de fluidité à l'état fondu (HLMFR) mesuré à une température de 190 °C et une charge de 21,6 kg est de 1 à 15 g/10 minutes,
   [b] une masse volumique (d) est de 0,950 à 0,965 g/cm$^3$,
   [c] une tension à l'état fondu (MT) mesurée à 210 °C est de 147 mN ou plus,
   [d] un taux critique de cisaillement mesuré à 190 °C en utilisant un capillaire présentant un diamètre (D) de 5 mm et un rapport (L/D) d'une longueur (L) sur le diamètre de 2, est de 10 sec$^{-1}$ ou plus, et
   [e] une résistance aux chocs Charpy mesurée à -40 °C est de 9 kJ/m$^2$ ou plus,
   dans lequel le polyéthylène comprend, en tant que composant essentiel, 5 à 95 % en masse d'un polymère d'éthylène (A) présentant une masse volumique (d) de 0,910 à 0,930 g/cm$^3$ et un HLMFR de 0,1 à 3,0 g/10 minutes et un polymère d'éthylène (B) présentant une masse volumique (d) de 0,955 à 0,965 g/cm$^3$ et un HLMFR de 10 à 100 g/10 minutes,

dans lequel le polymère d'éthylène (B) présente une tension à l'état fondu (MT) de 10 à 200 mN, et

dans lequel, dans le polymère d'éthylène (B), le HLMFR (unité : g/10 minutes) et la tension à l'état fondu (MT) (unité : mN) satisfont à une relation représentée par l'équation (iii) suivante :

$$MT \geq -170 \times Log_{10}(HLMFR) + 360 \qquad \text{Équation (iii),}$$

dans lequel le rapport de composition du polymère d'éthylène (A) par rapport au polymère d'éthylène (B) est de 95 à 5 % en masse du polymère d'éthylène (B) par rapport à 5 à 95 % en masse du polymère d'éthylène (A).

2. Polyéthylène selon la revendication 1, qui présente en outre la caractéristique [f] suivante :

[f] une durée (T) avant défaillance (unité : heure) dans un test de fluage à entaille complète et la masse volumique (d) (unité : g/cm$^3$) satisfont à une relation représentée par l'équation (A) suivante :

$$\log_{10}T \geq -348,6 \times d + 333,5 \ldots \text{Équation (A).}$$

3. Polyéthylène selon la revendication 1, dans lequel le polymère d'éthylène (A) présente une répartition de poids moléculaires de 1 à 10, la répartition de poids moléculaires étant représentée par un rapport du poids moléculaire moyen en poids (Mw) sur le poids moléculaire moyen en nombre (Mn) (Mw/Mn) mesuré par un procédé de chromatographie par perméation sur gel (GPC).

4. Polyéthylène selon la revendication 1 ou la revendication 3, dans lequel, dans le polymère d'éthylène (A), une température (Tm) (°C) à la position du pic maximal sur une courbe endothermique mesurée par un calorimètre à balayage différentiel (DSC) et la masse volumique (d) satisfont à une relation représentée par l'équation (D) suivante :

$$Tm < 400 \times d - 250 \ldots \text{Équation (D).}$$

5. Polyéthylène selon l'une quelconque des revendications 1, 3, ou 4, dans lequel, dans le polymère d'éthylène (B), un point d'inflexion de la viscosité à l'allongement provoqué par écrouissage est observé sur un double tracé logarithmique de la viscosité à l'allongement $\eta(t)$ (unité : Pa-seconde) mesurée à une température de 170 °C et une vitesse de déformation par allongement de 0,1 (unité : 1/seconde) et d'un temps d'allongement t (unité : seconde).

6. Polyéthylène selon l'une quelconque des revendications 1, ou 3 à 5, dans lequel le polymère d'éthylène (B) présente une répartition de poids moléculaires (Mw/Mn) de 5 à 40.

7. Article moulé par soufflage comprenant une couche contenant le polyéthylène selon l'une quelconque des revendications 1 à 6.

8. Article moulé par soufflage selon la revendication 7, qui est au moins un sélectionné dans le groupe consistant en les réservoirs de carburant, les bidons de kérosène, les barils, les contenants pour produits chimiques, les contenants pour produits chimiques agricoles, les contenants pour solvants, et les bouteilles en plastique.

# FIG. 1

CRITICAL SHEAR RATE vs MT

# FIG. 2

d vs FNCT

## FIG. 3

ETHYLENE POLYMER (B) HLMFR AND DENSITY

## FIG. 4

ETHYLENE POLYMER (B) HLMFR AND MT

## REFERENCES CITED IN THE DESCRIPTION

**Patent documents cited in the description**

- JP 2005501951 T
- JP 2005511868 T
- JP 5194797 A
- JP 2009506163 T
- WO 2008087945 A
- WO 2010150410 A
- WO 2012086780 A
- WO 2012133713 A
- JP 7188335 A
- JP 3674509 B
- JP 2002535339 T
- JP 2004189869 A
- JP 2269705 A
- JP 3021607 A
- JP 2009096907 A

**Non-patent literature cited in the description**

- *Journal of American Chemical Society,* 1996, vol. 118, 2291
- **M. P. MCDANIEL.** Advances in Catalysis. Academic Press Inc, 1985, vol. 33, 47
- **M. P. MCDANIEL.** Handbook of Heterogeneous Catalysts. VCH, 1977, 2400
- **M. B. WELCH et al.** Handbook of Polyolefins: Synthesis and Properties. Marcel Dekker, 1993, 21
- **C. E. MARSDEN.** Preparation of Catalysts. Elsevier Science Publishers, 1991, vol. V, 215
- **C. E. MARSDEN.** *Plastics, Rubber and Composites Processing and Applications,* 1994, vol. 21, 193
- **V. J. RUDDICK et al.** *J. Phys. Chem,* 1996, vol. 100, 11062
- **S. M. AUGUSTINE et al.** *J. Catal.,* 1996, vol. 161, 641
- **T. PULLUKAT et al.** *J. Polym. Sci., Polym. Chem. Ed.,* 1980, vol. 18, 2857
- **M. P. MCDANIEL et al.** *J. Catal.,* 1983, vol. 82, 118
- **M. TERANO et al.** *J. Mol. Catal. A: Chemical,* 2005, vol. 238, 142
- **M. P. MCDANIEL et al.** *J. Phys. Chem,* 1991, vol. 95, 3289
- **T. MONOI et al.** *Polym. J.,* 2003, vol. 35, 608
- **O. ESPELID et al.** *J. Catal.,* 2000, vol. 195, 125
- **KAZUO MATSUURA ; NAOTAKA MIKAMI.** Technical Handbook for Polyethylene. Kogyo Chosakai Publishing Co., Ltd, 2001, 148